# EUROPEAN PATENT APPLICATION

(11) **EP 4 564 902 A1**
(43) Date of publication of application: **04.06.2025**
(21) Application number: 23849146.8
(22) Date of filing: 30.06.2023
(51) Int. Cl.: H04W 28/16

(54) **METHOD, APPARATUS AND SYSTEM FOR MANAGING NETWORK RESOURCES**

(30) Priority: 05.08.2022 CN 202210944407
(71) Applicant: Huawei Technologies Co., Ltd., Shenzhen, Guangdong 518129 (CN)
(72) Inventor: ZHAO, Xian, Shenzhen, Guangdong 518129 (CN); CAO, Longyu, Shenzhen, Guangdong 518129 (CN)
(74) Representative: Maiwald GmbH
(86) International application number: PCT/CN2023/105432
(87) International publication number: WO 2024/027436

(57) **Abstract**

This application belongs to the field of communication technologies, and provides a network resource management method, an apparatus, and a system, to implement a more refined network resource sharing function, thereby satisfying an ever-developing service demand. **In** the method, a network slice management function provision entity can allocate a target network slice instance to a target communication application at a finer granularity, to implement the more refined network resource sharing function, thereby satisfying the ever-developing service demand. For example, the target network slice instance and/or a physical network resource associated with the target network slice instance can be shared between the target communication application and a part of communication applications, to save a network resource. **In** addition, the target network slice instance and/or the physical network resource associated with the target network slice instance cannot be shared between the target communication application and the other part of communication applications, to ensure service security.

## Description

This application claims priority to Chinese Patent Application No. 202210944407.4, filed with the China National Intellectual Property Administration on August 5, 2022 and entitled "NETWORK RESOURCE MANAGEMENT METHOD, APPARATUS, AND SYSTEM", which is incorporated herein by reference in its entirety.

### TECHNICAL FIELD

This application relates to the communication field, and in particular, to a network resource management method, an apparatus, and a system.

### BACKGROUND

Currently, the 3rd generation partnership project (3rd generation partnership project, 3GPP) defines whether a network slice of a service is allowed to be shared with another service. For example, when a network slice management service (network slice management service, NSMS) consumption entity (consumer) sends a slice allocation request to an NSMS provider (provider), the slice allocation request can indicate only whether a network slice instance allocated to the service can be shared.

How to implement a more refined network resource sharing function to satisfy an ever-developing service demand is a technical problem that urgently needs to be resolved.

### SUMMARY

Embodiments of this application provide a network resource management method, an apparatus, and a system, to implement a more refined network resource sharing function, thereby satisfying an ever-developing service demand.

To achieve the foregoing objective, the following technical solutions are used in this application.

According to a first aspect, a network resource management method is provided, and is applied to a network slice management function provision entity. The method includes: receiving first request information from a network slice management function consumption entity; allocating a target network slice instance to a target communication application in response to the first request information; and sending information about the target network slice instance to the network slice management function consumption entity, where the first request information is for requesting the network slice management function provision entity to allocate a network slice instance to the target communication application, and the first request information includes information about the target communication application; and the target network slice instance is capable of being shared between the target communication application and a first communication application set but is incapable of being shared between the target communication application and a second communication application set; and/or a physical network resource associated with the target network slice instance is capable of being shared between the target communication application and a third communication application set but is incapable of being shared between the target communication application and a fourth communication application set.

It can be learned from the method according to the first aspect that the network slice management function provision entity can allocate the target network slice instance to the target communication application at a finer granularity, to implement a more refined network resource sharing function, thereby satisfying an ever-developing service demand. For example, the target network slice instance and/or the physical network resource associated with the target network slice instance can be shared between the target communication application and a part of communication applications, to save a network resource. In addition, the target network slice instance and/or the physical network resource associated with the target network slice instance cannot be shared between the target communication application and the other part of communication applications, to ensure service security.

In a possible design solution, the method according to the first aspect may further include: obtaining the first communication application set or feature information of the first communication application set, and/or the second communication application set or feature information of the second communication application set; and/or obtaining the third communication application set or feature information of the third communication application set, and/or the fourth communication application set or feature information of the fourth communication application set, so that the network slice management function consumption entity can allocate the target network slice instance to the target communication application based on these application sets.

In a possible design solution, the obtaining the first communication application set or feature information of the first communication application set, and/or the second communication application set or feature information of the second communication application set includes: determining the first communication application set or the feature information of the first communication application set, and/or the second communication application set or the feature information of the second communication application set based on the information about the target communication application and a logical resource management policy, where the logical resource management policy is for describing a plurality of communication applications that are capable of sharing a network slice instance with each other and/or a plurality of communication applications that are incapable of sharing the network slice instance with each other; that is, the logical resource management policy may be a common policy applicable to the plurality of communication applications; and in this case, the network slice management function provision entity can allocate the target network slice instance to the target communication application based on the common policy, to improve solution flexibility; and/or the obtaining the third communication application set or feature information of the third communication application set, and/or the fourth communication application set or feature information of the fourth communication application set includes: determining the third communication application set or the feature information of the third communication application set, and/or the fourth communication application set or the feature information of the fourth communication application set based on the information about the target communication application and a physical resource management policy, where the physical resource management policy is for describing a plurality of communication applications that are capable of sharing a physical network resource with each other and/or a plurality of communication applications that are incapable of sharing the physical network resource with each other; that is, the physical resource management policy may be a common policy applicable to the plurality of communication applications; and in this case, the network slice management function provision entity can allocate, to the target communication application based on the common policy, the physical network resource associated with the target network slice instance, to improve solution flexibility.

Optionally, the first request information includes the logical resource management policy and/or the physical resource management policy. That is, the logical resource management policy and/or the physical resource management policy and the information about the target communication application may be carried in a same piece of information, to improve communication efficiency. Alternatively, the method according to the first aspect may further include: receiving a policy configuration request message or a policy update request message from the network slice management function consumption entity, where the policy configuration request message or the policy update request message includes the logical resource management policy and/or the physical resource management policy. That is, the logical resource management policy and/or the physical resource management policy and the information about the target communication application may be carried in different messages, to improve communication flexibility.

Further, the method according to the first aspect may further include: storing the logical resource management policy and/or the physical resource management policy. For example, if the network slice management function provision entity obtains a corresponding policy from the network slice management function consuming entity in advance and stores the corresponding policy, for example, a historical logical resource management policy and/or physical resource management policy, the network slice management function provision entity may further release the historical logical resource management policy and/or physical resource management policy when storing a currently obtained logical resource management policy and/or physical resource management policy, to implement policy update.

Optionally, the logical resource management policy includes a safety class corresponding to the plurality of communication applications that are capable of sharing the network slice instance with each other and/or safety classes corresponding to the plurality of communication applications that are incapable of sharing the network slice instance with each other, so that a logical resource isolation-sharing relationship between the plurality of communication applications can be indicated by one or more safety classes, to improve indication efficiency and reduce communication overheads; and/or the physical resource management policy includes a safety class corresponding to the plurality of communication applications that are capable of sharing the physical network resource with each other and/or safety classes corresponding to the plurality of communication applications that are incapable of sharing the physical network resource with each other, so that a physical resource isolation-sharing relationship between the plurality of communication applications can be indicated by one or more safety classes, to improve indication efficiency and reduce communication overheads.

For example, the logical resource management policy includes a first safety class set list, and the logical resource management policy indicates that any two communication applications corresponding to safety classes in a same safety class set in the first safety class set list are capable of sharing the network slice instance with each other and that any two communication applications corresponding to safety classes in different safety class sets in the first safety class set list are incapable of sharing the network slice instance with each other; and that is, the communication applications corresponding to the different safety classes may share the network slice instance, to improve resource utilization; or may be incapable of sharing the network slice instance, to ensure the service security; and/or the physical resource management policy includes a second safety class set list, and the physical resource management policy indicates that any two communication applications corresponding to safety classes in a same safety class set in the second safety class set list are capable of sharing the physical network resource with each other and that any two communication applications corresponding to safety classes in different safety class sets in the second safety class set list are incapable of sharing the physical network resource with each other; and that is, the communication applications corresponding to the different safety classes may share the physical network resource, to improve resource utilization; or may be incapable of sharing the physical network resource, to ensure the service security.

Optionally, the logical resource management policy includes application identifiers corresponding to the plurality of communication applications that are capable of sharing the network slice instance with each other and/or application identifiers corresponding to the plurality of communication applications that are incapable of sharing the network slice instance with each other; and that is, a logical resource isolation-sharing relationship between each communication application and another communication application may be flexibly indicated by the application identifiers; and/or the physical resource management policy includes application identifiers corresponding to the plurality of communication applications that are capable of sharing the physical network resource with each other and/or application identifiers corresponding to the plurality of communication applications that are incapable of sharing the physical network resource with each other; and that is, a physical resource isolation-sharing relationship between each communication application and another communication application may be flexibly indicated by the application identifiers.

For example, the logical resource management policy includes a first application identifier set list, and the logical resource management policy indicates that two communication applications identified by any two application identifiers that belong to a same application identifier set in the first application identifier set list are capable of sharing the network slice instance with each other and that two communication applications identified by any two application identifiers that belong to different application identifier sets in the first application identifier set list are incapable of sharing the network slice instance with each other; and that is, communication applications identified by application identifiers that belong to the different application identifier sets may share the network slice instance, to improve resource utilization; or may be incapable of sharing the network slice instance, to ensure the service security; and/or the physical resource management policy includes a second application identifier set list, and the physical resource management policy indicates that two communication applications identified by any two application identifiers that belong to a same application identifier set in the second application identifier set list are capable of sharing the physical network resource with each other and that two communication applications identified by any two application identifiers that belong to different application identifier sets in the second application identifier set list are incapable of sharing the physical network resource with each other; and that is, communication applications identified by application identifiers that belong to the different application identifier sets may share the physical network resource, to improve resource utilization; or may be incapable of sharing the physical network resource, to ensure the service security.

Optionally, the obtaining the first communication application set or feature information of the first communication application set, and/or the second communication application set or feature information of the second communication application set includes: obtaining the first communication application set or the feature information of the first communication application set, and/or the second communication application set or the feature information of the second communication application set from the first request information; and/or the obtaining the third communication application set or feature information of the third communication application set, and/or the fourth communication application set or feature information of the fourth communication application set includes: obtaining the third communication application set or the feature information of the third communication application set, and/or the fourth communication application set or the feature information of the fourth communication application set from the first request information. That is, these application sets may be carried by reusing the first request information, to reduce implementation difficulty.

Optionally, the information about the target communication application includes a safety class of the target communication application; the method according to the first aspect may further include: obtaining a safety class of the target communication application based on an application identifier of the target communication application included in the information about the target communication application, so that the network slice management function provision entity can determine the first communication application set and the second communication application set, and/or the third communication application set and the fourth communication application set based on the safety class of the target communication application; or the information about the target communication application includes an application identifier of the target communication application.

Optionally, the feature information of the first communication application set includes a safety class or an application feature of a communication application that is capable of sharing the network slice instance with the target communication application; the feature information of the second communication application set includes a safety class or an application feature of a communication application that is incapable of sharing the network slice instance with the target communication application; the feature information of the third communication application set includes a safety class or an application feature of a communication application that is capable of sharing the physical network resource with the target communication application; and the feature information of the fourth communication application set includes a safety class or an application feature of a communication application that is incapable of sharing the physical network resource with the target communication application. It may be understood that, because the network slice management function provision entity may not be aware of a specific communication application, a resource isolation-sharing relationship between the target communication application and a plurality of communication applications may be represented by using safety classes or application features, to ensure that the network slice management function provision entity can identify the target communication application.

**In** a possible design solution, the allocating a target network slice instance to a target communication application includes: using an existing network slice instance as the target network slice instance in response to determining that there is an existing network slice instance, to improve the resource utilization; or using a newly created network slice instance as the target network slice instance in response to determining that there is no existing network slice instance, to ensure the service security, where the existing network slice instance is a network slice instance that has been allocated to the communication application in the first communication application set but has not been allocated to the communication application in the second communication application set.

Optionally, the allocating a target network slice instance to a target communication application includes: sending the information about the target communication application and the physical resource management policy to a network slice subnet management function provision entity. **In** this way, the network slice subnet management function provision entity can determine, based on the information about the target communication application and the physical resource management policy, physical resource isolation-sharing demand information of the target communication application, for example, the third communication application set that can share the physical network resource associated with the target network slice instance with the target communication application and the fourth communication application set that cannot share the physical network resource associated with the target network slice instance with the target communication application, to allocate, to the target communication application, a target network slice subnet instance that satisfies the physical resource isolation-sharing demand information. Alternatively, the third communication application set and/or the fourth communication application set may be sent to a network slice subnet management function provision entity. This is not limited.

Further, the method according to the first aspect may further include: receiving physical isolation implementation information from the network slice management function consumption entity, and sending the physical isolation implementation information to the network slice subnet management function provision entity, where the physical isolation implementation information indicates at least one of the following: implementing a network slice subnet instance by using a physical network resource in different time periods or implementing the network slice subnet instance by using different physical network resources, to ensure that the network slice subnet management function provision entity can implement the network slice subnet instance in a manner specified by a communication application.

In a possible design solution, the receiving first request information from a network slice management function consumption entity includes: receiving a network slice instance allocation request message from the network slice management function consumption entity; and the sending information about the target network slice instance to the network slice management function consumption entity includes: sending a network slice allocation response message to the network slice management function consumption entity, where the network slice instance allocation request message includes the first request information, and the network slice allocation response message includes the information about the target network slice instance. That is, the target network slice instance may be allocated by reusing a network slice allocation procedure. Alternatively, the receiving first request information from a network slice management function consumption entity includes: receiving a network slice instance update request message from the network slice management function consumption entity; and the sending information about the target network slice instance to the network slice management function consumption entity includes: sending a network slice update response message to the network slice management function consumption entity, where the network slice instance update request message includes the first request information, and the network slice update response message includes the information about the target network slice instance. That is, the target network slice instance may be allocated by reusing a network slice update procedure.

In a possible design solution, the information about the target network slice instance is an identifier of the target network slice instance, to indicate the target network slice instance; or may be any other possible information. This is not limited.

In a possible design solution, the network slice management function consumption entity is any one of the following: an exposure governance management function EGMF, a common application programming interface framework CAPIF, or a third-party server, to be applicable to more service scenarios.

According to a second aspect, a network resource management method is provided, and is applied to a network slice management function consumption entity. The method includes: sending first request information to a network slice management function provision entity, to receive information about a target network slice instance from the network slice management function provision entity, where the first request information is for requesting the network slice management function provision entity to allocate a network slice instance to a target communication application, and the first request information includes information about the target communication application; and the target network slice instance is capable of being shared between the target communication application and a first communication application set but is incapable of being shared between the target communication application and a second communication application set; and/or a physical network resource associated with the target network slice instance is capable of being shared between the target communication application and a third communication application set but is incapable of being shared between the target communication application and a fourth communication application set.

**In** a possible design solution, the first request information further includes the first communication application set or feature information of the first communication application set, and/or the second communication application set or feature information of the second communication application set; and/or the first request information further includes the third communication application set or feature information of the third communication application set, and/or the fourth communication application set or feature information of the fourth communication application set.

**In** a possible design solution, the first request information further includes a logical resource management policy and/or a physical resource management policy; or the method according to the second aspect may further include: sending a policy configuration request message or a policy update request message to the network slice management function provision entity, where the policy configuration request message or the policy update request message includes a logical resource management policy and/or a physical resource management policy, where the logical resource management policy is for describing a plurality of communication applications that are capable of sharing a network slice instance with each other and/or a plurality of communication applications that are incapable of sharing the network slice instance with each other, and the physical resource management policy is for describing a plurality of communication applications that are capable of sharing a physical network resource with each other and/or a plurality of communication applications that are incapable of sharing the physical network resource with each other.

Optionally, the logical resource management policy includes a safety class corresponding to the plurality of communication applications that are capable of sharing the network slice instance with each other and/or safety classes corresponding to the plurality of communication applications that are incapable of sharing the network slice instance with each other; and/or the physical resource management policy includes a safety class corresponding to the plurality of communication applications that are capable of sharing the physical network resource with each other and/or safety classes corresponding to the plurality of communication applications that are incapable of sharing the physical network resource with each other.

For example, the logical resource management policy includes a first safety class set list, and the logical resource management policy indicates that any two communication applications corresponding to safety classes in a same safety class set in the first safety class set list are capable of sharing the network slice instance with each other and that any two communication applications corresponding to safety classes in different safety class sets in the first safety class set list are incapable of sharing the network slice instance with each other; and/or the physical resource management policy includes a second safety class set list, and the physical resource management policy indicates that any two communication applications corresponding to safety classes in a same safety class set in the second safety class set list are capable of sharing the physical network resource with each other and that any two communication applications corresponding to safety classes in different safety class sets in the second safety class set list are incapable of sharing the physical network resource with each other.

Optionally, the logical resource management policy includes application identifiers corresponding to the plurality of communication applications that are capable of sharing the network slice instance with each other and/or application identifiers corresponding to the plurality of communication applications that are incapable of sharing the network slice instance with each other; and/or the physical resource management policy includes application identifiers corresponding to the plurality of communication applications that are capable of sharing the physical network resource with each other and/or application identifiers corresponding to the plurality of communication applications that are incapable of sharing the physical network resource with each other.

For example, the logical resource management policy includes a first application identifier set list, and the logical resource management policy indicates that two communication applications identified by any two application identifiers that belong to a same application identifier set in the first application identifier set list are capable of sharing the network slice instance with each other and that two communication applications identified by any two application identifiers that belong to different application identifier sets in the first application identifier set list are incapable of sharing the physical network resource with each other; and/or the physical resource management policy includes a second application identifier set list, and the physical resource management policy indicates that two communication applications identified by any two application identifiers that belong to a same application identifier set in the second application identifier set list are capable of sharing the network slice instance with each other and that two communication applications identified by any two application identifiers that belong to different application identifier sets in the second application identifier set list are incapable of sharing the physical network resource with each other.

Further, the information about the target communication application includes a safety class of the target communication application; the information about the target communication application includes an application identifier of the target communication application, and the application identifier of the target communication application may be for determining a safety class of the target communication application; or the information about the target communication application includes an application identifier of the target communication application.

Optionally, the feature information of the first communication application set includes a safety class or an application feature of a communication application that is capable of sharing the network slice instance with the target communication application; the feature information of the second communication application set includes a safety class or an application feature of a communication application that is incapable of sharing the network slice instance with the target communication application; the feature information of the third communication application set includes a safety class or an application feature of a communication application that is capable of sharing the physical network resource with the target communication application; and the feature information of the fourth communication application set includes a safety class or an application feature of a communication application that is incapable of sharing the physical network resource with the target communication application.

In a possible design solution, the method according to the second aspect may further include: sending physical isolation implementation information to the network slice management function provision entity, where the physical isolation implementation information indicates at least one of the following: implementing a network slice subnet instance by using a physical network resource in different time periods or implementing the network slice subnet instance by using different physical network resources.

In a possible design solution, the sending first request information to a network slice management function provision entity includes: sending a network slice instance allocation request message to the network slice management function provision entity; and the receiving information about a target network slice instance from the network slice management function provision entity includes: receiving a network slice allocation response message from the network slice management function provision entity, where the network slice instance allocation request message includes the first request information, and the network slice allocation response message includes the information about the target network slice instance; or the sending first request information to a network slice management function provision entity includes: sending a network slice instance update request message to the network slice management function provision entity; and the receiving information about a target network slice instance from the network slice management function provision entity includes: receiving a network slice update response message from the network slice management function provision entity, where the network slice instance update request message includes the first request information, and the network slice update response message includes the information about the target network slice instance.

In a possible design solution, information about a target network slice subnet instance is an identifier of the target network slice subnet instance.

In a possible design solution, the network slice management function consumption entity is any one of the following: an exposure governance management function EGMF, a common application programming interface framework CAPIF, or a third-party server.

In addition, for technical effects of the method according to the second aspect, refer to the technical effects of the method according to the first aspect. Details are not described herein again.

According to a third aspect, a network resource management method is provided, and is applied to a network slice subnet management function provision entity. The method includes: receiving second request information from a network slice management function provision entity; allocating a target network slice subnet instance to a target communication application in response to the second request information; and sending information about the target network slice subnet instance to the network slice management function provision entity, where the second request information includes information about the target communication application, and the second request information is for requesting the network slice subnet management function provision entity to allocate a network slice subnet instance to the target communication application; and a physical network resource associated with the target network slice subnet instance is capable of being shared between the target communication application and a third communication application set but is incapable of being shared between the target communication application and a fourth communication application set.

In a possible design solution, the method according to the third aspect includes: obtaining the third communication application set or feature information of the third communication application set, and/or the fourth communication application set or feature information of the fourth communication application set.

In a possible design solution, the obtaining the third communication application set or feature information of the third communication application set, and/or the fourth communication application set or feature information of the fourth communication application set includes: determining the third communication application set or the feature information of the third communication application set, and/or the fourth communication application set or the feature information of the fourth communication application set based on the information about the target communication application and a physical resource management policy, where the physical resource management policy is for describing a plurality of communication applications that are capable of sharing a physical network resource with each other and/or a plurality of communication applications that are incapable of sharing the physical network resource with each other.

Optionally, the second request information includes the physical resource management policy. That is, the physical resource management policy and the information about the target communication application may be carried in a same piece of information, to improve communication efficiency.

Optionally, the physical resource management policy includes a safety class corresponding to the plurality of communication applications that are capable of sharing the physical network resource with each other and/or safety classes corresponding to the plurality of communication applications that are incapable of sharing the physical network resource with each other.

For example, the physical resource management policy includes a second safety class set list, and the physical resource management policy indicates that any two communication applications corresponding to safety classes in a same safety class set in the second safety class set list are capable of sharing the physical network resource with each other and that any two communication applications corresponding to safety classes in different safety class sets in the second safety class set list are incapable of sharing the physical network resource with each other.

Optionally, the physical resource management policy includes application identifiers corresponding to the plurality of communication applications that are capable of sharing the physical network resource with each other and/or application identifiers corresponding to the plurality of communication applications that are incapable of sharing the physical network resource with each other.

For example, the physical resource management policy includes a second application identifier set list, and the physical resource management policy indicates that two communication applications identified by any two application identifiers that belong to a same application identifier set in the second application identifier set list are capable of sharing a network slice instance with each other and that two communication applications identified by any two application identifiers that belong to different application identifier sets in the second application identifier set list are incapable of sharing the network slice instance with each other.

Optionally, the obtaining the third communication application set or feature information of the third communication application set, and/or the fourth communication application set or feature information of the fourth communication application set includes: obtaining the third communication application set or the feature information of the third communication application set, and/or the fourth communication application set or the feature information of the fourth communication application set from the second request information.

Optionally, the information about the target communication application includes a safety class of the target communication application; the method according to the third aspect may further include: obtaining a safety class of the target communication application based on an application identifier of the target communication application included in the information about the target communication application; or the information about the target communication application includes an application identifier of the target communication application.

Optionally, the feature information of the third communication application set includes a safety class or an application feature of a communication application that is capable of sharing the physical network resource with the target communication application; and the feature information of the fourth communication application set includes a safety class or an application feature of a communication application that is incapable of sharing the physical network resource with the target communication application.

**In** a possible design solution, the allocating a target network slice instance to the target communication application includes: using an existing network slice subnet instance as the target network slice subnet instance in response to determining that there is an existing network slice subnet instance, to improve resource utilization; or using a newly created network slice subnet instance as the target network slice subnet instance in response to determining that there is no existing network slice instance, to ensure service security, where a physical network resource for implementing the existing network slice subnet instance is a physical network resource that has been allocated to the communication application in the third communication application set but has not been allocated to the communication application in the fourth communication application set.

Optionally, the method according to the third aspect may further include: receiving physical isolation implementation information from the network slice management function provision entity, where the physical isolation implementation information indicates at least one of the following: implementing a network slice subnet instance by using a physical network resource in different time periods or implementing the network slice subnet instance by using different physical network resources, to ensure that the network slice subnet management function provision entity can implement the network slice subnet instance in a manner specified by a communication application. For example, the allocating a target network slice subnet instance to a target communication application in response to the second request information includes: allocating the target network slice subnet instance to the target communication application in response to the second request information and the physical isolation implementation information.

**In** a possible design solution, the receiving second request information from a network slice management function provision entity includes: receiving a network slice subnet allocation request message from the network slice management function provision entity; and the sending information about the target network slice subnet instance to the network slice management function provision entity includes: sending a network slice subnet allocation response message to the network slice management function provision entity, where the network slice subnet allocation request message includes the second request information, and the network slice subnet allocation response message includes the information about the target network slice subnet instance. That is, the target network slice subnet instance may be allocated by reusing a network slice subnet allocation procedure. Alternatively, the receiving second request information from a network slice management function provision entity includes: receiving a network slice subnet update request message from the network slice management function provision entity; and the sending information about the target network slice subnet instance to the network slice management function provision entity includes: sending a network slice subnet update response message to the network slice management function provision entity, where the network slice subnet update request message includes the second request information, and the network slice subnet update response message includes the information about the target network slice subnet instance. That is, the target network slice subnet instance may be allocated by reusing a network slice subnet update procedure.

In a possible design solution, the information about the target network slice subnet instance is an identifier of the target network slice subnet instance, to indicate the target network slice subnet instance; or may be any other possible information. This is not limited.

In addition, for other technical effects of the method according to the third aspect, refer to the technical effects of the method according to the first aspect. Details are not described herein again.

According to a fourth aspect, a network resource management method is provided, and is applied to a network slice management function provision entity and a network slice subnet management function provision entity. The method includes: The network slice management function provision entity receives first request information from a network slice management function consumption entity; allocates a target network slice instance to a target communication application in response to the first request information; and sends information about the target network slice instance to the network slice management function consumption entity, where the first request information is for requesting the network slice management function provision entity to allocate a network slice instance to the target communication application, and the first request information includes information about the target communication application; and the target network slice instance is capable of being shared between the target communication application and a first communication application set but is incapable of being shared between the target communication application and a second communication application set; and/or a physical network resource associated with the target network slice instance is capable of being shared between the target communication application and a third communication application set but is incapable of being shared between the target communication application and a fourth communication application set.

In a possible design solution, the method according to the fourth aspect may further include: The network slice management function provision entity obtains the first communication application set or feature information of the first communication application set, and/or the second communication application set or feature information of the second communication application set; and/or the network slice management function provision entity obtains the third communication application set or feature information of the third communication application set, and/or the fourth communication application set or feature information of the fourth communication application set.

In a possible design solution, that the network slice management function provision entity obtains the first communication application set or feature information of the first communication application set, and/or the second communication application set or feature information of the second communication application set includes: determining the first communication application set or the feature information of the first communication application set, and/or the second communication application set or the feature information of the second communication application set based on the information about the target communication application and a logical resource management policy, where the logical resource management policy is for describing a plurality of communication applications that are capable of sharing a network slice instance with each other and/or a plurality of communication applications that are incapable of sharing the network slice instance with each other; and/or that the network slice management function provision entity obtains the third communication application set or feature information of the third communication application set, and/or the fourth communication application set or feature information of the fourth communication application set includes: The network slice management function provision entity determines the third communication application set or the feature information of the third communication application set, and/or the fourth communication application set or the feature information of the fourth communication application set based on the information about the target communication application and a physical resource management policy, where the physical resource management policy is for describing a plurality of communication applications that are capable of sharing a physical network resource with each other and/or a plurality of communication applications that are incapable of sharing the physical network resource with each other.

Optionally, the first request information includes the logical resource management policy and/or the physical resource management policy; or the method according to the fourth aspect may further include: The network slice management function provision entity receives a policy configuration request message or a policy update request message from the network slice management function consumption entity, where the policy configuration request message or the policy update request message includes the logical resource management policy and/or the physical resource management policy.

Further, the method according to the fourth aspect may further include: The network slice management function provision entity stores the logical resource management policy and/or the physical resource management policy.

Optionally, the logical resource management policy includes a safety class corresponding to the plurality of communication applications that are capable of sharing the network slice instance with each other and/or safety classes corresponding to the plurality of communication applications that are incapable of sharing the network slice instance with each other; and/or the physical resource management policy includes a safety class corresponding to the plurality of communication applications that are capable of sharing the physical network resource with each other and/or safety classes corresponding to the plurality of communication applications that are incapable of sharing the physical network resource with each other.

For example, the logical resource management policy includes a first safety class set list, and the logical resource management policy indicates that any two communication applications corresponding to safety classes in a same safety class set in the first safety class set list are capable of sharing the network slice instance with each other and that any two communication applications corresponding to safety classes in different safety class sets in the first safety class set list are incapable of sharing the network slice instance with each other; and/or the physical resource management policy includes a second safety class set list, and the physical resource management policy indicates that any two communication applications corresponding to safety classes in a same safety class set in the second safety class set list are capable of sharing the physical network resource with each other and that any two communication applications corresponding to safety classes in different safety class sets in the second safety class set list are incapable of sharing the physical network resource with each other.

Optionally, the logical resource management policy includes application identifiers corresponding to the plurality of communication applications that are capable of sharing the network slice instance with each other and/or application identifiers corresponding to the plurality of communication applications that are incapable of sharing the network slice instance with each other; and/or the physical resource management policy includes application identifiers corresponding to the plurality of communication applications that are capable of sharing the physical network resource with each other and/or application identifiers corresponding to the plurality of communication applications that are incapable of sharing the physical network resource with each other.

For example, the logical resource management policy includes a first application identifier set list, and the logical resource management policy indicates that two communication applications identified by any two application identifiers that belong to a same application identifier set in the first application identifier set list are capable of sharing the network slice instance with each other and that two communication applications identified by any two application identifiers that belong to different application identifier sets in the first application identifier set list are incapable of sharing the network slice instance with each other; and/or the physical resource management policy includes a second application identifier set list, and the physical resource management policy indicates that two communication applications identified by any two application identifiers that belong to a same application identifier set in the second application identifier set list are capable of sharing the physical network resource with each other and that two communication applications identified by any two application identifiers that belong to different application identifier sets in the second application identifier set list are incapable of sharing the physical network resource with each other; and

Optionally, that the network slice management function provision entity obtains the first communication application set or feature information of the first communication application set, and/or the second communication application set or feature information of the second communication application set includes: The network slice management function provision entity obtains the first communication application set or the feature information of the first communication application set, and/or the second communication application set or the feature information of the second communication application set from the first request information; and/or that the network slice management function provision entity obtains the third communication application set or feature information of the third communication application set, and/or the fourth communication application set or feature information of the fourth communication application set includes: The network slice management function provision entity obtains the third communication application set or the feature information of the third communication application set, and/or the fourth communication application set or the feature information of the fourth communication application set from the first request information.

Optionally, the information about the target communication application includes a safety class of the target communication application; or the method according to the fourth aspect may further include: obtaining a safety class of the target communication application based on an application identifier of the target communication application included in the information about the target communication application. The information about the target communication application includes an application identifier of the target communication application.

Optionally, the feature information of the first communication application set includes a safety class or an application feature of a communication application that is capable of sharing the network slice instance with the target communication application; the feature information of the second communication application set includes a safety class or an application feature of a communication application that is incapable of sharing the network slice instance with the target communication application; the feature information of the third communication application set includes a safety class or an application feature of a communication application that is capable of sharing the physical network resource with the target communication application; and the feature information of the fourth communication application set includes a safety class or an application feature of a communication application that is incapable of sharing the physical network resource with the target communication application.

In a possible design solution, that the network slice management function provision entity allocates a target network slice instance to a target communication application includes: The network slice management function provision entity uses an existing network slice instance as the target network slice instance in response to determining that there is an existing network slice instance; or the network slice management function provision entity uses a newly created network slice instance as the target network slice instance in response to determining that there is no existing network slice instance, where the existing network slice instance is a network slice instance that has been allocated to a communication application in the first communication application set but has not been allocated to a communication application in the second communication application set.

Optionally, that the network slice management function provision entity allocates a target network slice instance to a target communication application further includes: The network slice management function provision entity sends second request information to the network slice subnet management function provision entity; and the network slice subnet management function provision entity allocates a target network slice subnet instance to the target communication application in response to the second request information; and sends information about the target network slice subnet instance to the network slice management function provision entity, where the second request information includes the information about the target communication application, and the second request information is for requesting the network slice subnet management function provision entity to allocate a network slice subnet instance to the target communication application; and a physical network resource associated with the target network slice subnet instance is capable of being shared between the target communication application and the third communication application set but is incapable of being shared between the target communication application and the fourth communication application set.

Further, the method according to the fourth aspect further includes: The network slice subnet management function provision entity obtains the third communication application set or feature information of the third communication application set, and/or the fourth communication application set or feature information of the fourth communication application set.

Further, that the network slice subnet management function provision entity obtains the third communication application set or feature information of the third communication application set, and/or the fourth communication application set or feature information of the fourth communication application set includes: The network slice subnet management function provision entity determines the third communication application set or the feature information of the third communication application set, and/or the fourth communication application set or the feature information of the fourth communication application set based on the information about the target communication application and the physical resource management policy, where the physical resource management policy is for describing the plurality of communication applications that are capable of sharing the physical network resource with each other and/or the plurality of communication applications that are incapable of sharing the physical network resource with each other.

Further, the second request information includes the physical resource management policy.

Further, that the network slice subnet management function provision entity obtains the third communication application set or feature information of the third communication application set, and/or the fourth communication application set or feature information of the fourth communication application set includes: The network slice subnet management function provision entity obtains the third communication application set or the feature information of the third communication application set, and/or the fourth communication application set or the feature information of the fourth communication application set from the second request information.

Further, the information about the target communication application includes the safety class of the target communication application; the method according to the fourth aspect may further include: The network slice subnet management function provision entity obtains the safety class of the target communication application based on the application identifier of the target communication application included in the information about the target communication application; or the information about the target communication application includes the application identifier of the target communication application.

Further, that the network slice subnet management function provision entity allocates a target network slice subnet instance to the target communication application includes: The network slice subnet management function provision entity uses an existing network slice subnet instance as the target network slice subnet instance in response to determining that there is an existing network slice subnet instance; or the network slice subnet management function provision entity uses a newly created network slice subnet instance as the target network slice subnet instance in response to determining that there is no existing network slice instance, where a physical network resource for implementing the existing network slice subnet instance is a physical network resource that has been allocated to the communication application in the third communication application set but has not been allocated to the communication application in the fourth communication application set.

Further, the method according to the fourth aspect may further include: The network slice management function provision entity sends physical isolation implementation information to the network slice subnet management function provision entity, where the physical isolation implementation information indicates at least one of the following: implementing a network slice subnet instance by using a physical network resource in different time periods or implementing the network slice subnet instance by using different physical network resources. On this basis, that the network slice subnet management function provision entity allocates a target network slice subnet instance to the target communication application in response to the second request information includes: The network slice subnet management function provision entity allocates the target network slice subnet instance to the target communication application in response to the second request information and the physical isolation implementation information.

Further, that the network slice management function provision entity sends second request information to the network slice subnet management function provision entity includes: The network slice management function provision entity sends a network slice subnet allocation request message to the network slice subnet management function provision entity; and that the network slice subnet management function provision entity sends information about the target network slice subnet instance to the network slice management function provision entity includes: The network slice subnet management function provision entity sends a network slice subnet allocation response message to the network slice management function provision entity, where the network slice subnet allocation request message includes the second request information, and the network slice subnet allocation response message includes the information about the target network slice subnet instance; or that the network slice management function provision entity sends second request information to the network slice subnet management function provision entity includes: The network slice management function provision entity sends a network slice subnet update request message to the network slice subnet management function provision entity; and that the network slice subnet management function provision entity sends information about the target network slice subnet instance to the network slice management function provision entity includes: The network slice subnet management function provision entity sends a network slice subnet update response message to the network slice management function provision entity, where the network slice subnet update request message includes the second request information, and the network slice subnet update response message includes the information about the target network slice subnet instance.

Further, the information about the target network slice instance is an identifier of the target network slice instance.

In a possible design solution, the information about the target network slice subnet instance is an identifier of the target network slice subnet instance.

In a possible design solution, the network slice management function consumption entity is any one of the following: an exposure governance management function EGMF, a common application programming interface framework CAPIF, or a third-party server, to be applicable to more service scenarios.

In addition, for technical effects of the method according to the fourth aspect, refer to the technical effects of the methods according to the first aspect and the third aspect. Details are not described herein again.

According to a fifth aspect, a communication apparatus is provided. The communication apparatus includes modules configured to perform the method according to the first aspect, for example, a transceiver module and a processing module. For example, the transceiver module is configured to receive first request information from a network slice management function consumption entity; and the processing module is configured to allocate a target network slice instance to a target communication application in response to the first request information, and control the transceiver module to send information about the target network slice instance to the network slice management function consumption entity, where the first request information is for requesting the communication apparatus to allocate a network slice instance to the target communication application, and the first request information includes information about the target communication application; and the target network slice instance is capable of being shared between the target communication application and a first communication application set but is incapable of being shared between the target communication application and a second communication application set; and/or a physical network resource associated with the target network slice instance is capable of being shared between the target communication application and a third communication application set but is incapable of being shared between the target communication application and a fourth communication application set.

Optionally, the transceiver module may include a sending module and a receiving module. The sending module is configured to implement a sending function of the communication apparatus according to the fifth aspect, and the receiving module is configured to implement a receiving function of the communication apparatus according to the fifth aspect.

Optionally, the communication apparatus according to the fifth aspect may further include a storage module. The storage module stores a program or instructions. When the processing module executes the program or the instructions, the communication apparatus is enabled to perform the method according to the first aspect.

It may be understood that the communication apparatus according to the fifth aspect may be a network device, for example, a network slice management function provision entity, may be a chip (system) or another part or component that may be disposed in the network device, or may be an apparatus including the network device. This is not limited in this application.

In addition, for technical effects of the communication apparatus according to the fifth aspect, refer to the technical effects of the method according to the first aspect. Details are not described herein again.

According to a sixth aspect, a communication apparatus is provided. The communication apparatus includes modules configured to perform the method according to the second aspect, for example, a transceiver module and a processing module. The processing module is configured to control the transceiver module to send first request information to a network slice management function provision entity; and the transceiver module is configured to receive information about a target network slice instance from the network slice management function provision entity, where the first request information is for requesting the network slice management function provision entity to allocate a network slice instance to a target communication application, and the first request information includes information about the target communication application; and the target network slice instance is capable of being shared between the target communication application and a first communication application set but is incapable of being shared between the target communication application and a second communication application set; and/or a physical network resource associated with the target network slice instance is capable of being shared between the target communication application and a third communication application set but is incapable of being shared between the target communication application and a fourth communication application set.

Optionally, the transceiver module may include a sending module and a receiving module. The sending module is configured to implement a sending function of the communication apparatus according to the sixth aspect, and the receiving module is configured to implement a receiving function of the communication apparatus according to the sixth aspect.

Optionally, the communication apparatus according to the sixth aspect may further include a storage module. The storage module stores a program or instructions. When the processing module executes the program or the instructions, the communication apparatus is enabled to perform the method according to the second aspect.

It may be understood that the communication apparatus according to the sixth aspect may be a network device, for example, a network slice management function consumption entity, may be a chip (system) or another part or component that may be disposed in the network device, or may be an apparatus including the network device. This is not limited in this application.

In addition, for technical effects of the communication apparatus according to the sixth aspect, refer to the technical effects of the method according to the second aspect. Details are not described herein again.

According to a seventh aspect, a communication apparatus is provided. The communication apparatus includes modules configured to perform the method according to the third aspect, for example, a transceiver module and a processing module. The transceiver module is configured to receive second request information from a network slice management function provision entity; and the processing module is configured to allocate a target network slice subnet instance to a target communication application in response to the second request information, and control the transceiver module to send information about the target network slice subnet instance to the network slice management function provision entity, where the second request information includes information about the target communication application, and the second request information is for requesting the communication apparatus to allocate a network slice subnet instance to the target communication application; and a physical network resource associated with the target network slice subnet instance is capable of being shared between the target communication application and a third communication application set but is incapable of being shared between the target communication application and a fourth communication application set.

Optionally, the transceiver module may include a sending module and a receiving module. The sending module is configured to implement a sending function of the communication apparatus according to the seventh aspect, and the receiving module is configured to implement a receiving function of the communication apparatus according to the seventh aspect.

Optionally, the communication apparatus according to the seventh aspect may further include a storage module. The storage module stores a program or instructions. When the processing module executes the program or the instructions, the communication apparatus is enabled to perform the method according to the third aspect.

It may be understood that the communication apparatus according to the seventh aspect may be a network device, for example, a network slice subnet management function provision entity, may be a chip (system) or another part or component that may be disposed in the network device, or may be an apparatus including the network device. This is not limited in this application.

In addition, for technical effects of the communication apparatus according to the seventh aspect, refer to the technical effects of the method according to the third aspect. Details are not described herein again.

According to an eighth aspect, a communication apparatus is provided. The communication apparatus includes a processor. The processor is configured to perform the method according to any one of the possible implementations of the first aspect to the third aspect.

In a possible design solution, the communication apparatus according to the eighth aspect may further include a transceiver. The transceiver may be a transceiver circuit or an interface circuit. The transceiver may be used by the communication apparatus according to the eighth aspect to communicate with another communication apparatus.

In a possible design solution, the communication apparatus according to the eighth aspect may further include a memory. The memory and the processor may be integrated together, or may be disposed separately. The memory may be configured to store a computer program and/or data in the method according to any one of the first aspect to the third aspect.

In this embodiment of this application, the communication apparatus according to the eighth aspect may be the network device according to any one of the first aspect to the third aspect, the chip (system) or another part or component that may be disposed in the network device, or the apparatus including the network device.

In addition, for technical effects of the communication apparatus according to the eighth aspect, refer to the technical effects of the method according to any one of the implementations of the first aspect to the third aspect. Details are not described herein again.

According to a ninth aspect, a communication apparatus is provided. The communication apparatus includes a processor. The processor is coupled to a memory. The processor is configured to execute a computer program stored in the memory, so that the communication apparatus performs the method according to any one of the possible implementations of the first aspect to the third aspect.

In a possible design solution, the communication apparatus according to the ninth aspect may further include a transceiver. The transceiver may be a transceiver circuit or an interface circuit. The transceiver may be used by the communication apparatus according to the ninth aspect to communicate with another communication apparatus.

In this embodiment of this application, the communication apparatus according to the ninth aspect may be the network device according to any one of the first aspect to the third aspect, the chip (system) or another part or component that may be disposed in the network device, or the apparatus including the network device.

In addition, for technical effects of the communication apparatus according to the ninth aspect, refer to the technical effects of the method according to any one of the implementations of the first aspect to the third aspect. Details are not described herein again.

According to a tenth aspect, a communication apparatus is provided, and includes a processor and a memory. The memory is configured to store a computer program. When the processor executes the computer program, the communication apparatus is enabled to perform the method according to any one of the implementations of the first aspect to the third aspect.

In a possible design solution, the communication apparatus according to the tenth aspect may further include a transceiver. The transceiver may be a transceiver circuit or an interface circuit. The transceiver may be used by the communication apparatus according to the tenth aspect to communicate with another communication apparatus.

In this embodiment of this application, the communication apparatus according to the tenth aspect may be the network device according to any one of the first aspect to the third aspect, the chip (system) or another part or component that may be disposed in the network device, or the apparatus including the network device.

In addition, for technical effects of the communication apparatus according to the tenth aspect, refer to the technical effects of the method according to any one of the implementations of the first aspect to the third aspect. Details are not described herein again.

According to an eleventh aspect, a communication apparatus is provided, and includes a processor. The processor is configured to: be coupled to a memory, and perform, based on a computer program in the memory after reading the computer program, the method according to any one of the implementations of the first aspect to the third aspect.

In a possible design solution, the communication apparatus according to the eleventh aspect may further include a transceiver. The transceiver may be a transceiver circuit or an interface circuit. The transceiver may be used by the communication apparatus according to the eleventh aspect to communicate with another communication apparatus.

In this embodiment of this application, the communication apparatus according to the eleventh aspect may be the network device according to any one of the first aspect to the third aspect, the chip (system) or another part or component that may be disposed in the network device, or the apparatus including the network device.

In addition, for technical effects of the communication apparatus according to the eleventh aspect, refer to the technical effects of the method according to any one of the implementations of the first aspect to the third aspect. Details are not described herein again.

According to a twelfth aspect, a communication system is provided. The communication system includes a network slice management function provision entity and a network slice subnet management function provision entity. The network slice management function provision entity and the network slice subnet management function provision entity are configured to perform the method according to the fourth aspect.

According to a thirteenth aspect, a computer-readable storage medium is provided, and includes a computer program or instructions. When the computer program or the instructions are run on a computer, the computer is enabled to perform the method according to any one of the possible implementations of the first aspect to the third aspect.

According to a fourteenth aspect, a computer program product is provided, and includes a computer program or instructions. When the computer program or the instructions are run on a computer, the computer is enabled to perform the method according to any one of the possible implementations of the first aspect to the third aspect.

### BRIEF DESCRIPTION OF DRAWINGS

FIG. 1 is a diagram of an architecture of a 5G system;
FIG. 2 is a diagram of an architecture of an SBMA;
FIG. 3 is a diagram of a logical connection architecture between MnFs;
FIG. 4 is a diagram of an EGMF application scenario;
FIG. 5 is a diagram of an architecture of a CAPIF;
FIG. 6 is a diagram of a network slice instance allocation procedure;
FIG. 7 is a diagram of a scenario of electric power services;
FIG. 8 is a diagram 1 of an architecture of a communication system according to an embodiment of this application;
FIG. 9 is a diagram 2 of an architecture of a communication system according to an embodiment of this application;
FIG. 10A and FIG. 10B are a schematic flowchart 1 of a network resource management method according to an embodiment of this application;
FIG. 11A, FIG. 11B, and FIG. 11C are a schematic flowchart 2 of a network resource management method according to an embodiment of this application;
FIG. 12 is a schematic flowchart 3 of a network resource management method according to an embodiment of this application;
FIG. 13A and FIG. 13B are a schematic flowchart 4 of a network resource management method according to an embodiment of this application;
FIG. 14A, FIG. 14B, and FIG. 14C are a schematic flowchart 5 of a network resource management method according to an embodiment of this application;
FIG. 15 is a schematic flowchart 6 of a network resource management method according to an embodiment of this application;
FIG. 16 is a schematic flowchart 7 of a network resource management method according to an embodiment of this application;
FIG. 17 is a diagram 1 of a structure of a communication apparatus according to an embodiment of this application; and
FIG. 18 is a diagram 2 of a structure of a communication apparatus according to an embodiment of this application.

### DESCRIPTION OF EMBODIMENTS

For ease of understanding, the following first describes technical terms in embodiments of this application.

### 1. 5th generation (5th generation, 5G) mobile communication system

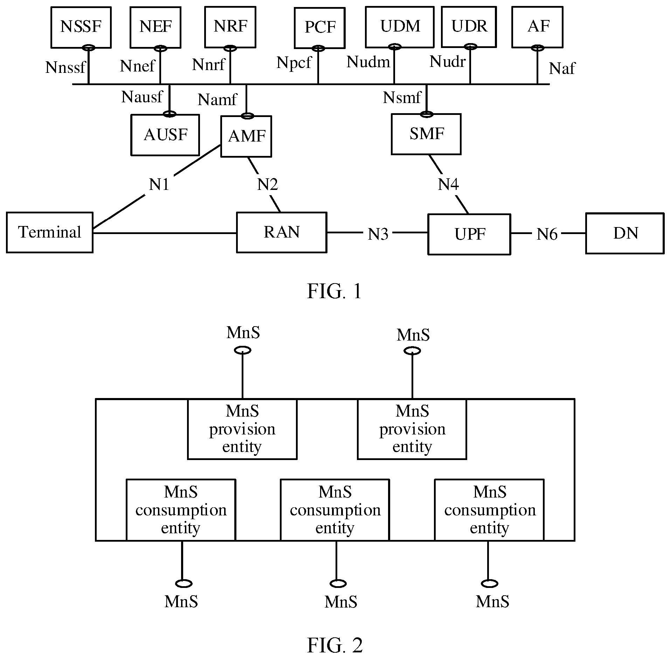

FIG. 1 is a diagram of an architecture of a 5G system. As shown in FIG. 1, the 5G system includes an access network (access network, AN) and a core network (core network, CN), and may further include a terminal.

The terminal may be a terminal having a transceiver function, or may be a chip or a chip system that may be disposed in the terminal. The terminal may also be referred to as user equipment (user equipment, UE), an access terminal, a subscriber unit (subscriber unit), a subscriber station, a mobile station (mobile station, MS), a remote station, a remote terminal, a mobile device, a user terminal, a terminal, a wireless communication device, a user agent, or a user apparatus. The terminal in embodiments of this application may be a mobile phone (mobile phone), a cellular phone (cellular phone), a smartphone (smartphone), a tablet computer (Pad), a wireless data card, a personal digital assistant (personal digital assistant, PDA), a wireless modem (modem), a handheld device (handset), a laptop computer (laptop computer), a machine type communication (machine type communication, MTC) terminal, a computer having a wireless transceiver function, a virtual reality (virtual reality, VR) terminal, an augmented reality (augmented reality, AR) terminal, a wireless terminal in industrial control (industrial control), a wireless terminal in self driving (self driving), a wireless terminal in telemedicine (telemedicine), a wireless terminal in a smart grid (smart grid), a wireless terminal in transportation safety (transportation safety), a wireless terminal in a smart city (smart city), a wireless terminal in a smart home (smart home), a vehicle-mounted terminal, a road side unit (road side unit, RSU) having a terminal function, or the like. Alternatively, the terminal in this application may be an in-vehicle module, an automobile module, an onboard component, an automotive chip, or an on board unit that is built in a vehicle as one or more parts or units.

The AN is for implementing an access-related function, may provide a network access function for an authorized user in a specific area, and can determine transmission links with different quality based on a user level, a service demand, and the like, to perform user data transmission. The AN forwards a control signal and user data between the terminal and the CN. The AN may include an access network device, and may also be referred to as a radio access network (radio access network, RAN) device.

The RAN device may be a device that provides access for the terminal. For example, a gNB in 5G, for example, a new radio (new radio, NR) system, or one antenna panel or a group (including a plurality of antenna panels) of antenna panels of a base station in 5G, or may be a network node that constitutes a gNB, a transmission point (transmission and reception point, TRP, or transmission point, TP), or a transmission measurement function (transmission measurement function, TMF), for example, a baseband unit (building base band unit, BBU), a central unit (central unit, CU) or a distributed unit (distributed unit, DU), an RSU having a base station function, a wired access gateway, or a 5G core network element. Alternatively, the RAN device may include an access point (access point, AP) in a wireless fidelity (wireless fidelity, Wi-Fi) system, a wireless relay node, a wireless backhaul node, macro base stations in various forms, a micro base station (also referred to as a small cell), a relay station, an access point, a wearable device, a vehicle-mounted device, and the like. Alternatively, the RAN device may include a next-generation mobile communication system, for example, a 6G access network device like a 6G base station. Alternatively, in the next-generation mobile communication system, the network device may be named in another manner, which falls within the protection scope of embodiments of this application. This is not limited in this application.

The CN is mainly responsible for maintaining subscription data of a mobile network, and provides functions such as session management, mobility management, policy management, and security authentication for the terminal. The CN mainly includes the following network elements: a user plane function (user plane function, UPF) network element, an authentication server function (authentication server function, AUSF) network element, an access and mobility management function (access and mobility management function, AMF) network element, a session management function (session management function, SMF) network element, a network slice selection function (network slice selection function, NSSF) network element, a network exposure function (network exposure function, NEF) network element, a network function repository function (NF repository function, NRF) network element, a policy control function (policy control function, PCF) network element, a unified data management (unified data management, UDM) network element, an application function (application function, AF) network element, and a network slice-specific and standalone non-public network (standalone non-public network, SNPN) authentication and authorization function (network slice-specific and SNPN authentication and authorization function, NSSAAF) network element.

The UPF network element is mainly responsible for user data processing (forwarding, receiving, charging, and the like). For example, the UPF network element may receive user data from a data network (data network, DN), and forward the user data to the terminal via the access network device. The UPF network element may also receive user data from the terminal via the access network device, and forward the user data to the DN. The DN network element is an operator network that provides a data transmission service for a user, for example, an internet protocol (internet protocol, IP) multimedia service (IP multimedia service, IMS) and the internet (internet).

The AUSF network element may be configured to perform security authentication on the terminal.

The AMF network element is mainly responsible for mobility management in the mobile network, for example, user location update, registration of the user to a network, and user handover.

The SMF network element is mainly responsible for session management in the mobile network, for example, session establishment, modification, and release. A specific function is, for example, allocating an internet protocol (internet protocol, IP) address to the user, or selecting a UPF that provides a packet forwarding function.

The PCF network element mainly supports providing of a unified policy framework to control network behavior and providing of a policy rule for a control layer network function, and is responsible for obtaining user subscription information related to a policy decision. The PCF network element may provide a policy, for example, a quality of service (quality of service, QoS) policy or a slice selection policy, for the AMF network element and the SMF network element.

The NSSF network element may be configured to select a network slice for the terminal.

The NEF network element may be configured to support capability and event exposure.

The UDM network element may be configured to store user data, for example, subscription data and authentication/authorization data.

The AF network element mainly supports interaction with the CN to provide a service, for example, affecting data routing decision-making and a policy control function, or providing some third-party services for a network side.

The NSSAAF network element may be configured to support slice authentication and authorization, and support access to a standalone non-public network by using a credential of a credential holder. The NSSAAF network element may interact with an authentication, authorization, and accounting server (authentication, authorization, and accounting server, AAA-S) via an authentication, authorization, and accounting proxy (authentication, authorization, and accounting proxy, AAA-P).

### 2. Service-based management architecture (service-based management architecture, SBMA)

For network management of the 5th generation (5th generation, 5G) mobile communication system, the 3rd generation partnership project (3rd generation partnership project, 3GPP) standard proposes the SBMA.

FIG. 2 is a diagram of an architecture of an SBMA. As shown in FIG. 2, the SBMA mainly includes a management function (management function, MnF). That is, the MnF is a basic component unit of the SBMA. The MnF is a logical entity that provides a specific management task or function, and a management capability provided by the MnF for the outside is referred to as a management service (management service, MnS). The MnF may serve as a management service provision entity (MnS producer), and is configured to provide, for another MnF for use, the MnS provided by the MnF. Alternatively, the MnF may serve as a management service consumption entity (MnS consumer), and is configured to invoke an MnS provided by another MnF.

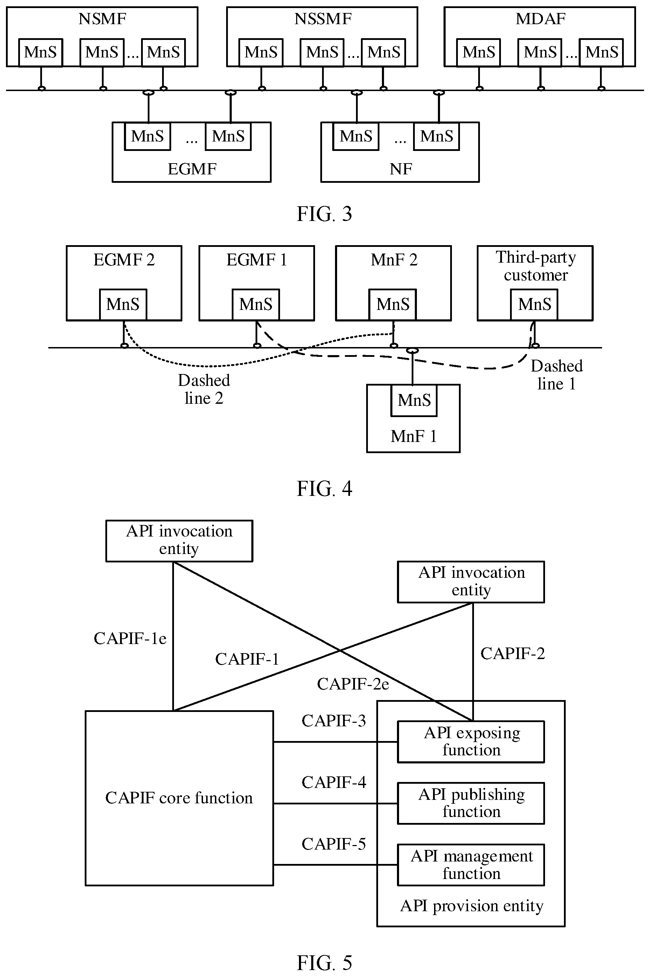

FIG. 3 is a diagram of a logical connection architecture between MnFs. As shown in FIG. 3, the MnFs invoke MnSs of each other mainly based on a service-oriented interface. The MnFs mainly include a network slice management function (network slice management function, NSMF), a network slice subnet management function (network slice subnet management function, NSSMF), a management data analytics function (management data analytics function, MDAF), a communication service management function (communication service management function, CSMF), an exposure governance management function (exposure governance management function, EGMF), a network function management function (network function management function, NFMF), and a network function (network function, NF).

The NSMF may be configured to provide a network slice management service (network slice management service, NSMS), to configure a network slice instance (network slice instance, NSI). In embodiments of this application, the network slice instance may alternatively be replaced with a network slice (network slice, NS). This is not limited.

The NSSMF may be configured to provide a network slice subnet management service (network slice subnet management service, NSSMS), to configure a network slice subnet instance (network slice subnet instance, NSSI) for the network slice. In embodiments of this application, the network slice subnet instance may alternatively be replaced with a network slice subnet (network slice subnet, NSS).

The MDAF may be for management data analytics, and functions include artificial intelligence model training, inference, and the like.

The NF may refer to a core network element like an AMF, an SMF, or a UPF, or may refer to an access network device like a gNB or an eNB.

The EGMF is mainly configured to expose a network management capability in a management domain to the outside. An operator may expose the network management capability to an external third-party (third-party) customer via the EGMF. The third-party customer may be a tenant of the operator, for example, a vertical industry (vertical industry) customer, a slice use customer, or a shared operator, namely, an organization or a company that uses/consumes an operator-customized network service (for example, the network slice). Through a corresponding network management system (for example, a third-party operation, management, and maintenance (operation, administration, and maintenance, OAM) or a shared operator management system) based on the network management capability exposed by the operator, the third-party customer may manage a network for serving the tenant (for example, obtain performance data of the network for serving the tenant and configure a network parameter for the network for serving the tenant). For example, in a slice management scenario, the slice use customer may complete network slice configuration by using a network management capability exposed by an operator network. For another example, in a scenario of a private network oriented to a vertical industry, the vertical industry customer may complete management or data analytics of the private network by using a network management capability exposed by an operator network.

### 3. Capability exposure

The capability exposure means that a network capability of the operator needs to be exposed to the third-party customer to satisfy personalized demands of various industries, thereby implementing friendly interconnection between the network capability and the service demand and optimizing resource configuration. The network capability is exposed through an exposure interface, and the third-party customer can provide a better business application and service by using obtained information or a configured policy.

As described above, an implementation relies on the EGMF.

FIG. 4 is a diagram of an EGMF application scenario. As shown in FIG. 4, both the third-party customer and an MnF 2 may be understood as customers that are not directly trusted by a management domain in which an MnF 1 is located but have been authorized. In this case, to invoke an MnS provided by the MnF 1, both the two customers need to implement service invoking requests by using EGMFs. For example, a dashed line 1 in FIG. 4 shows that the third-party customer invokes, by using an EGMF 1, the MnS provided by the MnF 1, and a dashed line 2 in FIG. 4 shows that the MnF 2 invokes, by using an EGMF 2, the MnS provided by the MnF 1.

Alternatively, another implementation relies on a common application programming interface framework (common application programming interface framework, CAPIF). The CAPIF is a framework that is proposed by 3GPP SA6 and that directly provides a northbound interface for a third party.

FIG. 5 is a diagram of an architecture of a CAPIF. As shown in FIG. 5, the CAPIF mainly includes application programming interface (application programming interface, API) invocation entities (invokers), a CAPIF core function (CAPIF core function, CCF), and an API provision entity (API provider domain). The API provision entity mainly includes an API exposing function (API exposing function, AEF), an API publishing function (API publishing function, APF), and an API management function (API management function, AMF).

The API invoker usually refers to an application that invokes a service.

The CAPIF core function may be configured to store all service (service) API information, and may provide a service supported by a reference point, namely, a CAPIF-1/1e/3/4/5 interface.

The API exposing function may be for providing a service API invocation service for the API invoker through a CAPIF-2/2e interface. The API exposing function may further be for managing authorization of the API invokers and managing an invocation log of a service API through the CAPIF-3 interface.

The API publishing function may be for publishing the service API information to the CCF through the CAPIF-4 interface.

The API management function may be for requesting a management function of the API provision entity from the CCF through the CAPIF-5 interface.

### 4. Network slice

The network slice is an end-to-end concept, includes the foregoing network elements in the AN and the CN, and is for dividing a physical network of the operator into a plurality of logical networks. Each logical network may be obtained through division based on service demands (service profiles) of different communication applications, for example, latency, bandwidth, security, and reliability, to flexibly adapt to different network application scenarios. The communication application may alternatively be understood as a communication service, a communication application service, a service, an application service, or the like. This is not limited. The communication application may be a power distribution service or a transmission service in an electric power industry, a web browsing service or a live video service in the internet industry, an autonomous driving service in an automotive industry, or the like. This is not limited. Alternatively, the communication application may be replaced with any other possible type of service, for example, a smart water meter, a smart electricity meter, bicycle sharing, or home security. This is not limited.

Specific implementation of the network slice is the network slice instance. The network slice instance refers to a specific instance established by a network operation management system based on a network slice type. **In** other words, a corresponding logical network resource is allocated, to satisfy various attribute requirements of the communication application at a network slice level. It can be learned that the network slice instance is a concept at a logical level, and may be understood as the logical network resource. For example, the logical network resource may include specific logical devices and logical resources for supporting network communication, for example, the functional network elements or entities in the AN and the CN, and functions provided by these functional network elements or entities. The network slice instance may be understood as a set of these specific logical devices and logical resources. That is, the network slice instance may be understood as the logical network resource.

One network slice may include a plurality of network slice subnets, for example, a common network slice subnet (top slice subnet), a radio access network (radio access network, RAN) slice subnet (RAN slice subnet), and a core network (core network, CN) slice subnet (CN slice subnet). Specific implementation of the network slice subnet is the network slice subnet instance. For example, the network slice subnet instance refers to a specific instance established by the network operation management system based on a network slice subnet type. In other words, a corresponding physical network resource is allocated, to satisfy various attribute requirements of the communication application at a network slice subnet level. It can be learned that the network slice subnet instance is also a concept at the logical level, and may also be understood as a logical network resource, but needs to be implemented by configuring the physical network resource. The physical network resource includes various physical devices, physical resources, and the like for supporting the network communication, for example, an (advanced telecom computing architecture, ATCA) advanced telecom computing platform board, a (compact peripheral component interconnect, CPCI) compact peripheral component interconnect board, a (personal computer, PC) server, a switch, a BBU, a (remote radio unit, RRU) remote radio unit, an antenna, a frequency spectrum, and the like.

It may be understood that a function and a service of the communication application usually need to be implemented by relying on the logical network resource and the physical network resource. For example, the logical network resource may be for implementing a service of the communication application at the logical level, for example, application security and application personalization. The physical network resource may be for implementing a function of the communication application at a physical level, for example, signal sending or signal receiving. The physical network resource and the logical network resource may be in a carrying relationship. That is, the physical network resource may be for carrying the logical network resource. In other words, a function of the logical network resource needs to rely on support of the physical network resource that carries the logical network resource. That is, a function of the network slice instance needs support of the physical network resource associated with the network slice subnet instance. Therefore, to implement the function of the network slice instance, the network slice instance (the logical network resource) needs to be allocated, and the network slice subnet instance (the physical network resource) also needs to be allocated. Details are described below.

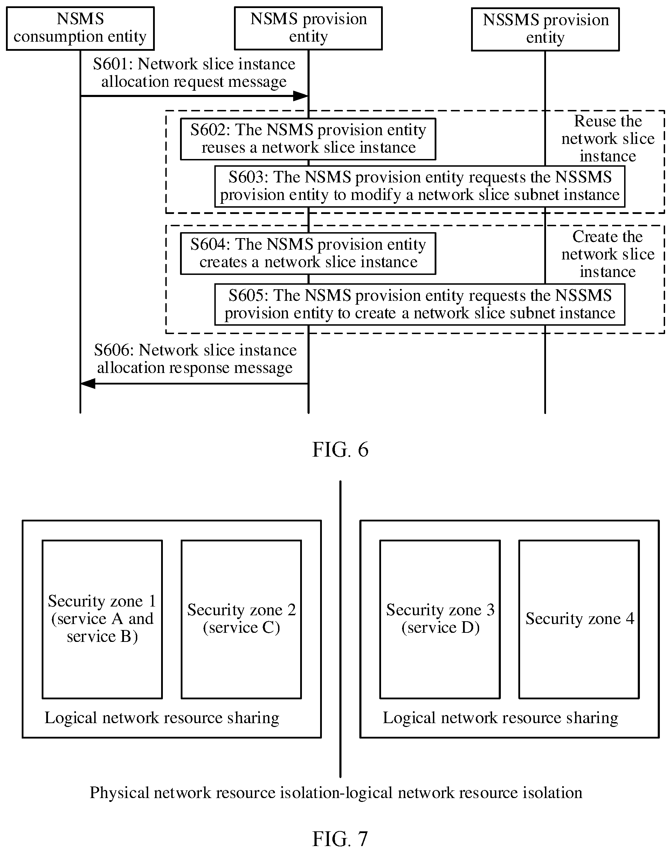

FIG. 6 is a diagram of a network slice instance allocation procedure. As shown in FIG. 6, the procedure may include the following steps.

S601: An NSMS consumption entity (NSMS_consumer) sends a network slice instance allocation request (AllocateNsi request) message to an NSMS provision entity (NSMS_provider). Accordingly, the NSMS provision entity receives the network slice instance allocation request message from the NSMS consumption entity.

The network slice instance allocation request message carries an input attribute list of a network slice instance that the NSMS consumption entity requests to allocate to a communication application.

Content of the input attribute list is mainly derived from a service profile (service_profile) of the communication application. The service profile may be generated based on a service level specification (service level specification, SLS) of the communication application. In other words, content of the service profile of the communication application is derived from the SLS of the communication application. The input attribute list of the network slice instance may include an application identifier (serviceProfileId) of the communication application and some attributes that can represent a service demand, for example, a network slice sharing attribute (networkSliceSharingIndicator), to represent whether the communication application can share a same network slice instance with another communication application. If a value of the network slice sharing attribute is shared (shared), it indicates that the communication application can share one network slice instance with the another communication application. If a value of the network slice sharing attribute is non-shared (non-shared), it indicates that the communication application needs to exclusively use one network slice instance. In addition, the input attribute list may further include other attributes for representing the service demand, for example, a downlink (downlink, DL) maximum data volume (maxDLDataVolume) and an uplink (uplink, UL) maximum data volume (maxULDataVolume). For details, refer to related descriptions in the 3GPP technical standard (technical standard, TS) 28.541. Details are not described.

S602: The NSMS provision entity reuses a network slice instance.

The NSMS provision entity may compare the attribute in the input attribute list with an attribute of an existing network slice instance. If it is determined that the value of the network slice sharing attribute is shared, and the attribute of the existing network slice instance can match the attribute in the input attribute list of the network slice instance, the NSMS provision entity may determine to reuse the existing network slice instance, that is, configure the existing network slice instance for the foregoing service. That the attribute of the existing network slice instance can match the attribute in the input attribute list of the network slice instance may mean that the attribute of the existing network slice instance can directly match the attribute in the input attribute list. For example, the downlink maximum data volume in the attributes in the input attribute list of the network slice instance is 20, and a downlink maximum data volume of the existing network slice instance is 0 to 30. Alternatively, that the attribute of the existing network slice instance can match the attribute in the input attribute list of the network slice instance may mean that the attribute of the existing network slice instance is modified within an allowed range to match the attribute in the input attribute list of the network slice instance. For example, the downlink maximum data volume in the SLS is 50, and a downlink maximum data volume of the existing network slice instance is allowed to be adjusted within a range from 0 to 60.

It may be understood that the existing network slice instance usually includes a plurality of network slice subnet instances. When the attribute of the existing network slice instances needs to be modified, attributes of the network slice subnet instances usually also need to be modified, and S603 is performed.

S603: The NSMS provision entity requests an NSSMS provision entity to modify the network slice subnet instance.

The NSMS provision entity may request an NSSMS provision entity corresponding to each network slice subnet instance to modify an attribute of the network slice subnet instance.

One of the network slice subnet instances is used as an example.

The NSMS provision entity may determine a slice subnet profile (slice_subnet_profile) of the network slice subnet instance based on the input attribute list of the network slice instance. The slice subnet profile may include an input attribute list (attributeListIn) of the network slice subnet instance. The input attribute list of the network slice subnet instance mainly includes the application identifier of the communication application and some attributes that can represent the service demand, for example, a resource sharing level (resourceSharingLevel), to represent whether the communication application can share one network slice subnet instance with the another communication application. In this case, if a value of the resource sharing level is shared (shared), it indicates that the communication application can share the network slice subnet instance with the another communication application. If a value of the resource sharing level is non-shared (non-shared), it indicates that the communication application needs to exclusively use the network slice subnet instance. For example, the network slice subnet instance is a common network slice subnet, a profile of the network slice subnet instance is a common network slice subnet profile (TopSliceSubnetProfile), and the resource sharing level may be for representing whether the communication application can share a same common network slice subnet with the another communication application. Alternatively, the network slice subnet instance is a radio access network slice subnet, a profile of the network slice subnet is a radio access network slice subnet profile (RANSliceSubnetProfile), and the resource sharing level may be for representing whether the communication application can share a same radio access network slice subnet with the another communication application. Alternatively, the network slice subnet instance is a core network slice subnet, a profile of the network slice subnet is a core network slice subnet profile (CNSliceSubnetProfile), and the resource sharing level may be for representing whether the communication application can share a same network slice subnet instance with the another communication application. In addition, for details of the input attribute list of the network slice subnet instance, also refer to related descriptions in the 3GPP TS 28.541. Details are not described.

The NSMS provision entity may send a network slice subnet instance modification request (ModifyNssi request) message to an NSSMS provision entity corresponding to the network slice subnet instance. The network slice subnet instance modification request message may carry the input attribute list of the network slice subnet instance. The NSSMS provision entity may modify the attribute of the network slice subnet instance based on the input attribute list of the network slice subnet instance, to ensure that a modified attribute of the network slice subnet instance can match the input attribute list of the network slice subnet instance. The NSSMS provision entity may return a network slice subnet instance modification response (ModifyNssi response) message to the NSMS provision entity, to indicate that the modification of the network slice subnet instance has been completed. For example, the network slice subnet instance modification response message includes an identifier of the network slice subnet instance, for example, a network slice subnet data network (networkSliceSubnetDN), and an output attribute list of the network slice subnet instance, to represent the modified attribute of the network slice subnet instance.

It may be understood that S603 is an optional step. For example, if the attribute of the network slice instance can directly satisfy the SLS, S603 may not be performed.

S604: The NSMS provision entity creates a network slice instance.

The NSMS provision entity may compare the attribute of the existing network slice instance with the attribute in the input attribute list of the network slice instance. If it is determined that the value of the network slice sharing attribute is non-shared, or the attribute of the existing network slice instance does not match the attribute in the input attribute list of the network slice instance although the value of the network slice sharing attribute is shared, the NSMS provision entity may determine to create a new network slice instance, that is, configure the newly created network slice instance for a service that requests to allocate the network slice instance. That the attribute of the existing network slice instance does not match the attribute in the input attribute list of the network slice instance may mean that the attribute of the existing network slice instance cannot match the attribute in the input attribute list of the network slice instance even if the attribute of the existing network slice instance is modified within the allowed range. For example, the downlink maximum data volume in the input attribute list of the network slice instance is 50, and a downlink maximum data volume of the existing network slice instance is allowed to be adjusted within a range from 0 to 40. **In** this case, the NSMS provision entity may allocate an identifier of the network slice instance, for example, a network slice data network (networkSliceDN), to the network slice instance based on the attribute in the input attribute list of the network slice instance, and allocate a logical network resource to the network slice instance.

It may be understood that the network slice instance usually includes a plurality of network slice subnet instances. Therefore, the NSMS provision entity may further request NSSMS provision entities to create these network slice subnet instances. That is, S605 is performed.

S605: The NSMS provision entity requests the NSSMS provision entity to create the network slice subnet instance.

The NSMS provision entity may request each NSSMS provision entity to create a network slice subnet instance corresponding to the NSSMS provision entity.

One of the network slice subnet instances is used as an example.

The NSMS provision entity may determine a slice subnet profile of the network slice subnet instance based on the input attribute list of the network slice instance. The slice subnet profile may include an input attribute list of the network slice subnet instance. For details, refer to the related descriptions in S603. Details are not described again. The NSMS provision entity may send a network slice subnet instance allocation request (AllocateNssi request) message to an NSSMS provision entity corresponding to the network slice subnet instance. The network slice subnet instance allocation request message may carry the input attribute list of the network slice subnet instance. The NSSMS provision entity may create the network slice subnet instance based on the input attribute list of the network slice subnet instance. For example, the NSSMS provision entity may allocate an identifier of the network slice subnet instance to the network slice subnet instance, and allocate a physical network resource to the network slice subnet instance. The NSSMS provision entity may return a network slice subnet instance allocation response (AllocateNssi response) message to the NSMS provision entity. The network slice subnet instance allocation response message indicates that the allocation of the network slice subnet instance has been completed. For example, the network slice subnet instance allocation response message includes the identifier of the network slice subnet instance and an output attribute list of the network slice subnet instance, to represent an attribute of the network slice subnet instance.

S606: The NSMS provision entity sends a network slice instance allocation response (AllocateNsi response) message to the NSMS consumption entity. Accordingly, the NSMS consumption entity receives the network slice instance allocation response message from the NSMS provision entity.

The network slice instance allocation response message may indicate that the allocation of the network slice instance is completed. For example, the network slice instance allocation response message includes the identifier of the network slice instance and an output attribute list of the network slice instance.

### 5. Resource sharing-isolation

The resource sharing-isolation means that when a network configures network resources for different communication applications, the network resources allocated to the different communication applications may need to be isolated from each other and shared. Resource sharing may include logical network resource sharing and physical network resource sharing. Resource isolation may include logical network resource isolation and physical network resource isolation.

The logical network resource sharing may mean that the different communication applications can share a same logical network resource, for example, a same network slice instance. For example, the different communication applications may have similar service demands, for example, security, latency, and rate demands. In this case, a service supported by one network slice instance can usually satisfy respective demands of these communication applications, so that these communication applications can share the same network slice instance, to learn of a homogenous network service.

The logical network resource isolation may mean that the different communication applications cannot share a same logical network resource. For example, the different communication applications use different network slice instances. That is, the communication application may have a dedicated logical network resource, for example, a dedicated network slice instance. For example, the different communication applications may have different service demands. In this case, a service supported by one network slice instance usually cannot satisfy the respective demands of these communication applications. Consequently, these communication applications cannot share a same network slice instance, and a respective network slice instance needs to be allocated to each communication application, to satisfy the respective service demands.

Physical network resource sharing means that the different communication applications can share a same physical network resource. For example, the different communication applications may have the similar service demands. In this case, a service supported by a physical network resource associated with one network slice subnet instance can usually satisfy the respective demands of these communication applications, so that these communication applications can share the same physical network resource, to learn of the homogenous network service.

The physical network resource isolation means that the different communication applications cannot share a same physical network resource. That is, the communication application may have a dedicated physical network resource. For example, the different communication applications may have the different service demands. In this case, a service supported by a physical network resource associated with one network slice subnet instance usually cannot satisfy the respective demands of these communication applications. Consequently, these communication applications cannot share the same physical network resource, and a respective physical network resource needs to be allocated to each communication application, to satisfy the respective service demands. The physical network resource isolation may be implemented by using a same physical network resource/different physical network resources by the different communication applications in different time periods. For example, a time period #1 does not overlap a time period #2, a communication application #1 uses a physical network resource #1 in the time period #1, and a communication application #2 uses the physical network resource #1 in the time period #2. In this case, the physical network resources of the communication application #1 and the communication application #2 are still isolated from each other. The physical network resource isolation may alternatively be implemented by using different physical network resources by the different communication applications in different time periods/simultaneously. For example, a communication application #1 uses a physical network resource #1 in a time period #1, and a communication application #2 uses a physical network resource #2 in the time period #1. In this case, the physical network resources of the communication application #1 and the communication application #2 are isolated from each other.

It may be understood that the same logical network resource shared by the different communication applications may be a logical network resource set, and the different communication applications may use different logical network resources in the logical network resource set. In this case, it may still be considered that the different communication applications share the same logical network resource. For example, one network slice instance supports a plurality of downlink rates, and a downlink rate of a communication application A may be different from a downlink rate of a communication application B. If both the downlink rate of the communication application A and the downlink rate of the communication application B may belong to the plurality of downlink rates supported by the network slice instance, it may still be considered that the communication application A and the communication application B share the same logical network resource. Similarly, the same physical network resource shared by the different communication applications may be a physical network resource set, and the different communication applications may use different physical network resources in the physical network resource set. In this case, it may still be considered that the different communication applications share the same physical network resource. For example, one frequency band includes a plurality of subcarriers, and a subcarrier used by the communication application A may be different from a subcarrier used by the communication application B. However, if both the subcarrier used by the communication application A and the subcarrier used by the communication application B belong to the subcarriers in the frequency band, it may still be considered that the communication application A and the communication application B share the same physical network resource.

For example, the logical network resource is a network slice instance, the physical network resource is a physical network element group (namely, one or more physical network elements), the different logical network resources may be understood as different network slice instances, and the different physical network resources may be understood as different physical network element groups. In this case, the logical network resource isolation may be understood as that the different communication applications run in the different network slice instances. For example, the communication application A runs in a network slice instance 1, and the communication application B runs in a network slice instance 2. In this case, the network slice instance 1 and the network slice instance 2 may be carried on a same physical network element group. Alternatively, the network slice instance 1 and the network slice instance 2 may be separately carried on different physical network element groups. For example, the network slice instance 1 is carried on a physical network element group 1, and the network slice instance 2 is carried on a physical network element group 2. In other words, when the different communication applications cannot share the same logical network resource, these communication applications may share the same physical network resource, or may not share the same physical network resource. The logical network resource sharing may be understood as that the different communication applications run in the same network slice instance. For example, both the communication application A and the communication application B run in a network slice instance 1. In this case, the network slice instance 1 can usually be carried on only a physical network element group, for example, a physical network element group 1. In other words, when the different communication applications can share the same logical network resource, these communication applications can also share the same physical network resource. The physical network resource sharing may be understood as that the different communication applications run on a same physical network element group. For example, both the communication application A and the communication application B run on the physical network element group 1. In this case, the communication application A and the communication application B may further run in a same network slice instance carried on the physical network element group 1, for example, in the network slice instance 1, or may run in different network slice instances carried on the physical network element group 1. For example, the communication application A runs in the network slice instance 1, and the communication application B runs in the network slice instance 2. In other words, when the different communication applications can share the physical network resource, these communication applications may share the same logical network resource, or may not share the same logical network resource. The physical network resource isolation may be understood as that the different communication applications run on the different physical network element groups. For example, the communication application A runs on the physical network element group 1, and the communication application B runs on the physical network element group 2. In this case, the communication application A may further run in the network slice instance 1 carried on the physical network element group 1, and the communication application B may further run in the network slice instance 2 carried on the physical network element group 2. In other words, when the different communication applications cannot share the same physical network resource, these communication applications cannot share the same logical network resource either.

For example, a resource sharing-isolation relationship may be shown in Table 1 below.

**Table 1**

| NA | Logical network resource isolation | Logical network resource sharing | Physical network resource isolation | Physical network resource sharing |
|---|---|---|---|---|
| Logical network resource isolation | NA | NA | Possible | Possible |
| Logical network resource sharing | NA | NA | Impossible | Yes |
| Physical network resource isolation | Yes | Impossible | NA | NA |
| Physical network resource sharing | Possible | Possible | NA | NA |

For ease of understanding, the following uses a scenario of electric power communication applications as an example for description.

FIG. 7 is a diagram of a scenario of electric power communication applications. As shown in FIG. 7, based on security demands of the electric power communication applications, the electric power communication applications may be classified into four categories based on a safety zone (safety zone) dimension: a production control zone (also referred to as a safety zone 1 or a safety class 1), a production non-control zone (also referred to as a security zone 2 or a safety class 2), a production management zone (also referred to as a security zone 3 or a safety class 3), and an information management zone (also referred to as a security zone 4 or a safety class 4). The electric power industry has a clear logical network resource sharing-isolation demand and a clear physical network resource sharing-isolation demand on the communication applications in the different security zones. For example, the physical network resource isolation needs to be implemented between a communication application deployed in the security zone 1 and/or a communication application deployed in the security zone 2 and a communication application deployed in the security zone 3 and/or a communication application deployed in the security zone 4. The physical network resource sharing and the logical network resource isolation need to be implemented between the communication application deployed in the security zone 1 and the communication application deployed in the security zone 2. The physical network resource sharing and the logical network resource isolation need to be implemented between the communication application deployed in the security zone 3 and the communication application deployed in the security zone 4. In addition, for a security zone in the electric power industry, refer to related descriptions in TR 22.867. Details are not described.

It can be learned that the third party has a clear requirement on the logical network resource sharing-isolation and the physical network resource sharing-isolation between the communication applications. However, currently, the attributes in the service demand, for example, the network slice sharing attribute and the resource sharing level, can only generally indicate whether the communication application can share the same network slice instance and the same network slice subnet instance with the another communication application (which communication application is not specified). Consequently, resource isolation is not implemented between communication applications between which the resource isolation should be implemented, and the communication applications have a security risk. Alternatively, resource isolation is implemented between communication applications between which the resource isolation should not be implemented, and a network resource is not fully used.

The electric power industry is still used as an example.

It is assumed that the electric power industry requires: The logical network resource isolation needs to be implemented between a communication application A and a communication application B that are deployed in the security zone 1 and a communication application C that is deployed in the security zone 2, but the physical network resource isolation does not need to be implemented (that is, the physical network resource sharing may be implemented) between the communication application A and the communication application B that are deployed in the security zone 1 and the communication application C that is deployed in the security zone 2; and the logical network resource isolation and the physical network resource isolation need to be implemented between the communication application A and the communication application B that are deployed in the security zone 1 and a communication application D that is deployed in the security zone 3. In this case, resource isolation relationships between the communication application A, the communication application B, the communication application C, and the communication application D cannot be implemented together by relying only on a network slice sharing attribute in a service demand of the communication application A or the communication application B. For example, if the network slice sharing attribute in the service demand of the communication application A is shared, it represents that the communication application A may share a logical network resource with all other communication applications. This does not satisfy a requirement that the logical network resource isolation needs to be implemented between communication application A and the communication application C, and there is a security risk. If the network slice sharing attribute in the service demand of the communication application A is non-shared, it represents that a dedicated logical network resource needs to be configured for the communication application A. For example, the communication application A exclusively occupies a network slice instance. This does not satisfy a requirement that the logical network resource sharing needs to be implemented between the communication application A and the communication application B, and causes a waste of a network resource. Similarly, if a resource sharing level in the service demand of the communication application A is shared, it represents that the communication application A may share a physical network resource with all other communication applications. This does not satisfy a requirement that the physical network resource isolation needs to be implemented between the communication application A and the communication application D, and there is a security risk. If a resource sharing level in the service demand of the communication application A is non-shared, it represents that a dedicated physical network resource needs to be configured for the communication application A. This does not satisfy a requirement that the physical network resource sharing needs to be implemented between the communication application A and the communication application B, and causes a waste of a network resource.

For the foregoing technical problem, embodiments of this application provide the following technical solutions, to satisfy a demand on logical network resource sharing-isolation between different communication applications and a demand on physical network resource sharing-isolation between the different communication applications.

The following describes technical solutions in this application with reference to accompanying drawings.

The technical solutions in embodiments of this application may be applied to various communication systems such as a wireless fidelity (wireless fidelity, Wi-Fi) system, a vehicle-to-everything (vehicle-to-everything, V2X) communication system, a device-to-device (device-to-device, D2D) communication system, an internet of vehicles communication system, a 4th generation (4th generation, 4G) mobile communication system, for example, a long term evolution (long term evolution, LTE) system, a worldwide interoperability for microwave access (worldwide interoperability for microwave access, WiMAX) communication system, 5G, for example, a new radio (new radio, NR) system, and a future communication system.

All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In addition, in embodiments of this application, the terms such as "example" and "for example" are for representing giving an example, an illustration, or a description. Any embodiment or design scheme described as an "example" in this application should not be explained as being more preferred or having more advantages than another embodiment or design scheme. Exactly, the term "example" is used to present a concept in a specific manner.

In embodiments of this application, terms "information (information)", "signal (signal)", "message (message)", "channel (channel)", and "signaling (signaling)" may sometimes be interchangeably used. It should be noted that meanings expressed by the terms are matchable when differences of the terms are not emphasized. The terms "of (of)", "corresponding (corresponding, relevant)", and "corresponding (corresponding)" may be interchangeably used sometimes. It should be noted that meanings expressed by the terms are matchable when differences of the terms are not emphasized. In addition, "/" mentioned in this application may indicate an "or" relationship.

The network architecture and the service scenario that are described in embodiments of this application are intended to describe the technical solutions in embodiments of this application more clearly, and do not constitute a limitation on the technical solutions provided in embodiments of this application. A person of ordinary skill in the art may know that with evolution of the network architecture and emergence of the new service scenario, the technical solutions provided in embodiments of this application are also applicable to similar technical problems.

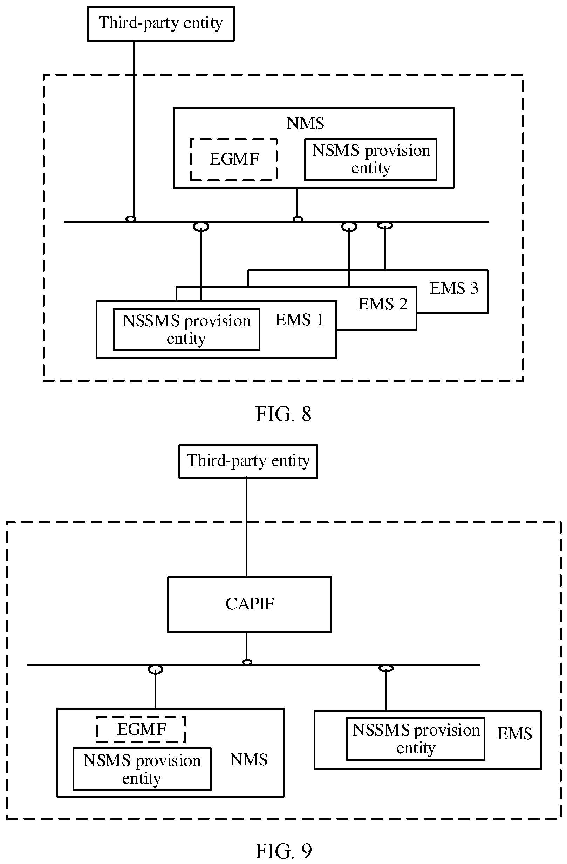

For ease of understanding embodiments of this application, communication systems shown in FIG. 8 and FIG. 9 are first used as examples to describe in detail a communication system used in embodiments of this application. For example, FIG. 8 and FIG. 9 are diagrams of architectures of a communication system to which a network resource management method is applicable according to an embodiment of this application.

As shown in FIG. 8, an architecture of the communication system is an architecture in which a network management system (network management system, NMS) interacts with a third-party entity.

As shown in FIG. 9, another architecture of the communication system is an architecture in which an NMS interacts with a third-party entity via a CAPIF, and the CAPIF may not be deployed on the NMS.

Specifically, the communication system may include at least one of the following: the third-party entity, the NMS, an element management system (element management system, EMS), an EGMF, the CAPIF, an NSMS provision entity, and an NSSMS provision entity.

The third-party entity may be a management system representing a third party (for example, a vertical industry), for example, a third-party server, and may initiate a management service request to a management domain (a cross-domain management system or a single-domain management system) or the CAPIF.

The NMS is the cross-domain management system, and is configured to manage a plurality of EMSs together.

The EMS is the single-domain management system, and is configured to manage an AN or a CN.

For the EGMF and the CAPIF, refer to the related descriptions in "2. SBMA" and "3. Capability exposure". Details are not described again.

For the NSMS provision entity and the NSSMS provision entity, refer to the related descriptions in "4. Network slice". Details are not described again.

In this embodiment of this application, the EGMF, the CAPIF, and the third-party entity may be collectively understood as NSMS consumption entities. The NSMS consumption entity may request the NSMS provision entity to allocate a network slice instance to a target communication application, and indicate resource isolation-sharing demand information between the target communication application and another communication application. For example, the network slice instance allocated to the target communication application can be shared between the target communication application and a first communication application set, but cannot be shared between the target communication application and a second communication application set; and/or a physical network resource associated with a network slice instance and allocated to the target communication application can be shared between the target communication application and a third communication application set, but cannot be shared between the target communication application and a fourth communication application set. In this way, the NSMS provision entity may allocate, to the target communication application based on the resource isolation-sharing demand information between the target communication application and the another communication application, a target network slice instance that satisfies the resource isolation-sharing demand information (including that the NSSMS provision entity allocates a target network slice subnet instance), so that a service demand is satisfied, and a network resource is not wasted.

For ease of description, in embodiments of this application, the EGMF is for representing an EGMF network element or an EGMF entity, and the CAPIF is for representing a CAPIF network element or a CAPIF entity. In addition, the third-party entity may alternatively be replaced with a third-party network element, a third-party device, or the like, and the NSMS consumption entity may alternatively be replaced with a network slice management service consumption entity, a network slice management function consumption entity, a network slice management function consumption network element, or the like, the NSMS provision entity may alternatively be replaced with a network slice management service provision entity, a network slice management function provision entity, a network slice management function provision network element, or the like, and the NSSMS provision entity may alternatively be replaced with a network slice subnet management service provision entity, a network slice subnet management function provision entity, a network slice subnet management function provision network element, or the like. This is not limited.

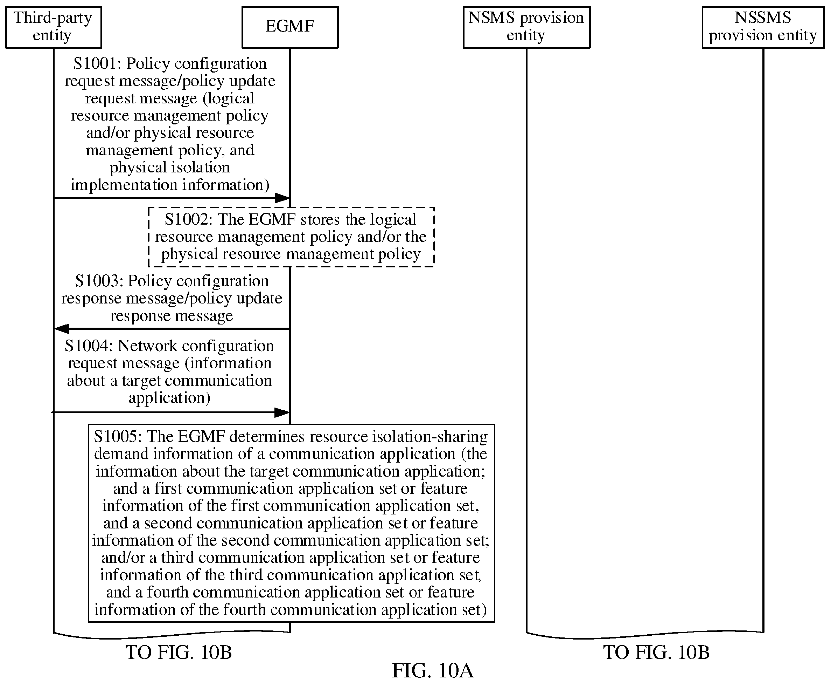

For ease of understanding, the following specifically describes an interaction procedure between the network elements/devices in the foregoing communication system by using method embodiments with reference to FIG. 10A to FIG. 16. The network resource management method provided in embodiments of this application is applicable to the foregoing communication system, and is specifically applied to various scenarios mentioned in the foregoing communication system. The following provides specific descriptions.

### Scenario 1:

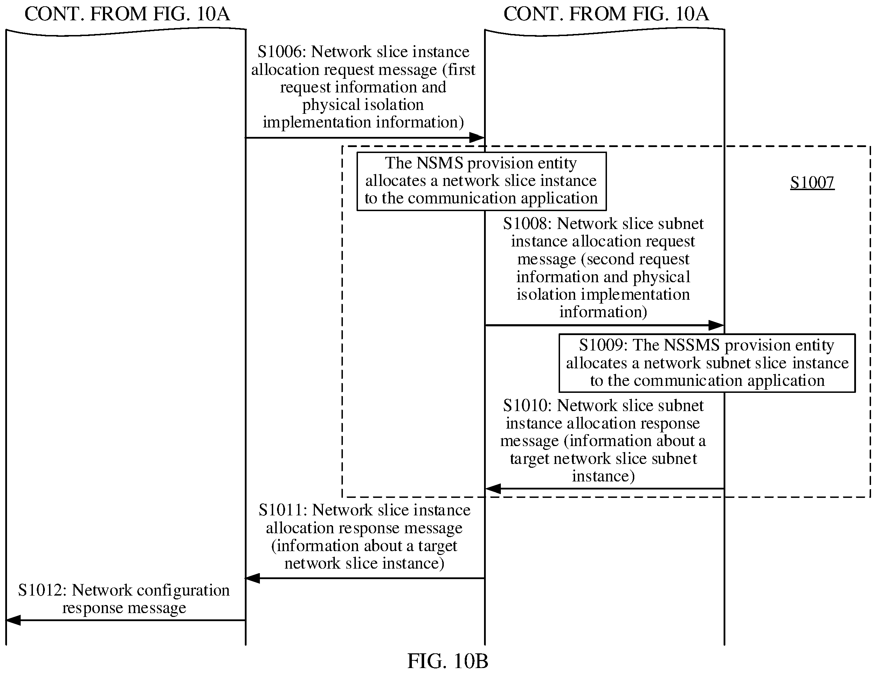

FIG. 10A and FIG. 10B are a schematic flowchart 1 of a network resource management method according to an embodiment of this application. The scenario 1 involves interaction between a third-party entity, an EGMF, an NSMS provision entity, and an NSSMS provision entity. Via the EGMF, the third-party entity may provide the NSMS provision entity with resource isolation-sharing demand information of a communication application, and request the NSMS provision entity to allocate a network slice instance to the communication application. The resource isolation-sharing demand information of the communication application indicates, for example, communication applications with which the communication application can share a resource and communication applications with which the communication application cannot share the resource. In this way, the NSMS provision entity can allocate, to the communication application, a network slice instance that satisfies the resource isolation-sharing demand information of the communication application.

Specifically, as shown in FIG. 10A and FIG. 10B, a procedure of the network resource management method is as follows:
S1001: The third-party entity sends a policy configuration request message/policy update request message to the EGMF. Accordingly, the EGMF receives the policy configuration request message/policy update request message from the third-party entity.

The policy configuration request message/policy update request message may include a logical resource management policy and/or a physical resource management policy.

The logical resource management policy may be a common policy applicable to a plurality of communication applications, and may include information about a plurality of communication applications that can share a network slice instance with each other (logical network resource sharing) and/or information about a plurality of communication applications that cannot share the network slice instance with each other (logical network resource isolation). Information about the communication application may be a safety class of the communication application. The safety class may be related to a service demand (for example, a security demand) of the communication application. Communication applications having a same service demand or similar service demands may correspond to a same safety class, and communication applications having different or dissimilar service demands may respectively correspond to different safety classes. In addition, the safety class is merely an example expression manner, and the safety class may alternatively be replaced with any possible description, for example, a security zone, a security area, a service area, an application area, a service level, or an application level. This is not limited.

On this basis, the logical resource management policy may include at least one safety class corresponding to the plurality of communication applications that can share the network slice instance with each other and/or at least two safety classes corresponding to the plurality of communication applications that cannot share the network slice instance with each other. For example, the logical resource management policy may include a first safety class set list, and the first safety class set list may include a plurality of safety classes. In this case, the logical resource management policy may indicate that any two communication applications corresponding to safety classes in a same safety class set in the first safety class set list can share the network slice instance with each other and that any two communication applications corresponding to safety classes in different safety class sets in the first safety class set list cannot share the network slice instance with each other.

### Example 1:

The first safety class set list is: Logical_safetyClass_List=[(class 1, class 2)(class 3, class 4, class 5)], where the "class" may represent the "safety class". The logical resource management policy may indicate that communication applications corresponding to a same bracket can share the network slice instance with each other and that communication applications corresponding to different brackets cannot share the network slice instance with each other. That is, any two communication applications corresponding to the class 1 and the class 2 can share the network slice instance with each other, any two communication applications corresponding to the class 3, the class 4, and the class 5 can share the network slice instance with each other, and communication applications corresponding to the class 1 and the class 2 cannot share the network slice instance with communication applications corresponding to the class 3, the class 4, and the class 5.

The physical resource management policy may be a common policy applicable to a plurality of communication applications, and may be for describing a plurality of communication applications that can share a physical network resource with each other and/or a plurality of communication applications that cannot share the physical network resource with each other. Information about the communication application may be a safety class corresponding to the communication application. For details, refer to the foregoing related descriptions. Details are not described again.

On this basis, the physical resource management policy may include at least one safety class corresponding to the plurality of communication applications that can share the physical network resource with each other and/or at least two safety classes corresponding to the plurality of communication applications that cannot share the physical network resource with each other. For example, the physical resource management policy may include a second safety class set list, and the second safety class set list may also include a plurality of safety classes. In this case, the physical resource management policy may indicate that any two communication applications corresponding to safety classes in a same safety class set in the second safety class set list can share the physical network resource with each other and that any two communication applications corresponding to safety classes in different safety class sets in the second safety class set list cannot share the physical network resource with each other.

Continue to use Example 1:
The second safety class set list is: Physical_safetyClass_List=[(class 1, class 2)(class 3, class 4)(class 5)], where the "class" represents the "safety class". The physical resource management policy may indicate that communication applications corresponding to a same bracket can share the physical network resource with each other and that communication applications corresponding to different brackets cannot share the physical network resource with each other. That is, any two communication applications corresponding to the class 1 and the class 2 can share the physical network resource with each other; any two communication applications corresponding to the class 3 and the class 4 can share the physical network resource with each other; any two communication applications corresponding to the class 5 can share the physical network resource with each other; communication applications corresponding to the class 1 and the class 2 cannot share the physical network resource with communication applications corresponding to the class 3 and the class 4; the communication applications corresponding to the class 1 and the class 2 cannot share the physical network resource with a communication application corresponding to the class 5; and the communication applications corresponding to the class 3 and the class 4 cannot share the physical network resource with the communication application corresponding to the class 5.

Optionally, the policy configuration request message/policy update request message may further include physical isolation implementation information. The physical isolation implementation information may be for specifying a manner of implementing the physical network resource. For example, the physical isolation implementation information may indicate at least one of the following: implementing a network slice subnet instance by using a physical network resource in different time periods or implementing the network slice subnet instance by using different physical network resources. Certainly, if the policy configuration request message/policy update request message does not include physical isolation implementation information, it indicates that physical network resource isolation may be implemented in a default manner. For example, a network slice subnet instance is implemented by using a physical network resource in different time periods, or a network slice subnet instance is implemented by using different physical network resources. This is not limited.

It may be understood that whether the third-party entity sends the policy configuration request message or the policy update request message to the EGMF may depend on a policy sending objective of the third-party entity. For example, if the third party entity intends to configure an initial policy for the EGMF, for example, configure the logical resource management policy and/or the physical resource management policy for the EGMF for a 1^{st} time, the third party entity may send the policy configuration request message to the EGMF. If the third-party entity intends to update a policy, for example, update, by sending the logical resource management policy and/or the physical resource management policy, a policy preconfigured for the EGMF, the third-party entity may send the policy update request message to the EGMF.

It may be further understood that, that the third-party entity sends different messages based on the policy sending objective of the third-party entity is merely an example, and does not constitute a limitation. For example, regardless of whether the third-party entity configures the initial policy or updates the policy, the third-party entity may send the policy configuration request message to the EGMF.

S1002: The EGMF stores the logical resource management policy and/or the physical resource management policy.

The EGMF may obtain the logical resource management policy and/or the physical resource management policy from the policy configuration request message/policy update request message. Optionally, the EGMF stores the logical resource management policy and/or the physical resource management policy. In this case, if the EGMF obtains a corresponding policy from the third-party entity in advance and stores the corresponding policy, for example, a historical logical resource management policy and/or physical resource management policy, the EGMF may further release the historical logical resource management policy and/or physical resource management policy, to implement policy update.

In addition, S1102 is an optional step. For example, the EGMF may alternatively not store the logical resource management policy and/or the physical resource management policy.

S1003: The EGMF sends a policy configuration response message/policy update response message to the third-party entity. Accordingly, the third-party entity receives the policy configuration response message/policy update response message from the EGMF.

The policy configuration response message may be a response message for the policy configuration request message, to indicate that the EGMF has received the policy configuration request message. Alternatively, the policy update response message may be a response message for the policy update request message, to indicate that the EGMF has received the policy update request message.

S1004: The third-party entity sends a network configuration request message to the EGMF. Accordingly, the EGMF receives the network configuration request message from the third-party entity.

The network configuration request message may be for requesting to configure a network for at least one communication application. The network configuration request message may include an SLS list, and the SLS list may include an SLS of each of the at least one communication application. For example, the SLS list may be application_network_demand_list={SLS 1, SLS 2, SLS 3, ...}.

A communication application is defined as a target communication application. An SLS of the target communication application may include information about the target communication application. For example, the information about the target communication application may indicate a safety class of the target communication application, and may specifically indicate a correspondence between the safety class of the target communication application and an identifier of the target communication application. In an implementation, the safety class of the target communication application may be represented by using a value of a corresponding information element in the SLS of the target communication application. For example, if the value of the information element is 1, it represents that the target communication application corresponds to a safety class 1; or if the value of the information element is 2, it represents that the target communication application corresponds to a safety class 2. The rest can be deduced by analogy. The information element may be an existing information element, or may be a newly defined information element. This is not limited. Alternatively, the information about the target communication application may include an application identifier of the target communication application, and the application identifier of the target communication application may be for obtaining a safety class of the target communication application. **In** addition, the SLS of the target communication application may further include another parameter. For details, refer to the related descriptions of the SLS. Details are not described again.

It may be understood that the network configuration request message is merely an example message name, and the network configuration request message may alternatively be replaced with any possible message name, for example, a network slice configuration request message or a slice configuration request message. This is not limited. **In** addition, the network configuration request message may alternatively be replaced with any other possible message. This is not limited.

S1005: The EGMF determines the resource isolation-sharing demand information of the communication application.

The resource isolation-sharing demand information of the communication application may be demand information applicable to the communication application, and is for describing a resource isolation-sharing relationship between the communication application and another communication application. The EGMF may obtain the resource isolation-sharing demand information of each communication application based on a safety class of the communication application and the logical resource management policy and/or the physical resource management policy.

The target communication application is used as an example. The EGMF may obtain resource isolation-sharing demand information of the target communication application based on the safety class of the target communication application and the logical resource management policy and/or the physical resource management policy. The resource isolation-sharing demand information of the target communication application may indicate: The target communication application can share the network slice instance with a communication application corresponding to a first safety class set, but cannot share the network slice instance with a communication application corresponding to a second safety class set; and/or the target communication application can share the physical network resource with a communication application corresponding to a third safety class set, but cannot share the physical network resource with a communication application corresponding to a fourth safety class set. For example, the resource isolation-sharing demand information of the target communication application may include the information about the target communication application. The resource isolation-sharing demand information of the target communication application may further include a first communication application set or feature information of the first communication application set, and a second communication application set or feature information of the second communication application set; and/or a third communication application set or feature information of the third communication application set, and a fourth communication application set or feature information of the fourth communication application set.

The first communication application set may indicate the communication application corresponding to the first safety class set. The second communication application set may correspond to the communication application of the second safety class set. The third communication application set may indicate the communication application corresponding to the third safety class set. The fourth communication application set may indicate the communication application corresponding to the fourth safety class set. **In** this case, the resource isolation-sharing demand information of the target communication application may alternatively be understood as being for describing: The target communication application can share the network slice instance with the communication application in the first communication application set, but cannot share the network slice instance with the communication application in the second communication application set; and/or the target communication application can share the physical network resource with the communication application in the third communication application set, but cannot share the physical network resource with the communication application in the fourth communication application set.

Alternatively, the feature information of the first communication application set is for describing a feature of the first communication application set. For example, the feature information of the first communication application set may include a safety class, namely, the first safety class set, of the communication application that can share the network slice instance with the target communication application, or may include information such as a service feature and a service type of the communication application that can share the network slice instance with the target communication application. The feature information of the second communication application set is for describing a feature of the second communication application set, and may include a safety class, namely, the second safety class set, of the communication application that cannot share the network slice instance with the target communication application, or may include information such as a service feature and a service type of the communication application that cannot share the network slice instance with the target communication application. The feature information of the third communication application set is for describing a feature of the third communication application set. For example, the feature information of the third communication application set may include a safety class, namely, the third safety class set, of the communication application that can share the physical network resource with the target communication application, or may include information such as a service feature and a service type of the communication application that can share the physical network resource with the target communication application. The feature information of the fourth communication application set is for describing a feature of the fourth communication application set. For example, the feature information of the fourth communication application set may include a safety class, namely, the fourth safety class set, of the communication application that cannot share the physical network resource with the target communication application, or may include information such as a service feature and a service type of the communication application that cannot share the physical network resource with the target communication application. In this case, the resource isolation-sharing demand information of the target communication application may alternatively be understood as being for describing: The safety class corresponding to the target communication application can share the network slice instance with the first safety class set, but cannot share the network slice instance with the second safety class set; and/or the safety class corresponding to the target communication application can share the physical network resource with the third safety class set, but cannot share the physical network resource with the fourth safety class set.

Continue to use Example 1:
The first safety class set list is: Logical_safetyClass_List=[(class 1, class 2)(class 3, class 4, class 5)], the second safety class set list is: Physical_safetyClass_List=[(class 1, class 2)(class 3, class 4)(class 5)], a communication application A corresponds to the class 3, and resource isolation-sharing demand information of the communication application A may be shown in Table 2 below.

**Table 2**

| Communication application A | Class 3 |
|---|---|
| logical_share | Class 3, class 4, and class 5 |
| logical_isolation | Class 1 and class 2 |
| physical_share | Class 3 and class 4 |
| physical_isolation | Class 1, class 2, and class 5 |

As shown in Table 2, the resource isolation-sharing demand information of the communication application A may indicate: The communication application A can share the network slice instance with communication applications corresponding to the class 3, the class 4, and the class 5, but cannot share the network slice instance with communication applications corresponding to the class 1 and the class 2; and the communication application A can share the physical network resource with communication applications corresponding to the class 3 and the class 4, but cannot share the physical network resource with communication applications corresponding to the class 1, the class 2, and the class 5.

It may be understood that, when all communication applications are determined, if the communication application (the first communication application set or the feature information of the first communication application set) that can share the network slice instance with the target communication application is determined, the communication application (the second communication application set or the feature information of the second communication application set) that cannot share the network slice instance with the target communication application may also be implicitly determined, in other words, be deduced. If the communication application (the second communication application set or the feature information of the second communication application set) that cannot share the network slice instance with the target communication application is determined, the communication application (the first communication application set or the feature information of the first communication application set) that can share the network slice instance with the target communication application may also be implicitly determined. In other words, on a basis that the resource isolation-sharing demand information of the target communication application includes the information about the target communication application, the resource isolation-sharing demand information of the target communication application may further include only the first communication application set or the feature information of the first communication application set, or may further include only the second communication application set or the feature information of the second communication application set.

Likewise, when all communication applications are determined, if the communication application (the third communication application set or the feature information of the third communication application set) that can share the physical network resource with the target communication application is determined, the communication application (the fourth communication application set or the feature information of the fourth communication application set) that cannot share the physical network resource with the target communication application may also be implicitly determined, in other words, be deduced. If the communication application (the fourth communication application set or the feature information of the fourth communication application set) that cannot share the physical network resource with the target communication application is determined, the communication application (the third communication application set or the feature information of the third communication application set) that can share the physical network resource with the target communication application may also be implicitly determined. In other words, on a basis that the resource isolation-sharing demand information of the target communication application includes the information about the target communication application, the resource isolation-sharing demand information of the target communication application may further include only the third communication application set or the feature information of the third communication application set, or may further include only the fourth communication application set or the feature information of the fourth communication application set.

The EGMF may determine a service profile of each communication application based on the SLS of the communication application. In other words, the EGMF may convert the SLS of the communication application into the service profile of the communication application. The service profile of the communication application may include the resource isolation-sharing demand information of the communication application.

It may be understood that implementations of S1001 to S1005 are merely some examples, and do not constitute a limitation. For example, the third-party entity sends the network configuration request message to the EGMF, where the network configuration request message may include the SLS of each communication application, and the SLS of the communication application may further include the safety class of the communication application and the resource isolation-sharing demand information of the communication application. **In** this case, S1001 to S1003 and S1005 may not be performed.

S1006: The EGMF sends a network slice instance allocation request message to the NSMS provision entity. Accordingly, the NSMS provision entity receives the network slice instance allocation request message from the EGMF.

The EGMF may request the NSMS provision entity to allocate a network slice instance to each communication application. For example, the EGMF may send, to the NSMS provision entity, a network slice instance allocation request message corresponding to the communication application. Each network slice instance allocation request message may be for requesting the NSMS provision entity to allocate the network slice instance to the corresponding communication application.

The target communication application is used as an example. A network slice instance allocation request message corresponding to the target communication application may include first request information. The first request information may be for requesting the NSMS provision entity to allocate a network slice instance to the target communication application. The first request information may be carried in a service profile of the target communication application.

Optionally, if the EGMF obtains the resource isolation-sharing demand information, the EGMF may further send the resource isolation-sharing demand information to the NSMS provision entity. The resource isolation-sharing demand information may be carried in the network slice instance allocation request message, or may be carried in any other possible message. This is not limited.

It may be understood that the network slice instance allocation request message is merely an example, and does not constitute a limitation. For example, the network slice instance allocation request message may alternatively be replaced with any other possible message, for example, a network slice instance update request message or a network slice instance configuration request message. In addition, for specific implementation of S1006, also refer to the related descriptions in S601. Details are not described again.

S 1007: The NSMS provision entity allocates the network slice instance to the communication application.

The NSMS provision entity may allocate, based on each received network slice instance allocation request message, the corresponding network slice instance to the communication application corresponding to the network slice instance allocation request message.

The target communication application is used as an example. The NSMS provision entity may allocate a target network slice instance to the target communication application based on the first request information. Specifically, the NSMS provision entity may use an existing network slice instance as the target network slice instance in response to determining that there is an existing network slice instance. For example, the NSMS provision entity may determine, based on the resource isolation-sharing demand information of the target communication application in the service profile of the target communication application, for example, the first communication application set or the feature information of the first communication application set, and/or the second communication application set or the feature information of the second communication application set; and the third communication application set or the feature information of the third communication application set, and/or the fourth communication application set or the feature information of the fourth communication application set, that there is an existing network slice instance that satisfies the resource isolation-sharing demand information of the target communication application, and use the existing network slice instance as the target network slice instance. The existing network slice instance is a network slice instance that has been allocated to the communication application in the first communication application set but has not been allocated to the communication application in the second communication application set. Alternatively, the NSMS provision entity may use a newly created network slice instance as the target network slice instance in response to determining that there is no existing network slice instance. For example, the NSMS provision entity may determine, based on the resource isolation-sharing demand information of the target communication application in the service profile of the target communication application, that there is no existing network slice instance that satisfies the resource isolation-sharing demand information of the target communication application. In this way, the NSMS provision entity can create, based on the resource isolation-sharing demand information of the target communication application, a network slice instance for satisfying the resource isolation-sharing demand information of the target communication application, and use the newly created network slice instance as the target network slice instance. In this case, the target network slice instance can be shared between the target communication application and the first communication application set, but cannot be shared between the target communication application and the second communication application set.

Continue to use Example 1:
The resource isolation-sharing demand information of the communication application A is shown in Table 2 above. The NSMS provision entity may allocate a network slice instance 1 to the communication application A. In this case, the network slice instance 1 can be shared between the communication applications corresponding to the class 3, the class 4, and the class 5, but cannot be shared between the communication applications corresponding to the class 1 and the class 2.

S1008: The NSMS provision entity sends a network slice subnet instance allocation request message to the NSSMS provision entity. Accordingly, the NSSMS provision entity receives the network slice subnet instance allocation request message from the NSMS provision entity.

Each network slice instance may include a network slice subnet instance. When the NSMS provision entity allocates the network slice instance to each communication application, the NSMS provision entity may further request an NSSMS provision entity corresponding to each communication application to allocate the network slice subnet instance to the communication application. For example, the NSMS provision entity may send a corresponding network slice subnet instance allocation request message to the NSSMS provision entity corresponding to the communication application. Each network slice subnet instance allocation request message may be for requesting the NSSMS provision entity to allocate the network slice subnet instance to the corresponding communication application.

The target communication application is used as an example. The network slice subnet instance allocation request message corresponding to the target communication application may include second request information, and the second request information may be for requesting the NSSMS provision entity to allocate a network slice subnet instance to the target communication application. The second request information may be carried in a slice subnet profile of the target communication application. The slice subnet profile of the target communication application may include physical resource isolation-sharing demand information of the target communication application.

The slice subnet profile of the target communication application may be determined based on the service profile of the target communication application.

The physical resource isolation-sharing demand information of the target communication application may be determined based on the resource isolation-sharing demand information of the target communication application. For example, the resource isolation-sharing demand information of the target communication application may indicate that the target communication application can share the physical network resource with the communication application corresponding to the third safety class set, but cannot share the physical network resource with the communication application corresponding to the fourth safety class set. The resource isolation-sharing demand information of the target communication application may include the information about the target communication application, the third communication application set, and the fourth communication application set.

### Continue to use Example 1:

When the resource isolation-sharing demand information of the communication application A is shown in Table 2 above, the NSMS provision entity may determine physical resource isolation-sharing demand information of the communication application A based on the resource isolation-sharing demand information of the communication application A. Details may be shown in Table 3 below.

**Table 3**

| Communication application A | Class 3 |
|---|---|
| physical_share | Class 3 and class 4 |
| physical_isolation | Class 1, class 2, and class 5 |

As shown in Table 3, the physical resource isolation-sharing demand information of the communication application A may indicate that the communication application A can share the physical network resource with the communication applications corresponding to the class 3 and the class 4, but cannot share the physical network resource with the communication applications corresponding to the class 1, the class 2, and the class 5.

Optionally, if the NSMS provision entity obtains the physical isolation implementation information, the NSMS provision entity may further send the physical isolation implementation information to the NSSMS provision entity. The physical isolation implementation information may be carried in the network slice subnet instance allocation request message, or may be carried in any other possible message. This is not limited.

It may be understood that the network slice subnet instance allocation request message is merely an example, and does not constitute a limitation. For example, the network slice subnet instance allocation request message may alternatively be replaced with any other possible message, for example, a network slice subnet instance update request message, a network slice subnet instance configuration request message, or a network slice subnet instance modification request message.

It may be further understood that one network slice instance may include a plurality of network slice subnet instances. Therefore, S 1008 may be performed for each network slice subnet instance, that is, may be performed a plurality of times.

In addition, the foregoing implementations of S1008 are merely some examples, and do not constitute a limitation. For example, the network slice subnet instance allocation request message may also include the physical resource management policy, and the NSSMS provision entity determines the resource isolation-sharing demand information of the target communication application based on the physical resource management policy.

S1009: The NSSMS provision entity allocates the network slice subnet instance to the communication application.

The NSMS provision entity may allocate, based on each received network slice subnet instance allocation request message, the corresponding network slice subnet instance to the communication application corresponding to the network slice subnet instance allocation request message.

The target communication application is used as an example. The NSSMS provision entity may allocate a target network slice subnet instance to the target communication application based on the second request information. Specifically, the NSSMS provision entity may use an existing network slice subnet instance as the target network slice subnet instance in response to determining that there is an existing network slice subnet instance. For example, the NSSMS provision entity may determine, based on the resource isolation-sharing demand information of the target communication application in the slice subnet profile of the target communication application, for example, the third communication application set or the feature information of the third communication application set, and/or the fourth communication application set or the feature information of the fourth communication application set, that there is an existing network slice subnet instance that satisfies the physical resource isolation-sharing demand information of the target communication application, and uses the existing network slice subnet instance as the target network slice subnet instance. The existing network slice subnet instance is a network slice instance that has been allocated to the communication application in the third communication application set but has not been allocated to the communication application in the fourth communication application set. Alternatively, the NSSMS provision entity may use a newly created network slice subnet instance as the target network slice subnet instance in response to determining that there is no existing network slice subnet instance. For example, the NSSMS provision entity may determine, based on the resource isolation-sharing demand information of the target communication application in the slice subnet profile of the target communication application, that there is no existing network slice subnet instance that satisfies the physical resource isolation-sharing demand information of the target communication application. **In** this way, the NSSMS provision entity can create a network slice subnet instance for satisfying the physical resource isolation-sharing demand information of the target communication application, and use the newly created network slice subnet instance as the target network slice subnet instance. In this case, the target network slice subnet instance can be shared between the target communication application and the third communication application set, but cannot be shared between the target communication application and the fourth communication application set.

Continue to use Example 1:
The physical resource isolation-sharing demand information of the communication application A is shown in Table 3 above. The NSMS provision entity may allocate a network slice subnet instance 1 to the communication application A. In this case, a physical network resource associated with the network slice subnet instance 1 can be shared between the communication applications corresponding to the class 3 and the class 4, but cannot be shared between the communication applications corresponding to the class 3 and the class 4 and the communication applications corresponding to the class 1, the class 2, and the class 5.

Optionally, when the NSSMS provision entity obtains the physical isolation implementation information, the NSSMS provision entity may further allocate the network slice subnet instance to each network slice instance in the manner indicated by the physical isolation implementation information. Alternatively, if the NSSMS provision entity does not obtain the physical isolation implementation information, the NSSMS provision entity may allocate the network slice subnet instance to each network slice instance in a default manner. For example, the network slice subnet instance is implemented by using the physical network resource in the different time periods by default, or the network slice subnet instance is implemented by using the different physical network resources by default.

S1010: The NSSMS provision entity sends a network slice subnet instance allocation response message to the NSMS provision entity. Accordingly, the NSMS provision entity receives the network slice subnet instance allocation response message from the NSSMS provision entity.

The NSSMS provision entity may return a corresponding network slice subnet instance allocation response message to the NSMS provision entity for each received network slice subnet instance allocation request message. The network slice subnet instance allocation response message may include information about a network slice subnet instance that the network slice subnet instance allocation request message is for requesting to allocate, to indicate that allocation of the network slice subnet instance is completed. The target network slice subnet instance is used as an example. Information about the target network slice subnet instance may be an identifier of the target network slice subnet instance.

It may be understood that, because allocating the network slice instance also includes allocating the network slice subnet instance in the network slice instance, S1007 may alternatively be understood as including S1008 to S1010.

S1011: The NSMS provision entity sends a network slice instance allocation response message to the EGMF. Accordingly, the EGMF receives the network slice instance allocation response message from the NSMS provision entity.

For each network slice instance allocated by the NSMS provision entity, if the NSMS provision entity determines that the allocation of the network slice subnet instance in the network slice instance is completed, the NSMS provision entity sends, to the EGMF, a network slice instance allocation response message corresponding to the network slice instance, where the network slice instance allocation response message may include information about the network slice instance, to indicate that the allocation of the network slice instance is completed. The target network slice instance is used as an example. Information about the target network slice instance may be an identifier of the target network slice instance.

S1012: The EGMF sends a network configuration response message to the third-party entity. Accordingly, the third-party entity receives the network configuration response message from the EGMF.

The network configuration response message may be for responding to the network configuration request message, and includes information about at least one network slice instance, for example, an identifier of each of the at least one network slice instance. The at least one network slice instance is a network slice instance allocated by the NSMS provision entity to the at least one communication application.

In addition, for specific implementation of S1011 and S1012, also refer to the related descriptions in S606. Details are not described again.

It may be understood that, in the scenario 1, the third-party entity may alternatively be replaced with a CAPIF. This is not limited. In addition, in the scenario 1, the EGMF may alternatively determine common applications having same resource isolation-sharing demand information as one group of common applications, in other words, one common application set. In this way, the EGMF may request, at a granularity of each common application set, the NSMS provision entity to allocate a network slice instance to the common application set, and the NSMS provision entity may request the NSSMS provision entity to allocate a network slice subnet instance to the common application set. A specific principle is similar to the foregoing principle. For understanding, refer to the foregoing principle. Details are not described again.

### Scenario 2:

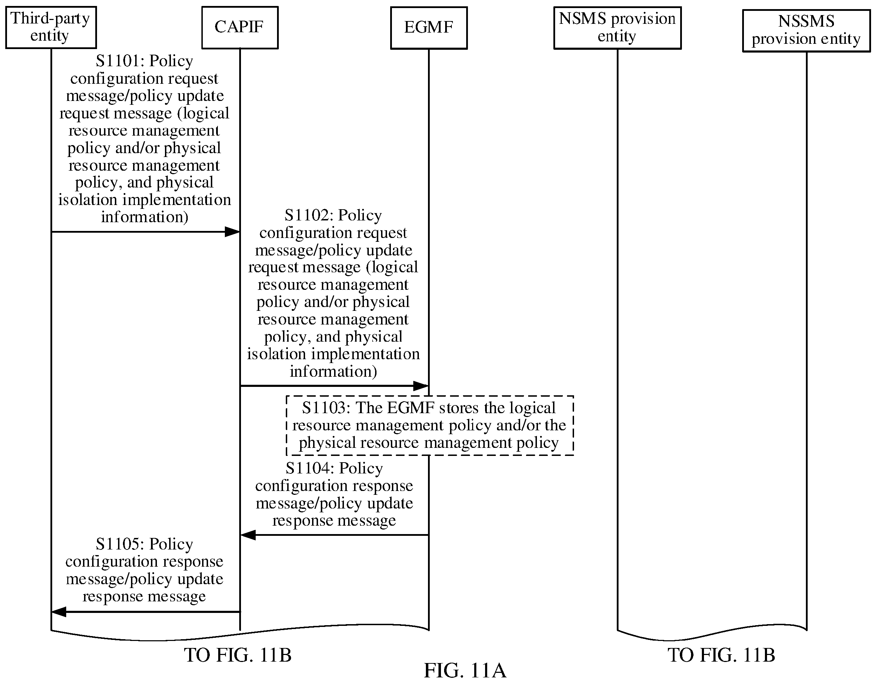

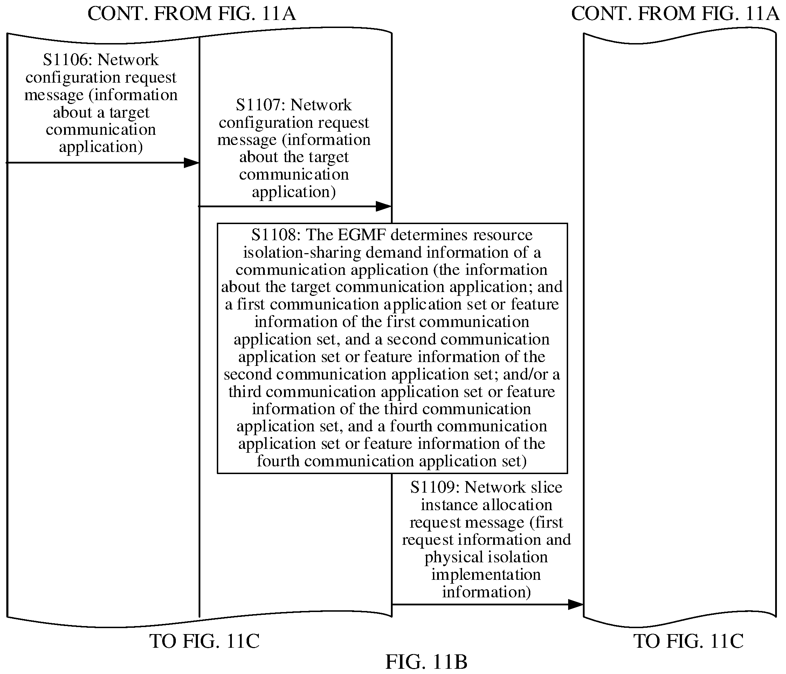

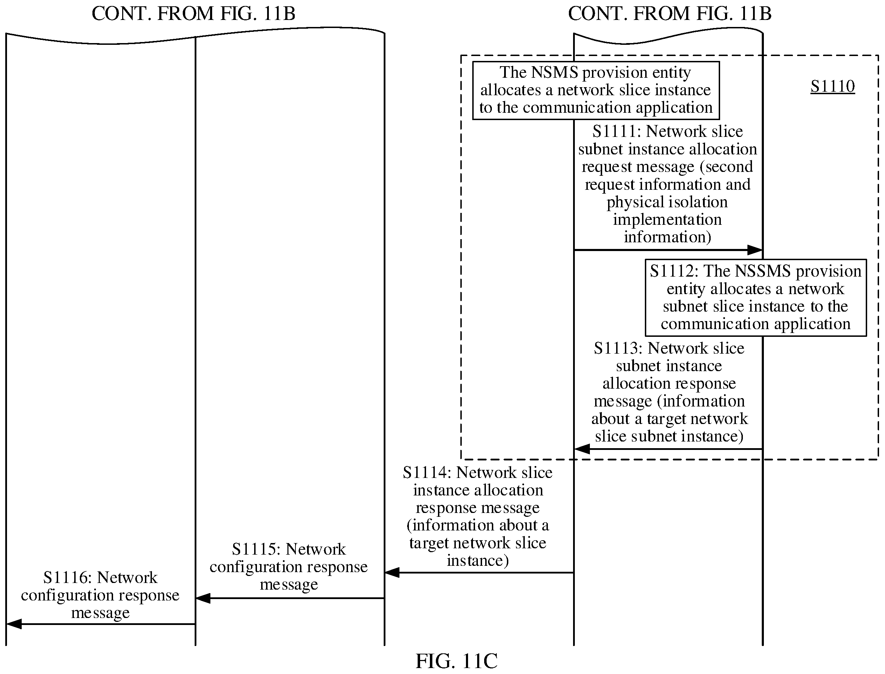

FIG. 11A, FIG. 11B, and FIG. 11C are a schematic flowchart 2 of a network resource management method according to an embodiment of this application. The scenario 2 involves interaction between a third-party entity, an EGMF, a CAPIF, an NSMS provision entity, and an NSSMS provision entity. For example, via the EGMF and the CAPIF, the third-party entity may provide the NSMS provision entity with resource isolation-sharing demand information of a communication application, and request the NSMS provision entity to allocate a network slice instance to the communication application. The resource isolation-sharing demand information of the communication application indicates, for example, communication applications with which the communication application can share a resource and communication applications with which the communication application cannot share the resource. In this way, the NSMS provision entity can allocate, to the communication application, a network slice instance that satisfies the resource isolation-sharing demand information of the communication application.

Specifically, as shown in FIG. 11A, FIG. 11B, and FIG. 11C, a procedure of the network resource management method is as follows:
S1101: The third-party entity sends a policy configuration request message/policy update request message to the CAPIF. Accordingly, the CAPIF receives the policy configuration request message/policy update request message from the third-party entity.

For specific implementation of the policy configuration request message/policy update request message, refer to the related descriptions in S1001. Details are not described again. Optionally, the policy configuration request message/policy update request message may further include physical isolation implementation information. For specific implementation, also refer to the related descriptions in S1001. Details are not described again.

S1102: The CAPIF sends the policy configuration request message/policy update request message to the EGMF. Accordingly, the EGMF receives the policy configuration request message/policy update request message from the CAPIF.

After receiving the policy configuration request message/policy update request message, the CAPIF determines that the policy configuration request message/policy update request message is a message to be sent to the EGMF, for example, determines that a destination address of the policy configuration request message/policy update request message is an address of the EGMF. In this case, the CAPIF may forward the policy configuration request message/policy update request message to the EGMF.

S1103: The EGMF stores a logical resource management policy and/or a physical resource management policy.

For specific implementation of S1103, also refer to the related descriptions in S1002. Details are not described again. In addition, S1103 is an optional step. For example, the EGMF may alternatively not store the logical resource management policy and/or the physical resource management policy.

S1104: The EGMF sends a policy configuration response message/policy update response message to the CAPIF. Accordingly, the CAPIF receives the policy configuration response message/policy update response message from the EGMF.

For specific implementation of the policy configuration response message/policy update response message, refer to the related descriptions in S1003. Details are not described again.

S1105: The CAPIF sends the policy configuration response message/policy update response message to the third-party entity. Accordingly, the third-party entity receives the policy configuration response message/policy update response message from the CAPIF.

After receiving the policy configuration response message/policy update response message, the CAPIF determines that the policy configuration response message/policy update response message is a message to be sent to the third-party entity, for example, determines that a destination address of the policy configuration response message/policy update response message is an address of the third-party entity. In this case, the CAPIF may forward the policy configuration response message/policy update response message to the third-party entity.

S1106: The third-party entity sends a network configuration request message to the CAPIF. Accordingly, the CAPIF receives the network configuration request message from the third-party entity.

For specific implementation of the network configuration request message, refer to the related descriptions in S1004. Details are not described again.

S1107: The CAPIF sends the network configuration request message to the EGMF. Accordingly, the EGMF receives the network configuration request message from the CAPIF.

After receiving the network configuration request message, the CAPIF determines that the network configuration request message is a message to be sent to the EGMF. For example, determines that a destination address of the network configuration request message is the address of the EGMF. In this case, the CAPIF may forward the network configuration request message to the EGMF.

S1108: The EGMF determines the resource isolation-sharing demand information of the communication application.

S1109: The EGMF sends a network slice instance allocation request message to the NSMS provision entity. Accordingly, the NSMS provision entity receives the network slice instance allocation request message from the EGMF.

S1110: The NSMS provision entity allocates the network slice instance to the communication application.

S1111: The NSMS provision entity sends a network slice subnet instance allocation request message to the NSSMS provision entity. Accordingly, the NSSMS provision entity receives the network slice subnet instance allocation request message from the NSMS provision entity.

S1112: The NSSMS provision entity allocates a network slice subnet instance to the communication application.

S1113: The NSSMS provision entity sends a network slice subnet instance allocation response message to the NSMS provision entity. Accordingly, the NSMS provision entity receives the network slice subnet instance allocation response message from the NSSMS provision entity.

S1114: The NSMS provision entity sends a network slice instance allocation response message to the EGMF. Accordingly, the EGMF receives the network slice instance allocation response message from the NSMS provision entity.

For specific implementation of S1108 to S1114, refer to the related descriptions in S1004 to S1011. Details are not described again.

S1115: The EGMF sends a network configuration response message to the CAPIF. Accordingly, the CAPIF receives the network configuration response message from the EGMF.

For specific implementation of the network configuration response message, refer to the related descriptions in S1012. Details are not described again.

S1116: The CAPIF sends the network configuration response message to the third-party entity. Accordingly, the third-party entity receives the network configuration response message from the CAPIF.

After receiving the network configuration response message, the CAPIF determines that the network configuration response message is a message to be sent to the third-party entity, for example, determines that a destination address of the network configuration response message is the address of the third-party entity. In this case, the CAPIF may forward the network configuration response message to the third-party entity.

It may be understood that, in the scenario 2, locations, in other words, functions, of the EGMF and the CAPIF may alternatively be interchanged. This is not limited.

### Scenario 3:

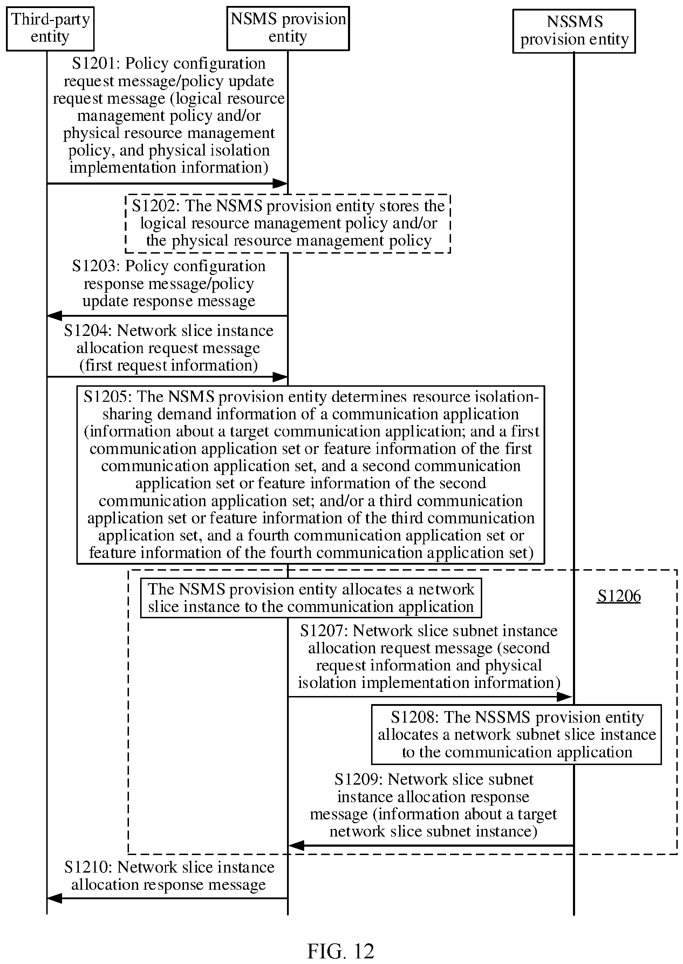

FIG. 12 is a schematic flowchart 3 of a network resource management method according to an embodiment of this application. The scenario 3 involves interaction between a third-party entity, an NSMS provision entity, and an NSSMS provision entity. For example, the third-party entity may send a logical resource management policy and/or a physical resource management policy (a common policy) to the NSMS provision entity, and request the NSMS provision entity to allocate a network slice instance to a communication application. The NSMS provision entity may determine resource isolation-sharing demand information (a service policy) of the communication application based on the logical resource management policy and/or the physical resource management policy. In this way, the NSMS provision entity can allocate, to the communication application, a network slice instance that satisfies the resource isolation-sharing demand information of the communication application.

Specifically, as shown in FIG. 12, a procedure of the network resource management method is as follows:
S1201: The third-party entity sends a policy configuration request message/policy update request message to the NSMS provision entity. Accordingly, the NSMS provision entity receives the policy configuration request message/policy update request message from the third-party entity.

The policy configuration request message/policy update request message may include the logical resource management policy and/or the physical resource management policy. For specific implementation, refer to the related descriptions in S1001. Details are not described again. Optionally, the policy configuration request message/policy update request message may further include physical isolation implementation information. For specific implementation, also refer to the related descriptions in S1001. Details are not described again.

S1202: The NSMS provision entity stores the logical resource management policy and/or the physical resource management policy.

Specific implementation in which the NSMS provision entity stores the logical resource management policy and/or the physical resource management policy is similar to that in which the EGMF stores the logical resource management policy and/or the physical resource management policy. Refer to the related descriptions in S1002. Details are not described again. **In** addition, S1202 is an optional step. For example, the NSMS provision entity may alternatively not store the logical resource management policy and/or the physical resource management policy.

S1203: The NSMS provision entity sends a policy configuration response message/policy update response message to the third-party entity. Accordingly, the third-party entity receives the policy configuration response message/policy update response message from the NSMS provision entity.

For specific implementation of S1203, refer to the related descriptions in S1003. Details are not described again.

S1204: The third-party entity sends a network slice instance allocation request message to the NSMS provision entity. Accordingly, the NSMS provision entity receives the network slice instance allocation request message from the third-party entity.

The third-party entity may request the NSMS provision entity to allocate a network slice instance to each communication application. In other words, the third-party entity may send, to the NSMS provision entity, a network slice instance allocation request message corresponding to the communication application. Each network slice instance allocation request message may be for requesting the NSMS provision entity to allocate the network slice instance to the corresponding communication application.

A target communication application is used as an example. A network slice instance allocation request message corresponding to the target communication application may include first request information, and the first request information may be for requesting the NSMS provision entity to allocate a network slice instance to the target communication application. The first request information may include an SLS of the target communication application. The SLS of the target communication application may include information about the target communication application, for example, a safety class of the target communication application.

S1205: The NSMS provision entity determines the resource isolation-sharing demand information of the communication application.

Specific implementation in which the NSMS provision entity determines the resource isolation-sharing demand information of the communication application is similar to that in which the EGMF determines the resource isolation-sharing demand information of the communication application. Refer to the related descriptions in S1005. Details are not described again.

It may be understood that S1201 to S1205 are a possible implementation, and do not constitute a limitation. For example, the third-party entity may alternatively determine resource isolation-sharing demand information of each communication application. Then, the third-party entity may send the resource isolation-sharing demand information of the communication application to the NSMS provision entity through S1204. In this case, S1201 to S1203 and S1205 may not be performed.

S1206: The NSMS provision entity allocates the network slice instance to the communication application.

S1207: The NSMS provision entity sends a network slice subnet instance allocation request message to the NSSMS provision entity. Accordingly, the NSSMS provision entity receives the network slice subnet instance allocation request message from the NSMS provision entity.

S1208: The NSSMS provision entity allocates a network slice subnet instance to the communication application.

S1209: The NSSMS provision entity sends a network slice subnet instance allocation response message to the NSMS provision entity. Accordingly, the NSMS provision entity receives the network slice subnet instance allocation response message from the NSSMS provision entity.

For specific implementation of S1206 to S1209, refer to the related descriptions in S1007 to S1010. Details are not described again.

S1210: The NSMS provision entity sends a network slice instance allocation response message to the third-party entity. Accordingly, the third-party entity receives the network slice instance allocation response message from the NSMS provision entity.

Content carried in the network slice instance allocation response message is similar to that carried in the network configuration response message in S1012. For understanding, refer to the network configuration response message. Details are not described again.

### Scenario 4:

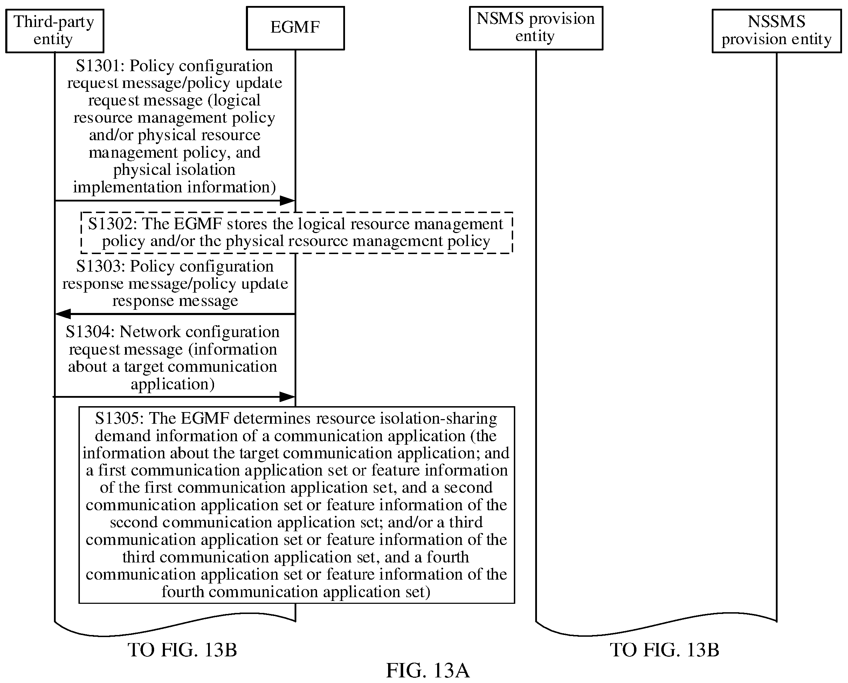

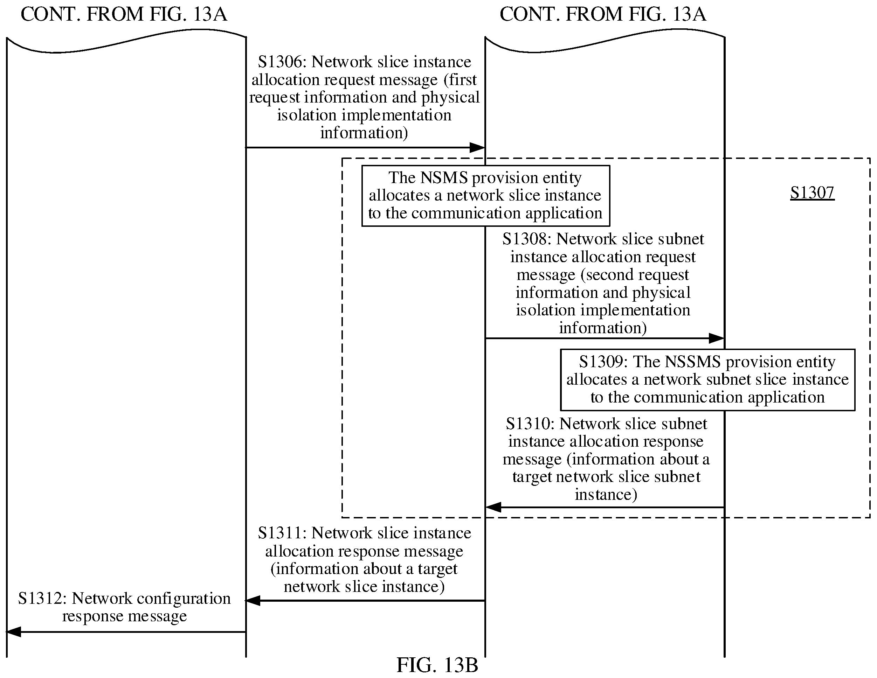

FIG. 13A and FIG. 13B are a schematic flowchart 4 of a network resource management method according to an embodiment of this application. The scenario 4 involves interaction between a third-party entity, an EGMF, an NSMS provision entity, and an NSSMS provision entity. Via the EGMF, the third-party entity may provide the NSMS provision entity with resource isolation-sharing demand information of a communication application, and request the NSMS provision entity to allocate a network slice instance to the communication application. The resource isolation-sharing demand information of the communication application indicates, for example, communication applications with which the communication application can share a resource and communication applications with which the communication application cannot share the resource. In this way, the NSMS provision entity can allocate, to the communication application, a network slice instance that satisfies the resource isolation-sharing demand information of the communication application. In addition, a difference between the scenario 4 and the scenario 1 lies in that the resource isolation-sharing demand information of the communication application in the scenario 1 is represented by using the safety class, and the resource isolation-sharing demand information of the communication application in the scenario 4 is represented by using an application identifier of the communication application.

Specifically, as shown in FIG. 13A and FIG. 13B, a procedure of the network resource management method is as follows:
S1301: The third-party entity sends a policy configuration request message/policy update request message to the EGMF. Accordingly, the EGMF receives the policy configuration request message/policy update request message from the third-party entity.

The policy configuration request message/policy update request message may include a logical resource management policy and/or a physical resource management policy.

The logical resource management policy may be for describing a plurality of communication applications that can share a network slice instance with each other (logical network resource sharing) and/or a plurality of communication applications that cannot share the network slice instance with each other (logical network resource isolation). For the communication applications, refer to the foregoing related descriptions. Details are not described again. Information about the communication applications may be for distinguishing between different communication applications. For example, the information about the communication applications may be application identifiers of the communication applications. The application identifiers may alternatively be replaced with other information that may be for distinguishing between services, for example, application features and service types. That is, different services may be different types of services, for example, meter reading services such as gas meter reading, water meter reading, and electricity meter reading, internet of vehicles services such as bicycle sharing and car sharing, internet of things services such as smart home and smart office, or security services such as home security and community security.

On this basis, the logical resource management policy may include application identifiers corresponding to the plurality of communication applications that can share the network slice instance with each other and/or application identifiers corresponding to the plurality of communication applications that cannot share the network slice instance with each other. For example, the logical resource management policy may include a first safety class set list, and the first safety class set list may include a plurality of application identifiers. In this case, the logical resource management policy may indicate that two communication applications identified by any two application identifiers that belong to a same application identifier set in the first application identifier set list can share the network slice instance with each other and that two communication applications identified by any two application identifiers that belong to different application identifier sets in the first application identifier set list cannot share the network slice instance with each other.

### Example 2:

The first application identifier set list is: Logical_serviceID_List=[(ID 1, ID 2)(ID 3, ID 4, ID 5)], where the "ID 1" may represent an "application identifier of a communication application 1", and so on. The logical resource management policy may indicate that two communication applications identified by application identifiers that belong to a same bracket can share the network slice instance with each other and that two communication applications identified by application identifiers that belong to different brackets can share the network slice instance with each other. That is, the communication application 1 and a communication application 2 can share the network slice instance with each other; any two of a communication application 3, a communication application 4, and a communication application 5 can share the network slice instance with each other; and either of the communication application 1 and the communication application 2 cannot share the network slice instance with any one of the communication application 3, the communication application 4, and the communication application 5.

The physical resource management policy may be for describing a plurality of communication applications that can share a physical network resource with each other and/or a plurality of communication applications that cannot share the physical network resource with each other. Information about the communication application may be an application feature of the communication application, for example, an application identifier. For details, refer to the foregoing related descriptions. Details are not described again.

On this basis, the physical resource management policy may include application identifiers corresponding to the plurality of communication applications that can share the physical network resource with each other and/or application identifiers corresponding to the plurality of communication applications that cannot share the physical network resource with each other. For example, the physical resource management policy may include a second application identifier set list, and the second safety class set list may also include a plurality of application identifiers. In this case, the physical resource management policy may indicate that two communication applications identified by any two application identifiers that belong to a same application identifier set in the second application identifier set list can share the network slice instance with each other and that two communication applications identified by any two application identifiers that belong to different application identifier sets in the second application identifier set list cannot share the network slice instance with each other.

Continue to use Example 2:
The second application identifier set list is: Physical_serviceID_List=[(ID 1, ID 2)(ID 3, ID 4)(ID 5)], where the "ID 1" may represent the "application identifier of the communication application 1", and so on. The physical resource management policy may indicate that two communication applications identified by application identifiers that belong to a same bracket can share the physical network resource with each other and that two communication applications identified by application identifiers that belong to different brackets can share the physical network resource with each other. That is, the communication application 1 and the communication application 2 can share the physical network resource with each other; the communication application 3 and the communication application 4 can share the physical network resource with each other; and either of the communication application 1 and the communication application 2, either of the communication application 3 and the communication application 4, and the communication application 5 cannot share the physical network resource with each other.

Optionally, the policy configuration request message/policy update request message may further include physical isolation implementation information. For details, refer to the related descriptions in S1001. Details are not described again.

It may be understood that whether the third-party entity sends the policy configuration request message or the policy update request message to the EGMF may depend on a policy sending objective of the third-party entity. For details, also refer to the related descriptions in S1001. Details are not described again.

S1302: The EGMF stores the logical resource management policy and/or the physical resource management policy.

S1303: The EGMF sends a policy configuration response message/policy update response message to the third-party entity. Accordingly, the third-party entity receives the policy configuration response message/policy update response message from the EGMF.

For specific implementation of S1302 and S1303, refer to the related descriptions in S1002 and S1003. Details are not described again.

S1304: The third-party entity sends a network configuration request message to the EGMF. Accordingly, the EGMF receives the network configuration request message from the third-party entity.

The network configuration request message may be for requesting to configure a network for at least one communication application. The network configuration request message may include an SLS list, and the SLS list may include an SLS of each of the at least one communication application. For example, the SLS list may be application_network_demand_list={SLS 1, SLS 2, SLS 3, ...}.

A communication application is defined as a target communication application. An SLS of the target communication application may include information about the target communication application. For example, the information about the target communication application may include an application identifier of the target communication application. The application identifier of the target communication application may be represented by using an existing information element in the SLS, or may be represented by using a newly defined information element. This is not limited. In addition, the SLS of the target communication application may further include another parameter. For details, refer to the related descriptions of the SLS. Details are not described again.

In addition, for specific implementation of S1304, refer to the related descriptions in S1004. Details are not described again.

S1305: The EGMF determines the resource isolation-sharing demand information of the communication application.

The EGMF may determine resource isolation-sharing demand information of each communication application based on an application identifier of the communication application and the logical resource management policy and/or the physical resource management policy.

The target communication application is used as an example. The EGMF may determine resource isolation-sharing demand information of the target communication application. The resource isolation-sharing demand information of the target communication application may indicate: The target communication application can share the network slice instance with a communication application identified by an application identifier that belongs to a first application identifier set, but cannot share the network slice instance with a communication application identified by an application identifier that belongs to a second application identifier set; and/or the target communication application can share the physical network resource with a communication application identified by an application identifier that belongs to a third application identifier set, but cannot share the physical network resource with a communication application identified by an application identifier that belongs to a fourth application identifier set. For example, the resource isolation-sharing demand information of the target communication application may include the information about the target communication application. The resource isolation-sharing demand information of the target communication application may further include a first communication application set or feature information of the first communication application set, and a second communication application set or feature information of the second communication application set; and/or a third communication application set or feature information of the third communication application set, and a fourth communication application set or feature information of the fourth communication application set.

The first communication application set may indicate the communication application identified by the application identifier that belongs to the first application identifier set. The second communication application set may indicate the communication application identified by the application identifier that belongs to the second application identifier set. The third communication application set may indicate the communication application identified by the application identifier that belongs to the third application identifier set. The fourth communication application set may indicate the communication application identified by the application identifier that belongs to the fourth application identifier set. In this case, the resource isolation-sharing demand information of the target communication application may alternatively be understood as indicating: The target communication application can share the network slice instance with the communication application in the first communication application set, but cannot share the network slice instance with the communication application in the second communication application set; and/or the target communication application can share the physical network resource with the communication application in the third communication application set, but cannot share the physical network resource with the communication application in the fourth communication application set.

Alternatively, the feature information of the first communication application set is for describing a feature of the first communication application set, and may include an application feature, namely, a first application feature set, of the communication application that can share the network slice instance with the target communication application, or may include information such as a service type of the communication application that can share the network slice instance with the target communication application. The feature information of the second communication application set is for describing a feature of the second communication application set, and may include an application feature, namely, a second application feature set, of the communication application that cannot share the network slice instance with the target communication application, or may include information such as a service type of the communication application that cannot share the network slice instance with the target communication application. The feature information of the third communication application set is for describing a feature of the third communication application set, and may include an application feature, namely, the third application feature set, of the communication application that can share the physical network resource with the target communication application, or may include information such as a service type of the communication application that can share the physical network resource with the target communication application. The feature information of the fourth communication application set is for describing a feature of the fourth communication application set, and may include an application feature, namely, a fourth application feature set, of the communication application that cannot share the physical network resource with the target communication application, or may include information such as a service type of the communication application that cannot share the physical network resource with the target communication application. In this case, the resource isolation-sharing demand information of the target communication application may alternatively be understood as being for describing: The application feature of the target communication application can share the network slice instance with the first application feature set, but cannot share the network slice instance with the second application feature set; and/or the application feature of the target communication application can share the physical network resource with the third application feature set, but cannot share the physical network resource with the fourth application feature set.

Continue to use Example 2:
The first application identifier set list is: Logical_serviceID_List=[(ID 1, ID 2)(ID 3, ID 4, ID 5)], and the second application identifier set list is: Physical_serviceID_List=[(ID 1, ID 2)(ID 3, ID 4)(ID 5)]. Resource isolation-sharing demand information of the communication application 3 may be shown in Table 4 below.

**Table 4**

| Communication application 3 | ID 3 |
|---|---|
| logical_share | ID 3, ID 4, and ID 5 |
| logical_isolation | ID 1 and ID 2 |
| physical_share | ID 3 and ID 4 |
| physical_isolation | ID 1, ID 2, and ID 5 |

As shown in Table 4, resource isolation-sharing demand information of the communication application 3 may indicate: The communication application 3 can share the network slice instance with the communication application 4 and the communication application 5, but cannot share the network slice instance with the communication application 1 and the communication application 2; and the communication application 1 can share the physical network resource with the communication application 4, but cannot share the physical network resource with the communication application 1, the communication application 2, and the communication application 5.

The EGMF may determine a service profile of each communication application based on the SLS of the communication application. In other words, the EGMF may convert the SLS of the communication application into the service profile of the communication application. The service profile of the communication application may further include the resource isolation-sharing demand information of the communication application.

In addition, for specific implementation of S1305, also refer to the related descriptions in S1005. Details are not described again.

S1306: The EGMF sends a network slice instance allocation request message to the NSMS provision entity. Accordingly, an NSMS sends the network slice instance allocation request message to an EGMF provision entity.

S1307: The NSMS provision entity allocates the network slice instance to the communication application.

For specific implementation of S1306 and S1307, also refer to the related descriptions in S1006 and S1007. Details are not described again.

S1308: The NSMS provision entity sends a network slice subnet instance allocation request message to the NSSMS provision entity. Accordingly, the NSSMS provision entity receives the network slice subnet instance allocation request message from the NSMS provision entity.

Each network slice instance may include a network slice subnet instance. The NSSMS provision entity may send a corresponding network slice subnet instance allocation request message to an NSSMS provision entity corresponding to each communication application. Each network slice subnet instance allocation request message may be for requesting the NSSMS provision entity to allocate the network slice subnet instance to the corresponding communication application.

The target communication application is used as an example. A network slice instance allocation request message corresponding to the target communication application may include second request information. Specific implementation of the second request information is similar to the related descriptions in S1008. For understanding, refer to the related descriptions. Details are not described again. However, a difference between the second request information and the related descriptions in S1008 lies in that the resource isolation-sharing demand information of the target communication application in the second request information may indicate the target communication application can share the physical network resource with the communication application identified by the application identifier that belongs to the third application identifier set, but cannot share the physical network resource with the communication application identified by the application identifier that belongs to the fourth application identifier set.

Continue to use Example 2:
When the resource isolation-sharing demand information of the communication application 3 is shown in Table 4 above, the NSMS provision entity may determine physical resource isolation-sharing demand information of the communication application 3 based on the resource isolation-sharing demand information of the communication application 3. Details may be shown in Table 5 below.

**Table 5**

| Communication application 3 | ID 3 |
|---|---|
| physical_share | ID 3 and ID 4 |
| physical_isolation | ID 1, ID 2, and ID 5 |

As shown in Table 5, the physical resource isolation-sharing demand information of the communication application 3 may indicate that the communication application 3 can share the physical network resource with the communication application 4, but cannot share the physical network resource with the communication application 1, the communication application 2, and the communication application 5.

In addition, for specific implementation of S1308, also refer to the related descriptions in S1008. Details are not described again.

S1309: The NSSMS provision entity allocates a network slice subnet instance to the communication application.

S1310: The NSSMS provision entity sends a network slice subnet instance allocation response message to the NSMS provision entity. Accordingly, the NSMS provision entity receives the network slice subnet instance allocation response message from the NSSMS provision entity.

S1311: The NSMS provision entity sends a network slice instance allocation response message to the EGMF. Accordingly, the EGMF receives the network slice instance allocation response message from the NSMS provision entity.

S1312: The EGMF sends a network configuration response message to the third-party entity. Accordingly, the third-party entity receives the network configuration response message from the EGMF.

For specific implementation of S1309 to S1312, also refer to the related descriptions in S1009 to S1012. Details are not described again.

It may be understood that, in the scenario 4, the third-party entity may alternatively be replaced with a CAPIF. This is not limited. In addition, in the scenario 4, the EGMF may alternatively determine common applications having same resource isolation-sharing demand information as one group of common applications, in other words, one common application set. In this way, the EGMF may request, at a granularity of each common application set, the NSMS provision entity to allocate a network slice instance to the common application set, and the NSMS provision entity may request the NSSMS provision entity to allocate a network slice subnet instance to the common application set. A specific principle is similar to the foregoing principle. For understanding, refer to the foregoing principle. Details are not described again.

### Scenario 5:

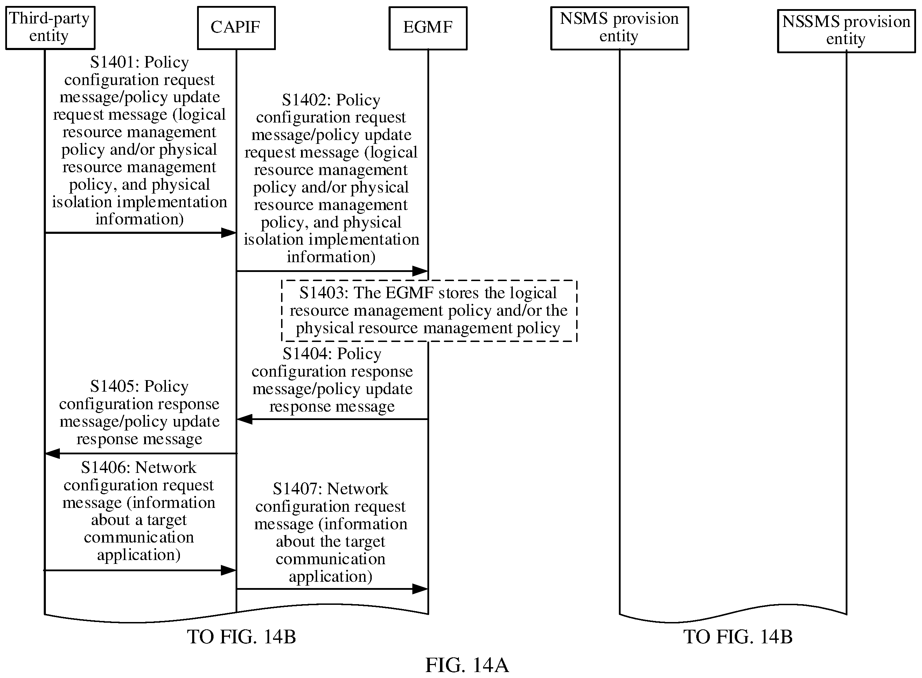

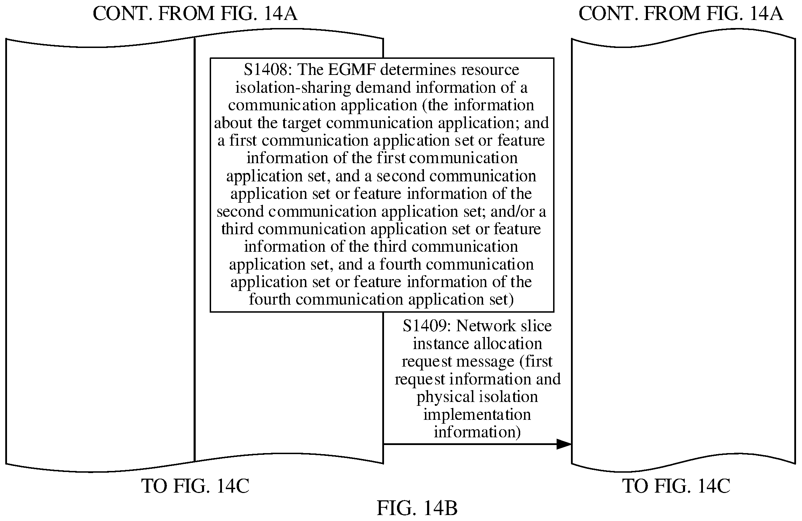

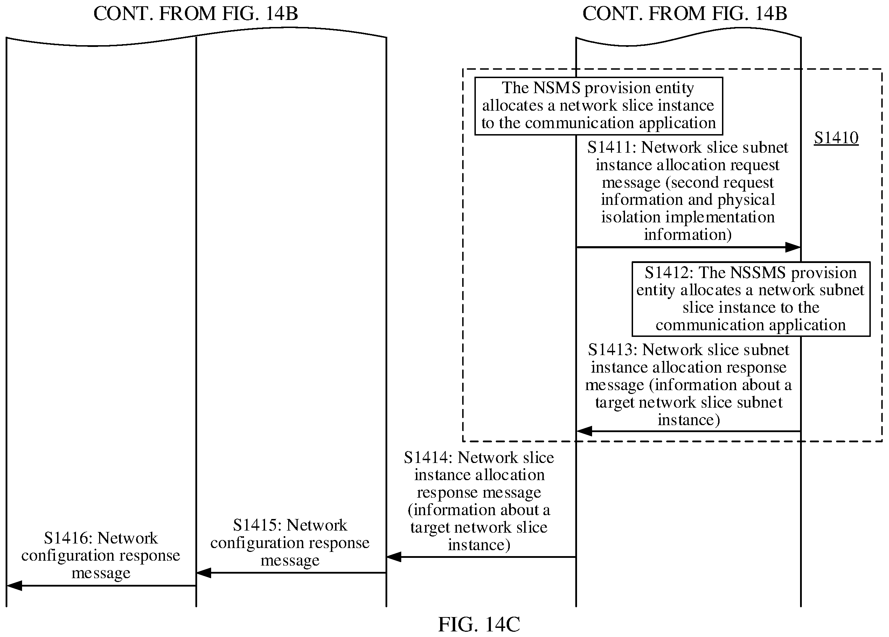

FIG. 14A, FIG. 14B, and FIG. 14C are a schematic flowchart 5 of a network resource management method according to an embodiment of this application. The scenario 5 involves interaction between a third-party entity, an EGMF, a CAPIF, an NSMS provision entity, and an NSSMS provision entity. Similar to the scenario 4, resource isolation-sharing demand information of a communication application in the scenario 5 may be represented by using an application identifier of the communication application. In the scenario 5, via the EGMF and the CAPIF, the third-party entity may provide the NSMS provision entity with the resource isolation-sharing demand information of the communication application, and request the NSMS provision entity to allocate a network slice instance to the communication application. The resource isolation-sharing demand information of the communication application indicates, for example, communication applications with which the communication application can share a resource and communication applications with which the communication application cannot share the resource. In this way, the NSMS provision entity can allocate, to the communication application, a network slice instance that satisfies the resource isolation-sharing demand information of the communication application.

Specifically, as shown in FIG. 14A, FIG. 14B, and FIG. 14C, a procedure of the network resource management method is as follows:
S1401: The third-party entity sends a policy configuration request message/policy update request message to the CAPIF. Accordingly, the CAPIF receives the policy configuration request message/policy update request message from the third-party entity.

For specific implementation of the policy configuration request message/policy update request message, refer to the related descriptions in S1301. Details are not described again. Optionally, the policy configuration request message/policy update request message may further include physical isolation implementation information. For specific implementation, also refer to the related descriptions in S1301. Details are not described again.

S1402: The CAPIF sends the policy configuration request message/policy update request message to the EGMF. Accordingly, the EGMF receives the policy configuration request message/policy update request message from the CAPIF.

After receiving the policy configuration request message/policy update request message, the CAPIF determines that the policy configuration request message/policy update request message is a message to be sent to the EGMF, for example, determines that a destination address of the policy configuration request message/policy update request message is an address of the EGMF. In this case, the CAPIF may forward the policy configuration request message/policy update request message to the EGMF.

S1403: The EGMF stores a logical resource management policy and/or a physical resource management policy.

For specific implementation of S1403, also refer to the related descriptions in S1302. Details are not described again.

S1404: The EGMF sends a policy configuration response message/policy update response message to the CAPIF. Accordingly, the CAPIF receives the policy configuration response message/policy update response message from the EGMF.

For specific implementation of the policy configuration response message/policy update response message, refer to the related descriptions in S1303. Details are not described again.

S1405: The CAPIF sends the policy configuration response message/policy update response message to the third-party entity. Accordingly, the third-party entity receives the policy configuration response message/policy update response message from the CAPIF.

After receiving the policy configuration response message/policy update response message, the CAPIF determines that the policy configuration response message/policy update response message is a message to be sent to the third-party entity, for example, determines that a destination address of the policy configuration response message/policy update response message is an address of the third-party entity. In this case, the CAPIF may forward the policy configuration response message/policy update response message to the third-party entity.

S1406: The third-party entity sends a network configuration request message to the CAPIF. Accordingly, the CAPIF receives the network configuration request message from the third-party entity.

For specific implementation of the network configuration request message, refer to the related descriptions in S1304. Details are not described again.

S1407: The CAPIF sends the network configuration request message to the EGMF. Accordingly, the EGMF receives the network configuration request message from the CAPIF.

After receiving the network configuration request message, the CAPIF determines that the network configuration request message is a message to be sent to the EGMF. For example, determines that a destination address of the network configuration request message is the address of the EGMF. In this case, the CAPIF may forward the network configuration request message to the EGMF.

S1408: The EGMF determines the resource isolation-sharing demand information of the communication application.

S1409: The EGMF sends a network slice instance allocation request message to the NSMS provision entity. Accordingly, an NSMS sends the network slice instance allocation request message to an EGMF provision entity.

S1410: The NSMS provision entity allocates the network slice instance to the communication application.

S1411: The NSMS provision entity sends a network slice subnet instance allocation request message to the NSSMS provision entity. Accordingly, the NSSMS provision entity receives the network slice subnet instance allocation request message from the NSMS provision entity.

S1412: The NSSMS provision entity allocates a network slice subnet instance to the communication application.

S1413: The NSSMS provision entity sends a network slice subnet instance allocation response message to the NSMS provision entity. Accordingly, the NSMS provision entity receives the network slice subnet instance allocation response message from the NSSMS provision entity.

S1414: The NSMS provision entity sends a network slice instance allocation response message to the EGMF. Accordingly, the EGMF receives the network slice instance allocation response message from the NSMS provision entity.

For specific implementation of S1408 to S1414, refer to the related descriptions in S1304 to S1311. Details are not described again.

S1415: The EGMF sends a network configuration response message to the CAPIF. Accordingly, the CAPIF receives the network configuration response message from the EGMF.

For specific implementation of the network configuration response message, refer to the related descriptions in S1312. Details are not described again.

S1416: The CAPIF sends the network configuration response message to the third-party entity. Accordingly, the third-party entity receives the network configuration response message from the CAPIF.

After receiving the network configuration response message, the CAPIF determines that the network configuration response message is a message to be sent to the third-party entity, for example, determines that a destination address of the network configuration response message is the address of the third-party entity. In this case, the CAPIF may forward the network configuration response message to the third-party entity.

It may be understood that, in the scenario 5, locations, in other words, functions, of the EGMF and the CAPIF may alternatively be interchanged. This is not limited.

### Scenario 6:

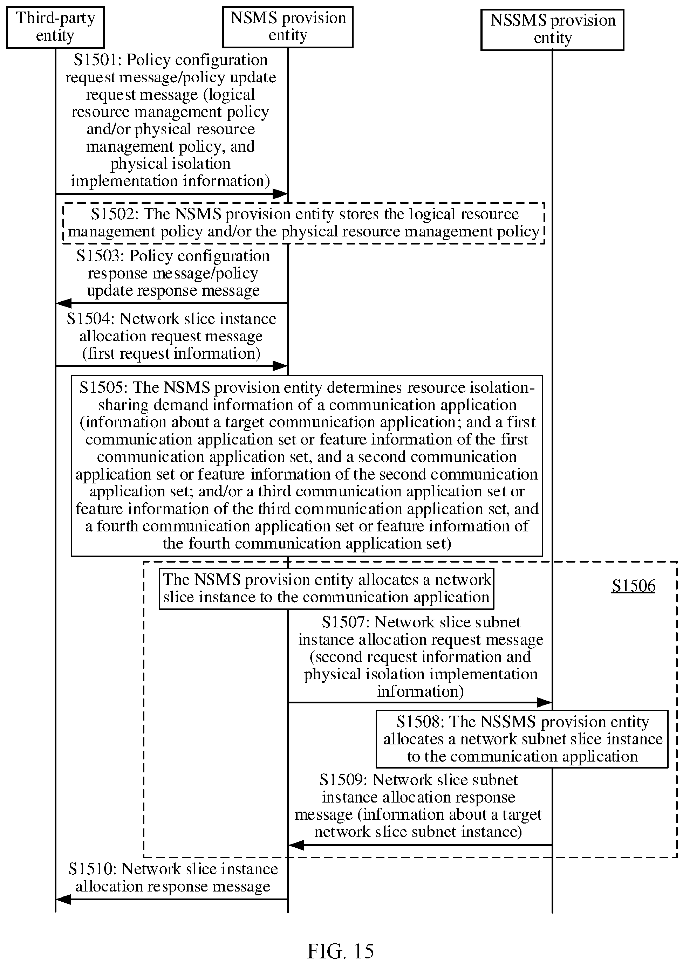

FIG. 15 is a schematic flowchart 6 of a network resource management method according to an embodiment of this application. The scenario 6 involves interaction between a third-party entity, an NSMS provision entity, and an NSSMS provision entity. Similar to the scenario 4, resource isolation-sharing demand information of a communication application in the scenario 6 may be represented by using an application identifier of the communication application. **In** the scenario 6, the third-party entity may send a logical resource management policy and/or a physical resource management policy (a common policy) to the NSMS provision entity, and request the NSMS provision entity to allocate a network slice instance to the communication application. The NSMS provision entity may determine the resource isolation-sharing demand information (a service policy) of the communication application based on the logical resource management policy and/or the physical resource management policy. In this way, the NSMS provision entity can allocate, to the communication application, a network slice instance that satisfies the resource isolation-sharing demand information of the communication application.

Specifically, as shown in FIG. 12, a procedure of the network resource management method is as follows:
S1501: The third-party entity sends a policy configuration request message/policy update request message to the NSMS provision entity. Accordingly, the NSMS provision entity receives the policy configuration request message/policy update request message from the third-party entity.

The policy configuration request message/policy update request message may include the logical resource management policy and/or the physical resource management policy. For specific implementation, refer to the related descriptions in S1301. Details are not described again. Optionally, the policy configuration request message/policy update request message may further include physical isolation implementation information. For specific implementation, also refer to the related descriptions in S1301. Details are not described again.

S1502: The NSMS provision entity stores the logical resource management policy and/or the physical resource management policy.

Specific implementation in which the NSMS provision entity stores the logical resource management policy and/or the physical resource management policy is similar to that in which the EGMF stores the logical resource management policy and/or the physical resource management policy. Refer to the related descriptions in S1302. Details are not described again.

S1503: The NSMS provision entity sends a policy configuration response message/policy update response message to the third-party entity. Accordingly, the third-party entity receives the policy configuration response message/policy update response message from the NSMS provision entity.

For specific implementation of S1503, refer to the related descriptions in S1303. Details are not described again.

S1504: The third-party entity sends a network slice instance allocation request message to the NSMS provision entity. Accordingly, the NSMS provision entity receives the network slice instance allocation request message from the third-party entity.

The third-party entity may request the NSMS provision entity to allocate a network slice instance to each communication application. In other words, the third-party entity may send, to the NSMS provision entity, a network slice instance allocation request message corresponding to the communication application. Each network slice instance allocation request message may be for requesting the NSMS provision entity to allocate the network slice instance to the corresponding communication application.

A target communication application is used as an example. A network slice instance allocation request message corresponding to the target communication application may include first request information, and the first request information may be for requesting the NSMS provision entity to allocate a network slice instance to the target communication application. The first request information may include an SLS of the target communication application. The SLS of the target communication application may include information about the target communication application, for example, an application identifier of the target communication application.

S1505: The NSMS provision entity determines the resource isolation-sharing demand information of the communication application.

Specific implementation in which the NSMS provision entity determines the resource isolation-sharing demand information of the communication application is similar to that in which the EGMF determines the resource isolation-sharing demand information of the communication application. Refer to the related descriptions in S1305. Details are not described again.

It may be understood that S1501 to S1505 are a possible implementation, and do not constitute a limitation. For example, the third-party entity may alternatively determine resource isolation-sharing demand information of each communication application. Then, the third-party entity may send the resource isolation-sharing demand information of the communication application to the NSMS provision entity through S1504. In this case, S1501 to S1503 and S1505 may not be performed.

S1506: The NSMS provision entity allocates the network slice instance to the communication application.

S1507: The NSMS provision entity sends a network slice subnet instance allocation request message to the NSSMS provision entity. Accordingly, the NSSMS provision entity receives the network slice subnet instance allocation request message from the NSMS provision entity.

S1508: The NSSMS provision entity allocates a network slice subnet instance to the communication application.

S1509: The NSSMS provision entity sends a network slice subnet instance allocation response message to the NSMS provision entity. Accordingly, the NSMS provision entity receives the network slice subnet instance allocation response message from the NSSMS provision entity.

For specific implementation of S1506 to S1509, refer to the related descriptions in S1307 to S1310. Details are not described again.

S1510: The NSMS provision entity sends a network slice instance allocation response message to the third-party entity. Accordingly, the third-party entity receives the network slice instance allocation response message from the NSMS provision entity.

Content carried in the network slice instance allocation response message is similar to that carried in the network configuration response message in S1312. For understanding, refer to the network configuration response message. Details are not described again.

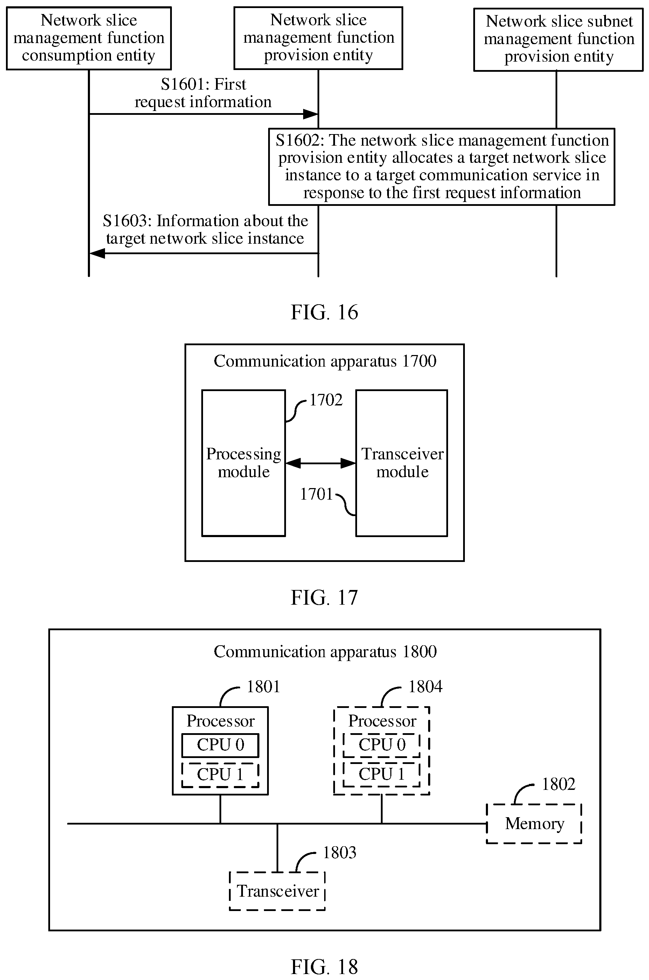

With reference to FIG. 10A to FIG. 15, the foregoing describes in detail procedures, in various scenarios, of the network resource management method provided in embodiments of this application. With reference to FIG. 16, the following describes an overall procedure of the network resource management method.

FIG. 16 is a schematic flowchart 7 of the network resource management method. The communication method mainly involves interaction between a network slice management function consumption entity, a network slice management function provision entity, and a network slice subnet management function provision entity. The network slice management function consumption entity may be the foregoing EGMF, CAPIF, or third-party server, the network slice management function provision entity may be the foregoing NSMS provision entity, and the network slice subnet management function provision entity may be the foregoing NSSMS provision entity.

As shown in FIG. 16, a procedure of the communication method is as follows:
S1601: The network slice management function consumption entity sends first request information to the network slice management function provision entity. Accordingly, the network slice management function provision entity receives the first request information from the network slice management function consuming entity.

The first request information may be for requesting the network slice management function provision entity to allocate a network slice instance to a target communication application.

In a possible manner, the first request information may include information about the target communication application, and is for distinguishing between the target communication application and another communication application. For example, the information about the target communication application may include a safety class of the target communication application. Alternatively, the information about the target communication application may include an application identifier of the target communication application. In this case, the network slice management function consumption entity may further obtain a safety class of the target communication application based on the application identifier of the target communication application included in the information about the target communication application. Alternatively, the network slice management function consumption entity may not need to obtain a safety class of the target communication application, but directly use the application identifier of the target communication application, to perform a subsequent procedure of determining a communication application set or feature information of the communication application set.

The network slice management function provision entity may obtain a first communication application set or feature information of the first communication application set, and/or a second communication application set or feature information of the second communication application set; and/or the network slice management function provision entity may alternatively obtain a third communication application set or feature information of the third communication application set, and/or a fourth communication application set or feature information of the fourth communication application set. For example, the network slice management function provision entity may determine the first communication application set or the feature information of the first communication application set, and/or the second communication application set or the feature information of the second communication application set based on the information about the target communication application (for example, the safety class or the application identifier of the target communication application) and a logical resource management policy; and/or the network slice management function provision entity may determine the third communication application set or the feature information of the third communication application set, and/or the fourth communication application set or the feature information of the fourth communication application set based on the information about the target communication application, (for example, the safety class or the application identifier of the target communication application) and a physical resource management policy.

The logical resource management policy may be for describing a plurality of communication applications that can share a network slice instance with each other and/or a plurality of communication applications that cannot share the network slice instance with each other.

### Case 1: the safety class of the target communication application.

The logical resource management policy may specifically include at least one safety class corresponding to the plurality of communication applications that can share the network slice instance with each other and/or at least two safety classes corresponding to the plurality of communication applications that cannot share the network slice instance with each other, so that a logical resource isolation-sharing relationship between the plurality of communication applications can be indicated by one or more safety classes, to improve indication efficiency and reduce communication overheads. For example, the logical resource management policy may include a first safety class set list, and the logical resource management policy indicates that any two communication applications corresponding to safety classes in a same safety class set in the first safety class set list can share the network slice instance with each other and that any two communication applications corresponding to safety classes in different safety class sets in the first safety class set list cannot share the network slice instance with each other. That is, the communication applications corresponding to the different safety classes may share the network slice instance, to improve resource utilization; or may be incapable of sharing the network slice instance, to ensure service security. It can be learned that the logical resource management policy may be a common policy applicable to the plurality of communication applications. In this case, the network slice management function provision entity can allocate a target network slice instance to the target communication application based on the common policy, to improve solution flexibility. For details, refer to related descriptions of S 1602. Details are not described again.

### Case 2: the application identifier of the target communication application.

The logical resource management policy may specifically include application identifiers corresponding to the plurality of communication applications that can share the network slice instance with each other and/or application identifiers corresponding to the plurality of communication applications that cannot share the network slice instance with each other. That is, a logical resource isolation-sharing relationship between each communication application and another communication application may be flexibly indicated by the application identifiers. For example, the logical resource management policy includes a first application identifier set list, and the logical resource management policy indicates that two communication applications identified by any two application identifiers that belong to a same application identifier set in the first application identifier set list can share the network slice instance with each other and that two communication applications identified by any two application identifiers that belong to different application identifier sets in the first application identifier set list cannot share the network slice instance with each other. That is, communication applications identified by application identifiers that belong to the different application identifier sets may share the network slice instance, to improve resource utilization; or may be incapable of sharing the network slice instance, to ensure service security.

On this basis, the first communication application set may be a set of communication applications that can share the network slice instance with the target communication application, the second communication application set is a set of communication applications that cannot share the network slice instance with the target communication application, and neither the first communication application set nor the second communication application set is an empty set.

Alternatively, the feature information of the first communication application set may include a safety class of a communication application that can share the network slice instance with the target communication application (corresponding to Case 1), and the feature information of the second communication application set may include a safety class of a communication application that cannot share the network slice instance with the target communication application (corresponding to Case 1). Alternatively, the feature information of the first communication application set may include an application feature, for example, the foregoing application identifier, of a communication application that can share the network slice instance with the target communication application (corresponding to Case 2), and the feature information of the second communication application set may include an application characteristic of a communication application that cannot share the network slice instance with the target communication application (corresponding to Case 2). It may be understood that, because the network slice management function provision entity may not be aware of a specific communication application, a resource isolation-sharing relationship between the target communication application and a plurality of communication applications may be represented by using safety classes or application features, to ensure that the network slice management function provision entity can identify the target communication application.

The physical resource management policy may be for describing a plurality of communication applications that can share a physical network resource with each other and/or a plurality of communication applications that cannot share the physical network resource with each other.

### Case 1: the safety class of the target communication application.

The physical resource management policy may specifically include at least one safety class corresponding to the plurality of communication applications that can share the physical network resource with each other and/or at least two safety classes corresponding to the plurality of communication applications that cannot share the physical network resource with each other, so that a physical resource isolation-sharing relationship between the plurality of communication applications can be indicated by one or more safety classes, to improve indication efficiency and reduce communication overheads. For example, the physical resource management policy includes a second safety class set list, and the physical resource management policy indicates that any two communication applications corresponding to safety classes in a same safety class set in the second safety class set list can share the physical network resource with each other and that any two communication applications corresponding to safety classes in different safety class sets in the second safety class set list cannot share the physical network resource with each other. That is, the communication applications corresponding to the different safety classes may share the physical network resource, to improve resource utilization; or may be incapable of sharing the physical network resource, to ensure service security. It can be learned that the physical resource management policy may be a common policy applicable to the plurality of communication applications. In this case, the network slice management function provision entity can allocate, to the target communication application based on the common policy, a physical network resource associated with a target network slice instance, to improve solution flexibility. For details, refer to related descriptions of S1602. Details are not described again.

### Case 2: the application identifier of the target communication application.

The physical resource management policy may specifically include application identifiers corresponding to the plurality of communication applications that can share the physical network resource with each other and/or application identifiers corresponding to the plurality of communication applications that cannot share the physical network resource with each other. That is, a physical resource isolation-sharing relationship between each communication application and another communication application may be flexibly indicated by the application identifiers. For example, the physical resource management policy includes a second application identifier set list, and the physical resource management policy indicates that two communication applications identified by any two application identifiers that belong to a same application identifier set in the second application identifier set list can share a network slice instance with each other and that two communication applications identified by any two application identifiers that belong to different application identifier sets in the second application identifier set list cannot share the network slice instance with each other. That is, communication applications identified by application identifiers that belong to the different application identifier sets may share the physical network resource, to improve resource utilization; or may be incapable of sharing the physical network resource, to ensure service security.

On this basis, the third communication application set may be a set of communication applications that can share the physical network resource associated with the network slice instance with the target communication application, the fourth communication application set may be a set of communication applications that cannot share the physical network resource associated with the network slice instance with the target communication application, and neither the third communication application set nor the fourth communication application set is an empty set.

Alternatively, the feature information of the third communication application set may include a safety class of a communication application that can share the physical network resource with the target communication application (corresponding to Case 1), and the feature information of the fourth communication application set may include a safety class of a communication application that cannot share the physical network resource with the target communication application (corresponding to Case 1). Alternatively, the feature information of the third communication application set may include an application feature, for example, an application identifier, of a communication application that can share the physical network resource with the target communication application (corresponding to Case 2), and the feature information of the fourth communication application set may include an application feature, for example, an application identifier, of a communication application that cannot share the physical network resource with the target communication application (corresponding to Case 2). It may be understood that, because the network slice management function provision entity may not be aware of a specific communication application, a resource isolation-sharing relationship between the target communication application and a plurality of communication applications may be represented by using safety classes or application features, to ensure that the network slice management function provision entity can identify the target communication application.

Optionally, the first request information may include the logical resource management policy and/or the physical resource management policy. That is, the logical resource management policy and/or the physical resource management policy and the information about the target communication application may be carried in a same piece of information, to improve communication efficiency. Alternatively, the network slice management function consumption entity sends a policy configuration request message or a policy update request message to the network slice management function provision entity. Accordingly, the network slice management function provision entity receives the policy configuration request message or the policy update request message from the network slice management function consumption entity. The policy configuration request message or the policy update request message includes the logical resource management policy and/or the physical resource management policy. That is, the logical resource management policy and/or the physical resource management policy and the information about the target communication application may be carried in different messages, to improve communication flexibility.

After receiving the logical resource management policy and/or the physical resource management policy, the network slice management function provision entity may further store the logical resource management policy and/or the physical resource management policy. For example, if the network slice management function provision entity obtains a corresponding policy from the network slice management function consuming entity in advance and stores the corresponding policy, for example, a historical logical resource management policy and/or physical resource management policy, the network slice management function provision entity may further release the historical logical resource management policy and/or physical resource management policy when storing a currently obtained logical resource management policy and/or physical resource management policy, to implement policy update.

**In** another possible manner, the first request information may include a first communication application set or feature information of the first communication application set, and/or a second communication application set or the feature information of the second communication application set; and/or the first request information may include a third communication application set or feature information of the third communication application set, and/or a fourth communication application set or feature information of the fourth communication application set. **In** this way, the network slice management function provision entity may obtain the first communication application set or the feature information of the first communication application set, and/or the second communication application set or the feature information of the second communication application set from the first request information, so that the network slice management function consumption entity can allocate a target network slice instance to the target communication application based on these pieces of information. For details, refer to related descriptions in S1602. Details are not described again.

The first request information may be carried in a network slice allocation request message. For example, the network slice management function consumption entity sends the network slice allocation request message to the network slice management function provision entity. Accordingly, the network slice management function provision entity receives the network slice allocation request message from the network slice management function consumption entity. Alternatively, the first request information may be carried in a network slice update request message. For example, the network slice management function consumption entity sends the network slice update request message to the network slice management function provision entity. Accordingly, the network slice management function provision entity receives the network slice update request message from the network slice management function consumption entity.

It may be understood that, for specific implementation of S1601, also refer to the related descriptions in S1001 to S1005, S1101 to S1108, S1201 to S1205, S1301 to S1305, S1401 to S1408, and S1501 to S1505. Details are not described again.

S1602: The network slice management function provision entity allocates the target network slice instance to the target communication application in response to the first request information.

The target network slice instance can be shared between the target communication application and the first communication application set, but cannot be shared between the target communication application and the second communication application set; and/or the physical network resource associated with the target network slice instance can be shared between the target communication application and the third communication application set, but cannot be shared between the target communication application and the fourth communication application set.

**In** one aspect, the network slice management function provision entity may use an existing network slice instance as the target network slice instance in response to determining that there is an existing network slice instance, to improve the resource utilization. Alternatively, the network slice management function provision entity may use a newly created network slice instance as the target network slice instance in response to determining that there is no existing network slice instance, to ensure the service security. The existing network slice instance may be a network slice instance that has been allocated to the communication application in the first communication application set but has not been allocated to the communication application in the second communication application set. In addition, the network slice management function provision entity may further correspondingly store information about the newly created network slice instance (for example, an identifier of the network slice instance) and the information (for example, the safety class, an application feature, or any other possible information) about the target communication application. In this way, when subsequently allocating a network slice instance to a communication application, the network slice management function provision entity may learn whether the network slice instance newly created this time can be further allocated to the communication application.

In this way, it may be understood that, in this embodiment of this application, a correspondence between information about a newly created network resource (a logical network resource or a physical network resource) and information (for example, a service feature and a safety class) about a communication application is stored. In addition, when a network resource is allocated to the target communication application, an appropriate network resource is allocated to the target communication application with reference to isolation-sharing demand information of the target communication application and by searching for the correspondence, so that the allocated network resource can be shared between the target communication application and some communication applications, and cannot be shared between the target communication application and some other communication applications.

In addition, the network slice management function provision entity sends second request information to the network slice subnet management function provision entity. Accordingly, the network slice subnet management function provision entity receives the second request information from the network slice management function provision entity. The second request information is for requesting the network slice subnet management function provision entity to allocate a network slice subnet instance to the target communication application.

In a possible manner, the second request information may include the information about the target communication application. For example, the information about the target communication application may include the safety class of the target communication application. Alternatively, the information about the target communication application may include the application identifier of the target communication application. In this case, a network slice subnet management function consumption entity may further obtain the safety class of the target communication application based on the application identifier of the target communication application included in the information about the target communication application. Alternatively, a network slice subnet management function consumption entity may not need to obtain the safety class of the target communication application, but directly use the application identifier of the target communication application, to perform a subsequent procedure of determining a communication application set or feature information of the communication application set.

The network slice subnet management function provision entity may obtain the third communication application set or the feature information of the third communication application set, and/or the fourth communication application set or the feature information of the fourth communication application set. For example, the network slice subnet management function provision entity may determine the third communication application set or the feature information of the third communication application set, and/or the fourth communication application set or the feature information of the fourth communication application set based on the information about the target communication application (for example, the safety class or the application identifier of the target communication application) and the physical resource management policy. For specific implementation of the physical resource management policy, the third communication application set, the feature information of the third communication application set, the fourth communication application set, and the feature information of the fourth communication application set, also refer to the related descriptions in S1601. Details are not described again.

Optionally, the second request information includes the physical resource management policy. That is, the network slice management function provision entity sends the information about the target communication application and the physical resource management policy to the network slice subnet management function provision entity via the second request information. In this case, the physical resource management policy and the information about the target communication application may be carried in a same piece of information, to improve the communication efficiency. In this way, the network slice subnet management function provision entity can determine, based on the information about the target communication application and the physical resource management policy, physical resource isolation-sharing demand information of the target communication application, for example, the third communication application set that can share the physical network resource associated with the target network slice instance with the target communication application and the fourth communication application set that cannot share the physical network resource associated with the target network slice instance with the target communication application, to allocate, to the target communication application, a target network slice subnet instance that satisfies the physical resource isolation-sharing demand information.

In another possible manner, the second request information may include the third communication application set or the feature information of the third communication application set, and/or the fourth communication application set or the feature information of the fourth communication application set. That is, the network slice management function provision entity sends the third communication application set or the feature information of the third communication application set, and/or the fourth communication application set or the feature information of the fourth communication application set to the network slice subnet management function provision entity via the second request information. In this way, the network slice subnet management function provision entity may obtain the third communication application set or the feature information of the third communication application set, and/or the fourth communication application set or the feature information of the fourth communication application set from the second request information. For specific implementation of the third communication application set, the feature information of the third communication application set, the fourth communication application set, and the feature information of the fourth communication application set, also refer to the related descriptions in S1601. Details are not described again.

The second request information may be carried in a network slice subnet allocation request message. For example, the network slice management function provision entity sends the network slice subnet allocation request message to the network slice subnet management function provision entity. Accordingly, the network slice subnet management function provision entity receives the network slice subnet allocation request message from the network slice management function provision entity. Alternatively, the second request information may be carried in a network slice subnet update request message. The network slice management function provision entity sends the network slice subnet update request message to the network slice subnet management function provision entity. Accordingly, the network slice subnet management function provision entity receives the network slice subnet update request message from the network slice management function provision entity.

The network slice subnet management function provision entity may allocate the target network slice subnet instance to the target communication application in response to the second request information. A physical network resource associated with the target network slice subnet instance can be shared between the target communication application and the third communication application set, but cannot be shared between the target communication application and the fourth communication application set. For example, the network slice subnet management function provision entity may use an existing network slice subnet instance as the target network slice subnet instance in response to determining that there is an existing network slice subnet instance, to improve the resource utilization; or the network slice subnet management function provision entity may use a newly created network slice subnet instance as the target network slice subnet instance in response to determining that there is no existing network slice instance, to ensure the service security, where a physical network resource for implementing the existing network slice subnet instance is a physical network resource that has been allocated to the communication application in the third communication application set but has not been allocated to the communication application in the fourth communication application set. In addition, the network slice subnet management function provision entity may further correspondingly store information about the newly created network slice subnet instance (for example, an identifier of the network slice subnet instance) and the information (for example, the safety class, the application feature, or the any other possible information) about the target communication application. In this way, when subsequently allocating a network slice subnet instance to a communication application, the network slice subnet management function provision entity may learn whether the network slice subnet instance newly created this time can be further allocated to the communication application.

The network slice subnet management function provision entity may send information about the target network slice subnet instance to the network slice management function provision entity, for example, an identifier of the target network slice subnet instance, to indicate the target network slice subnet instance. The information about the target network slice subnet instance may alternatively be any other possible information. This is not limited. For example, the network slice subnet management function provision entity may send a network slice subnet allocation response message to the network slice management function provision entity. Accordingly, the network slice management function provision entity may receive the network slice subnet allocation response message from the network slice subnet management function provision entity. The network slice subnet allocation response message may include the information about the target network slice subnet instance. That is, the target network slice subnet instance may be allocated by reusing a network slice subnet allocation procedure. Alternatively, the network slice subnet management function provision entity may send a network slice subnet update response message to the network slice management function provision entity. Accordingly, the network slice management function provision entity may receive the network slice subnet update response message from the network slice subnet management function provision entity. The network slice subnet update response message may include the information about the target network slice subnet instance. That is, the target network slice subnet instance may be allocated by reusing a network slice subnet update procedure.

It may be understood that, for specific implementation of S1602, also refer to the related descriptions in S1006 to S1010, S1109 to S1113, S1206 to S1209, S1306 to S1310, S1409 to S1413, and S1506 to S1509. Details are not described again.

S1603: The network slice management function provision entity sends information about the target network slice instance to the network slice management function consumption entity. Accordingly, the network slice management function consumption entity receives the information about the target network slice instance from the network slice management function provision entity.

The information about the target network slice instance is an identifier of the target network slice instance, to indicate the target network slice instance; or may be any other possible information. This is not limited.

The network slice management function provision entity may send a network slice allocation response message to the network slice management function consumption entity. Accordingly, the network slice management function consumption entity may receive the network slice allocation response message from the network slice management function provision entity. The network slice allocation response message may include the information about the target network slice instance. That is, the target network slice instance may be allocated by reusing a network slice allocation procedure. Alternatively, the network slice management function provision entity may send a network slice update response message to the network slice management function consumption entity. Accordingly, the network slice management function consumption entity may receive the network slice update response message from the network slice management function provision entity. The network slice update response message may include the information about the target network slice instance. That is, the target network slice instance may be allocated by reusing a network slice update procedure.

It may be understood that, for specific implementation of S1603, also refer to the related descriptions in the S1011 and S1012, S1114 to S1116, S1210, S1311 and S1312, S1414 to S1416, and S1510. Details are not described again.

In conclusion, the network slice management function provision entity can allocate the target network slice instance to the target communication application at a finer granularity, to implement a more refined network resource sharing function, thereby satisfying an ever-developing service demand. For example, the target network slice instance and/or the physical network resource associated with the target network slice instance can be shared between the target communication application and a part of communication applications, to save a network resource. In addition, the target network slice instance and/or the physical network resource associated with the target network slice instance cannot be shared between the target communication application and the other part of communication applications, to ensure the service security.

Optionally, with reference to the foregoing embodiment, the network slice management function consumption entity sends physical isolation implementation information to the network slice management function provision entity. Accordingly, the network slice management function provision entity receives the physical isolation implementation information from the network slice management function consumption entity, and sends the physical isolation implementation information to the network slice subnet management function provision entity. Accordingly, the network slice subnet management function provision entity receives the physical isolation implementation information from the network slice management function provision entity.

The physical isolation implementation information may indicate at least one of the following: implementing a network slice subnet instance by using a physical network resource in different time periods or implementing the network slice subnet instance by using different physical network resources, to ensure that the network slice subnet management function provision entity can implement the network slice subnet instance in a manner specified by a communication application. For example, the network slice subnet management function provision entity may allocate the target network slice subnet instance to the target communication application in response to the second request information and the physical isolation implementation information.

It may be understood that, for specific implementation of the physical isolation implementation information, also refer to the related descriptions in the foregoing scenario 1 to scenario 6. Details are not described again.

With reference to FIG. 10A to FIG. 16, the foregoing describes in detail the network resource management method provided in embodiments of this application. With reference to FIG. 17 and FIG. 18, the following describes in detail a communication apparatus configured to perform the network resource management method provided in embodiments of this application.

FIG. 17 is a diagram 1 of a structure of a communication apparatus according to an embodiment of this application. For example, as shown in FIG. 17, the communication apparatus 1700 includes a transceiver module 1701 and a processing module 1702. For ease of description, FIG. 17 shows only main parts of the communication apparatus.

In some embodiments, the communication apparatus 1700 may be used in the communication systems shown in FIG. 8 and FIG. 9, and perform functions of the NSMS provision entity or the network slice management function provision entity in the foregoing methods. The transceiver module 1701 may perform a transceiver function of the communication apparatus 1700, for example, perform S1006, S1008, S1010, and S1011. The processing module 1702 may perform a function of the communication apparatus 1700 other than the transceiver function, for example, perform S1007.

For example, the transceiver module 1701 is configured to receive first request information from a network slice management function consumption entity; and the processing module 1702 is configured to allocate a target network slice instance to a target communication application in response to the first request information, and control the transceiver module to send information about the target network slice instance to the network slice management function consumption entity, where the first request information is for requesting the network slice management function provision entity to allocate a network slice instance to the target communication application, and the first request information includes information about the target communication application; and the target network slice instance is capable of being shared between the target communication application and a first communication application set but is incapable of being shared between the target communication application and a second communication application set; and/or a physical network resource associated with the target network slice instance is capable of being shared between the target communication application and a third communication application set but is incapable of being shared between the target communication application and a fourth communication application set.

Optionally, the transceiver module 1701 may include a sending module (not shown in FIG. 17) and a receiving module (not shown in FIG. 17). The sending module is configured to implement a sending function of the communication apparatus 1700, and the receiving module is configured to implement a receiving function of the communication apparatus 1700.

Optionally, the communication apparatus 1700 may further include a storage module (not shown in FIG. 17). The storage module stores a program or instructions. When the processing module 1702 executes the program or the instructions, the communication apparatus 1700 is enabled to perform the functions of the NSMS provision entity or the network slice management function provision entity in the foregoing methods.

It may be understood that the communication apparatus 1700 may be a network device, for example, an NSMS provision entity or a network slice management function provision entity, may be a chip (system) or another part or component that may be disposed in the network device, or may be an apparatus including the network device. This is not limited in this application.

In addition, for technical effects of the communication apparatus 1700, refer to the technical effects of the network resource management methods shown in FIG. 10A to FIG. 16. Details are not described herein again.

In some other embodiments, the communication apparatus 1700 may be used in the communication systems shown in FIG. 8 and FIG. 9, and perform functions of the NSMS consumption entity or the network slice management function consumption entity in the foregoing methods. The transceiver module 1701 may perform a transceiver function of the communication apparatus 1700, for example, perform S1001, S1003, and S1004. The processing module 1702 may perform a function of the communication apparatus 1700 other than the transceiver function, for example, perform S1002 and S1005.

For example, the processing module 1702 is configured to control the transceiver module 1701 to send first request information to a network slice management function provision entity; and the transceiver module 1701 is configured to receive information about a target network slice instance from the network slice management function provision entity, where the first request information is for requesting the network slice management function provision entity to allocate a network slice instance to a target communication application, and the first request information includes information about the target communication application; and the target network slice instance is capable of being shared between the target communication application and a first communication application set but is incapable of being shared between the target communication application and a second communication application set; and/or a physical network resource associated with the target network slice instance is capable of being shared between the target communication application and a third communication application set but is incapable of being shared between the target communication application and a fourth communication application set.

Optionally, the transceiver module 1701 may include a sending module (not shown in FIG. 17) and a receiving module (not shown in FIG. 17). The sending module is configured to implement a sending function of the communication apparatus 1700, and the receiving module is configured to implement a receiving function of the communication apparatus 1700.

Optionally, the communication apparatus 1700 may further include a storage module (not shown in FIG. 17). The storage module stores a program or instructions. When the processing module 1702 executes the program or the instructions, the communication apparatus 1700 is enabled to perform the functions of the NSMS consumption entity or the network slice management function consumption entity in the foregoing methods.

It may be understood that the communication apparatus 1700 may be a network device, for example, an NSMS consumption entity or a network slice management function consumption entity, may be a chip (system) or another part or component that may be disposed in the network device, or may be an apparatus including the network device. This is not limited in this application.

In addition, for technical effects of the communication apparatus 1700, refer to the technical effects of the network resource management methods shown in FIG. 10A to FIG. 16. Details are not described herein again.

In still some other embodiments, the communication apparatus 1700 may be used in the communication systems shown in FIG. 8 and FIG. 9, and perform functions of the NSSMS consumption entity or the network slice subnet management function consumption entity in the foregoing methods. The transceiver module 1701 may perform a transceiver function of the communication apparatus 1700, for example, perform S1011 and S1013. The processing module 1702 may perform a function of the communication apparatus 1700 other than the transceiver function, for example, perform S1112.

For example, the transceiver module 1701 is configured to receive second request information from a network slice management function provision entity; and the processing module 1702 is configured to allocate a target network slice subnet instance to a target communication application in response to the second request information, and control the transceiver module 1701 to send information about the target network slice subnet instance to the network slice management function provision entity, where the second request information includes information about the target communication application, and the second request information is for requesting a network slice subnet management function provision entity to allocate a network slice subnet instance to the target communication application; and a physical network resource associated with the target network slice subnet instance is capable of being shared between the target communication application and a third communication application set but is incapable of being shared between the target communication application and a fourth communication application set.

Optionally, the transceiver module 1701 may include a sending module (not shown in FIG. 17) and a receiving module (not shown in FIG. 17). The sending module is configured to implement a sending function of the communication apparatus 1700, and the receiving module is configured to implement a receiving function of the communication apparatus 1700.

Optionally, the communication apparatus 1700 may further include a storage module (not shown in FIG. 17). The storage module stores a program or instructions. When the processing module 1702 executes the program or the instructions, the communication apparatus 1700 is enabled to perform the functions of the NSSMS consumption entity or the network slice subnet management function consumption entity in the foregoing methods.

It may be understood that the communication apparatus 1700 may be a network device, for example, an NSSMS consumption entity or a network slice subnet management function consumption entity, may be a chip (system) or another part or component that may be disposed in the network device, or may be an apparatus including the network device. This is not limited in this application.

In addition, for technical effects of the communication apparatus 1700, refer to the technical effects of the network resource management methods shown in FIG. 10A to FIG. 16. Details are not described herein again.

FIG. 18 is a diagram 2 of a structure of a communication apparatus according to an embodiment of this application. For example, the communication apparatus may be a terminal, or may be a chip (system) or another part or component that may be disposed in the terminal. As shown in FIG. 18, the communication apparatus 1800 may include a processor 1801. Optionally, the communication apparatus 1800 may further include a memory 1802 and/or a transceiver 1803. The processor 1801 is coupled to the memory 1802 and the transceiver 1803, for example, may be connected to the memory 1802 and the transceiver 1803 through a communication bus.

The following specifically describes the components of the communication apparatus 1800 with reference to FIG. 18.

The processor 1801 is a control center of the communication apparatus 1800, and may be one processor or may be a collective term of a plurality of processing elements. For example, the processor 1801 is one or more central processing units (central processing units, CPUs), or may be an application-specific integrated circuit (application-specific integrated circuit, ASIC), or is configured as one or more integrated circuits for implementing embodiments of this application, for example, one or more microprocessors (digital signal processors, DSPs) or one or more field programmable gate arrays (field programmable gate arrays, FPGAs).

Optionally, the processor 1801 may perform various functions of the communication apparatus 1800 by running or executing a software program stored in the memory 1802 and invoking data stored in the memory 1802, for example, perform the network resource management methods shown in FIG. 10A to FIG. 16.

During specific implementation, in an embodiment, the processor 1801 may include one or more CPUs, for example, a CPU 0 and a CPU 1 shown in FIG. 18.

During specific implementation, in an embodiment, the communication apparatus 1800 may alternatively include a plurality of processors, for example, the processor 1801 and a processor 1804 shown in FIG. 18. Each of the processors may be a single-core processor (single-CPU), or may be a multi-core processor (multi-CPU). The processor herein may refer to one or more devices, circuits, and/or processing cores configured to process data (for example, computer program instructions).

The memory 1802 is configured to store the software program for performing the solutions in this application, and the processor 1801 controls the execution. For a specific implementation, refer to the foregoing method embodiments. Details are not described herein again.

Optionally, the memory 1802 may be a read-only memory (read-only memory, ROM) or another type of static storage device that may store static information and instructions, or a random access memory (random access memory, RAM) or another type of dynamic storage device that may store information and instructions, or may be an electrically erasable programmable read-only memory (electrically erasable programmable read-only memory, EEPROM), a compact disc read-only memory (compact disc read-only memory, CD-ROM) or other compact disc storage, optical disc storage (including a compact disc, a laser disc, an optical disc, a digital versatile disc, a Blu-ray disc, or the like), a magnetic disk storage medium or another magnetic storage device, or any other medium that can be for carrying or storing expected program code in a form of instructions or a data structure and can be accessed by a computer, but is not limited thereto. The memory 1802 may be integrated with the processor 1801, or may exist independently and is coupled to the processor 1801 through an interface circuit (not shown in FIG. 18) of the communication apparatus 1800. This is not specifically limited in this embodiment of this application.

The transceiver 1803 is configured to communicate with another communication apparatus. For example, the communication apparatus 1800 is the terminal, and the transceiver 1803 may be configured to communicate with a network device or communicate with another terminal device. For another example, the communication apparatus 1800 is a network device, and the transceiver 1803 may be configured to communicate with a terminal or communicate with another network device.

Optionally, the transceiver 1803 may include a receiver and a transmitter (not separately shown in FIG. 18). The receiver is configured to implement a receiving function, and the transmitter is configured to implement a sending function.

Optionally, the transceiver 1803 may be integrated with the processor 1801, or may exist independently and is coupled to the processor 1801 through an interface circuit (not shown in FIG. 18) of the communication apparatus 1800. This is not specifically limited in this embodiment of this application.

It may be understood that the structure of the communication apparatus 1800 shown in FIG. 18 does not constitute a limitation on the communication apparatus. An actual communication apparatus may include more or fewer parts than those shown in the figure, combine some parts, or have different part arrangement.

In addition, for technical effects of the communication apparatus 1800, refer to the technical effects of the methods in the foregoing method embodiments. Details are not described herein again.

An embodiment of this application provides a communication system. The communication system includes the NSMS provision entity or the network slice management function provision entity, the NSMS consumption entity or the network slice management function consumption entity, and the NSSMS consumption entity or the network slice subnet management function consumption entity shown in FIG. 10A to FIG. 16.

It should be understood that the processor in embodiments of this application may be a central processing unit (central processing unit, CPU). The processor may alternatively be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It may be further understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) that is used as an external cache. By way of example but not limitative description, random access memories (random access memories, RAMs) in many forms may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented using software, hardware (for example, a circuit), firmware, or any other combination. When the software is used to implement the foregoing embodiments, all or some of the foregoing embodiments may be implemented in a form of a computer program product. The computer program product includes one or more computer instructions or computer programs. When the computer instructions or the computer programs are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, and microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship between associated objects and represents that three relationships may exist. For example, A and/or B may represent the following three cases: Only A exists, both A and B exist, and only B exists. A and B may be singular or plural. In addition, the character "/" in this specification usually indicates an "or" relationship between the associated objects, but may also indicate an "and/or" relationship. For details, refer to the context for understanding.

In this application, "at least one" means one or more, and "a plurality of" means two or more. "At least one of the following" or a similar expression thereof means any combination of these items, including a singular item or any combination of plural items. For example, at least one of a, b, or c may indicate: a, b, c, a and b, a and c, b and c, or a, b, and c, where a, b, and c may be singular or plural.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, with reference to the units and algorithm steps in the examples described in embodiments disclosed in this specification, embodiments of this application can be implemented by electronic hardware or a combination of computer software and electronic hardware. Whether the functions are performed by hardware or software depends on particular applications and design constraint conditions of the technical solutions. A person skilled in the art may use different methods to implement the functions for each particular application, but it should not be considered that the implementation goes beyond the scope of this application.

It may be clearly understood by a person skilled in the art that, for the purpose of convenient and brief description, for a specific working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the foregoing apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, that is, may be located in one position, or may be distributed on a plurality of network units. Some or all of the units may be selected based on actual demands to achieve the objectives of the solutions of embodiments.

In addition, functional units in embodiments of this application may be integrated into one processing unit, each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions in this application essentially, the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps in the methods in embodiments of this application. The foregoing storage medium includes: various media that can store program code, for example, a USB flash drive, a removable hard disk, a read-only memory (read-only memory, ROM), a random access memory (random access memory, RAM), a magnetic disk, or a compact disc.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A network resource management method, applied to a network slice management function provision entity, wherein the method comprises:
receiving first request information from a network slice management function consumption entity, wherein the first request information is for requesting the network slice management function provision entity to allocate a network slice instance to a target communication application, and the first request information comprises information about the target communication application;
allocating a target network slice instance to the target communication application in response to the first request information, wherein the target network slice instance is capable of being shared between the target communication application and a first communication application set but is incapable of being shared between the target communication application and a second communication application set; and/or a physical network resource associated with the target network slice instance is capable of being shared between the target communication application and a third communication application set but is incapable of being shared between the target communication application and a fourth communication application set; and
sending information about the target network slice instance to the network slice management function consumption entity.

2. The method according to claim 1, wherein the method further comprises:
obtaining the first communication application set or feature information of the first communication application set, and/or the second communication application set or feature information of the second communication application set;
and/or
obtaining the third communication application set or feature information of the third communication application set, and/or the fourth communication application set or feature information of the fourth communication application set.

3. The method according to claim 2, wherein
the obtaining the first communication application set or feature information of the first communication application set, and/or the second communication application set or feature information of the second communication application set comprises: determining the first communication application set or the feature information of the first communication application set, and/or the second communication application set or the feature information of the second communication application set based on the information about the target communication application and a logical resource management policy, wherein the logical resource management policy is for describing a plurality of communication applications that are capable of sharing a network slice instance with each other and/or a plurality of communication applications that are incapable of sharing the network slice instance with each other;
and/or
the obtaining the third communication application set or feature information of the third communication application set, and/or the fourth communication application set or feature information of the fourth communication application set comprises: determining the third communication application set or the feature information of the third communication application set, and/or the fourth communication application set or the feature information of the fourth communication application set based on the information about the target communication application and a physical resource management policy, wherein the physical resource management policy is for describing a plurality of communication applications that are capable of sharing a physical network resource with each other and/or a plurality of communication applications that are incapable of sharing the physical network resource with each other.

4. The method according to claim 3, wherein
the first request information comprises the logical resource management policy and/or the physical resource management policy;
or
the method further comprises: receiving a policy configuration request message or a policy update request message from the network slice management function consumption entity, wherein the policy configuration request message or the policy update request message comprises the logical resource management policy and/or the physical resource management policy.

5. The method according to claim 3 or 4, wherein
the logical resource management policy comprises a safety class corresponding to the plurality of communication applications that are capable of sharing the network slice instance with each other and/or safety classes corresponding to the plurality of communication applications that are incapable of sharing the network slice instance with each other;
and/or
the physical resource management policy comprises a safety class corresponding to the plurality of communication applications that are capable of sharing the physical network resource with each other and/or safety classes corresponding to the plurality of communication applications that are incapable of sharing the physical network resource with each other.

6. The method according to claim 5, wherein
the logical resource management policy comprises a first safety class set list, and the logical resource management policy indicates that any two communication applications corresponding to safety classes in a same safety class set in the first safety class set list are capable of sharing the network slice instance with each other and that any two communication applications corresponding to safety classes in different safety class sets in the first safety class set list are incapable of sharing the network slice instance with each other;
and/or
the physical resource management policy comprises a second safety class set list, and the physical resource management policy indicates that any two communication applications corresponding to safety classes in a same safety class set in the second safety class set list are capable of sharing the physical network resource with each other and that any two communication applications corresponding to safety classes in different safety class sets in the second safety class set list are incapable of sharing the physical network resource with each other.

7. The method according to claim 3 or 4, wherein
the logical resource management policy comprises application identifiers corresponding to the plurality of communication applications that are capable of sharing the network slice instance with each other and/or application identifiers corresponding to the plurality of communication applications that are incapable of sharing the network slice instance with each other;
and/or
the physical resource management policy comprises application identifiers corresponding to the plurality of communication applications that are capable of sharing the physical network resource with each other and/or application identifiers corresponding to the plurality of communication applications that are incapable of sharing the physical network resource with each other.

8. The method according to claim 7, wherein
the logical resource management policy comprises a first application identifier set list, and the logical resource management policy indicates that two communication applications identified by any two application identifiers that belong to a same application identifier set in the first application identifier set list are capable of sharing the network slice instance with each other and that two communication applications identified by any two application identifiers that belong to different application identifier sets in the first application identifier set list are incapable of sharing the network slice instance with each other;
and/or
the physical resource management policy comprises a second application identifier set list, and the physical resource management policy indicates that two communication applications identified by any two application identifiers that belong to a same application identifier set in the second application identifier set list are capable of sharing the network slice instance with each other and that two communication applications identified by any two application identifiers that belong to different application identifier sets in the second application identifier set list are incapable of sharing the physical network resource with each other.

9. The method according to claim 2, wherein
the obtaining the first communication application set or feature information of the first communication application set, and/or the second communication application set or feature information of the second communication application set comprises: obtaining the first communication application set or the feature information of the first communication application set, and/or the second communication application set or the feature information of the second communication application set from the first request information;
and/or
the obtaining the third communication application set or feature information of the third communication application set, and/or the fourth communication application set or feature information of the fourth communication application set comprises: obtaining the third communication application set or the feature information of the third communication application set, and/or the fourth communication application set or the feature information of the fourth communication application set from the first request information.

10. The method according to any one of claims 2 to 9, wherein
the information about the target communication application comprises a safety class of the target communication application;
the method further comprises: obtaining a safety class of the target communication application based on an application identifier of the target communication application comprised in the information about the target communication application; or
the information about the target communication application comprises an application identifier of the target communication application.

11. The method according to any one of claims 2 to 10, wherein
the feature information of the first communication application set comprises a safety class or an application feature of a communication application that is capable of sharing the network slice instance with the target communication application;
the feature information of the second communication application set comprises a safety class or an application feature of a communication application that is incapable of sharing the network slice instance with the target communication application;
the feature information of the third communication application set comprises a safety class or an application feature of a communication application that is capable of sharing the physical network resource with the target communication application; and
the feature information of the fourth communication application set comprises a safety class or an application feature of a communication application that is incapable of sharing the physical network resource with the target communication application.

12. The method according to any one of claims 1 to 11, wherein the allocating a target network slice instance to the target communication application comprises:
using an existing network slice instance as the target network slice instance in response to determining that there is an existing network slice instance; or using a newly created network slice instance as the target network slice instance in response to determining that there is no existing network slice instance, wherein
the existing network slice instance is a network slice instance that has been allocated to the communication application in the first communication application set but has not been allocated to the communication application in the second communication application set.

13. The method according to any one of claims 1 to 12, wherein the allocating a target network slice instance to the target communication application comprises:
sending the information about the target communication application and the physical resource management policy to a network slice subnet management function provision entity; or
sending the third communication application set or the feature information of the third communication application set, and/or the fourth communication application set or the feature information of the fourth communication application set to a network slice subnet management function provision entity.

14. The method according to any one of claims 1 to 13, wherein
the information about the target network slice instance is an identifier of the target network slice instance.

15. The method according to any one of claims 1 to 14, wherein
the network slice management function consumption entity is any one of the following: an exposure governance management function EGMF, a common application programming interface framework CAPIF, or a third-party server.

16. A network resource management method, applied to a network slice subnet management function provision entity, wherein the method comprises:
receiving second request information from a network slice management function provision entity, wherein the second request information is for requesting the network slice subnet management function provision entity to allocate a network slice subnet instance to a target communication application, and the second request information comprises information about the target communication application;
allocating a target network slice subnet instance to the target communication application in response to the second request information, wherein a physical network resource associated with the target network slice subnet instance is capable of being shared between the target communication application and a third communication application set but is incapable of being shared between the target communication application and a fourth communication application set; and
sending information about the target network slice subnet instance to the network slice management function provision entity.

17. The method according to claim 16, wherein the method further comprises:
obtaining the third communication application set or feature information of the third communication application set, and/or the fourth communication application set or feature information of the fourth communication application set.

18. The method according to claim 17, wherein
the obtaining the third communication application set or feature information of the third communication application set, and/or the fourth communication application set or feature information of the fourth communication application set comprises:
determining the third communication application set or the feature information of the third communication application set, and/or the fourth communication application set or the feature information of the fourth communication application set based on the information about the target communication application and a physical resource management policy, wherein the physical resource management policy is for describing a plurality of communication applications that are capable of sharing a physical network resource with each other and/or a plurality of communication applications that are incapable of sharing the physical network resource with each other.

19. The method according to claim 18, wherein the second request information comprises the physical resource management policy.

20. The method according to claim 18 or 19, wherein
the physical resource management policy comprises a safety class corresponding to the plurality of communication applications that are capable of sharing the physical network resource with each other and/or safety classes corresponding to the plurality of communication applications that are incapable of sharing the physical network resource with each other.

21. The method according to claim 20, wherein
the physical resource management policy comprises a second safety class set list, and the physical resource management policy indicates that any two communication applications corresponding to safety classes in a same safety class set in the second safety class set list are capable of sharing the physical network resource with each other and that any two communication applications corresponding to safety classes in different safety class sets in the second safety class set list are incapable of sharing the physical network resource with each other.

22. The method according to claim 18 or 19, wherein
the physical resource management policy comprises application identifiers corresponding to the plurality of communication applications that are capable of sharing the physical network resource with each other and/or application identifiers corresponding to the plurality of communication applications that are incapable of sharing the physical network resource with each other.

23. The method according to claim 22, wherein
the physical resource management policy comprises a second application identifier set list, and the physical resource management policy indicates that two communication applications identified by any two application identifiers that belong to a same application identifier set in the second application identifier set list are capable of sharing the physical network resource with each other and that two communication applications identified by any two application identifiers that belong to different application identifier sets in the second application identifier set list are incapable of sharing the physical network resource with each other.

24. The method according to claim 17, wherein
the obtaining the third communication application set or feature information of the third communication application set, and/or the fourth communication application set or feature information of the fourth communication application set comprises: obtaining the third communication application set or the feature information of the third communication application set, and/or the fourth communication application set or the feature information of the fourth communication application set from the second request information.

25. The method according to any one of claims 17 to 24, wherein
the information about the target communication application comprises a safety class of the target communication application;
the method further comprises: obtaining a safety class of the target communication application based on an application identifier of the target communication application comprised in the information about the target communication application; or
the information about the target communication application comprises an application identifier of the target communication application.

26. The method according to any one of claims 17 to 25, wherein the allocating a target network slice subnet instance to the target communication application comprises:
using an existing network slice subnet instance as the target network slice subnet instance in response to determining that there is an existing network slice subnet instance; or using a newly created network slice subnet instance as the target network slice subnet instance in response to determining that there is no existing network slice instance, wherein
a physical network resource for implementing the existing network slice subnet instance is a physical network resource that has been allocated to a communication application in the third communication application set but has not been allocated to a communication application in the fourth communication application set.

27. The method according to any one of claims 17 to 26, wherein
the feature information of the third communication application set comprises a safety class or an application feature of the communication application that is capable of sharing the physical network resource with the target communication application; and
the feature information of the fourth communication application set comprises a safety class or an application feature of the communication application that is incapable of sharing the physical network resource with the target communication application.

28. The method according to any one of claims 16 to 27, wherein
the information about the target network slice subnet instance is an identifier of the target network slice subnet instance.

29. A network resource management method, applied to a network slice management function provision entity and a network slice subnet management function provision entity, wherein the method comprises:
receiving, by the network slice management function provision entity, first request information from a network slice management function consumption entity, wherein the first request information is for requesting the network slice management function provision entity to allocate a network slice instance to a target communication application, and the first request information comprises information about the target communication application;
allocating, by the network slice management function provision entity, a target network slice instance to the target communication application in response to the first request information, wherein the target network slice instance is capable of being shared between the target communication application and a first communication application set but is incapable of being shared between the target communication application and a second communication application set; and/or a physical network resource associated with the target network slice instance is capable of being shared between the target communication application and a third communication application set but is incapable of being shared between the target communication application and a fourth communication application set; and
sending, by the network slice management function provision entity, information about the target network slice instance to the network slice management function consumption entity.

30. The method according to claim 29, wherein the allocating, by the network slice management function provision entity, a target network slice instance to the target communication application comprises:
using, by the network slice management function provision entity, an existing network slice instance as the target network slice instance in response to determining that there is an existing network slice instance; or using, by the network slice management function provision entity, a newly created network slice instance as the target network slice instance in response to determining that there is no existing network slice instance, wherein
the existing network slice instance is a network slice instance that has been allocated to a communication application in the first communication application set but has not been allocated to a communication application in the second communication application set.

31. The method according to claim 30, wherein the allocating, by the network slice management function provision entity, a target network slice instance to the target communication application further comprises:
sending, by the network slice management function provision entity, second request information to the network slice subnet management function provision entity, wherein the second request information is for requesting the network slice subnet management function provision entity to allocate a network slice subnet instance to the target communication application, and the second request information comprises the information about the target communication application;
allocating, by the network slice subnet management function provision entity, a target network slice subnet instance to the target communication application in response to the second request information, wherein a physical network resource associated with the target network slice subnet instance is capable of being shared between the target communication application and the third communication application set but is incapable of being shared between the target communication application and the fourth communication application set; and
sending, by the network slice subnet management function provision entity, information about the target network slice subnet instance to the network slice management function provision entity.

32. The method according to claim 31, wherein the method further comprises:
obtaining, by the network slice subnet management function provision entity, the third communication application set or feature information of the third communication application set, and/or the fourth communication application set or feature information of the fourth communication application set.

33. A communication apparatus, wherein the apparatus comprises a module configured to perform the method according to any one of claims 1 to 28.

34. A communication apparatus, wherein the communication apparatus comprises a processor and a memory, and the memory is configured to store computer instructions; and when the processor executes the instructions, the communication apparatus is enabled to perform the method according to any one of claims 1 to 28.

35. A communication system, wherein the communication system comprises a network slice management function provision entity and a network slice subnet management function provision entity, wherein the network slice management function provision entity is configured to perform the method according to any one of claims 1 to 15, and the network slice subnet management function provision entity is configured to perform the method according to any one of claims 16 to 28.

36. A computer-readable storage medium, wherein the computer-readable storage medium comprises a computer program or instructions; and when the computer program or the instructions are run on a computer, the computer is enabled to perform the method according to any one of claims 1 to 32.
